(19) Europäisches Patentamt
European Patent Office
Office européen des brevets

(11) EP 1 522 048 B1

(12) # EUROPEAN PATENT SPECIFICATION

(45) Date of publication and mention of the grant of the patent:
**16.01.2008 Bulletin 2008/03**

(21) Application number: **03735898.3**

(22) Date of filing: **24.06.2003**

(51) Int Cl.:
***G06T 5/20*** *(2006.01)* ***H04N 9/04*** *(2006.01)*

(86) International application number:
**PCT/IB2003/002655**

(87) International publication number:
**WO 2004/006183 (15.01.2004 Gazette 2004/03)**

(54) **METHOD AND APPARATUS FOR SIGNAL PROCESSING, COMPUTER PROGRAM PRODUCT, COMPUTING SYSTEM AND CAMERA**

METHODE UND APPARAT ZUR SIGNALVERARBEITUNG, COMPUTERPROGRAMMPRODUKT, COMPUTERSYSTEM UND KAMERA

PROCEDE ET APPAREIL DE TRAITEMENT DE SIGNAL, PRODUIT DE PROGRAMME D'ORDINATEUR, SYSTEME INFORMATIQUE ET APPAREIL PHOTOGRAPHIQUE

(84) Designated Contracting States:
**AT BE BG CH CY CZ DE DK EE ES FI FR GB GR HU IE IT LI LU MC NL PT RO SE SI SK TR**

(30) Priority: **04.07.2002 EP 02077690**

(43) Date of publication of application:
**13.04.2005 Bulletin 2005/15**

(73) Proprietor: **Koninklijke Philips Electronics N.V.**
**5621 BA Eindhoven (NL)**

(72) Inventor: **JASPERS, Cornelis, A., M.**
**NL-5656 AA Eindhoven (NL)**

(74) Representative: **Eleveld, Koop Jan**
**Philips**
**Intellectual Property & Standards**
**P.O. Box 220**
**5600 AE Eindhoven (NL)**

(56) References cited:
**EP-A- 0 308 252**
**WO-A-99/04555**
**US-A- 5 614 947**
**US-A- 5 778 106**
**US-A1- 2002 003 578**
**US-A1- 2002 039 142**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention regards a method according to the preamble of claim 1.

US 2002/003578 describes various forms of image processing that may be applied in digital still image cameras. These include color interpolation in a color filtered array, to regenerate missing color data. The document also describes various forms of post processing performed after the color interpolation including false color killing.

Digital cameras based on digital signal image sensoring of e. g. video and still images may be advantageously equipped with an image sensor comprising a red-green-blue (RGB) Bayer-color-filter-array. In such RGB Bayer-color-filter array each pixel senses a red, green or blue primary color in a redefined pattern. This pattern is built up of alternating green/red columns andgreen/blue columns. Such a sensor may have a limited resolution in comparison with a camera using a separate image sensor for each primary color. However, a camera with three image sensors has three times as much pixels contributing to the resolution than a single RGB Bayer-sensor. Using three sensors is for most applications disadvantageous due to cost and size requirements of the application. On the other hand, when using one single image sensor to sense all three primary colors red, green and blue within one single array, advantageously in a RGB Bayer-color-filter array, it is necessary to reconstruct missing pixels of certain colors to process a consistent whole of a picture. Due to the RGB Bayer-structure, differentNyquist-domains respectively with regard to green, red and blue colors result in a color dependent resolution and possibly aliasing patterns. Nevertheless the RGB Bayer-structure is one of the best performing signal color arrays.

Several interpolation schemes may be provided to increase signal quality. In WO99/04555 a conventional method of interpolation is described in rather general terms wherein an intermediate color signal is interpolated at positions where no signal of a given color is present and an average of a given color is generated.

A further method for signal processing uses a more advantageous interpolation scheme as described in the WO99/04555 and in the European patent application with the application number WO02/063888. However such methods still suffer from e. g. aliasing of a free luminance signal or further signal distortion. Such signal distortion especially results in an erroneous generation of false colors in an image.

In WO 99/04555 a green reconstruction method a for RGB Bayer image sensors has been described merely concerns the green color reconstruction. The red and blue colors remain reconstructed in a conventional way. Merely a missing green pixel is reconstructed. The reconstruction of the missing green pixel is carried out by means of a median filter sorting three specific variables: two of them are derived from the green color, the third one from the red or blue color. A disadvantage of this method is, that for high saturated colored edges artifacts are introduced which look like the border of a postage stamp. The algorithm disclosed in WO 99/04555 will be referred to as the smartgreenl-algorithm. The smartgreenl-algorithm is based on the concept that resolution losses are best observed at high frequencies near white scene parts and less good near colored parts. Keeping this in mind, the contribution of the red and blue pixels is used to help determining the reconstruction value of the missing green pixels. The object of the smartgreenl-reconstruction is to maximize the resolution of the green color. For this purpose the median filter algorithm is applied as follows: naturally, the location occupied by a red (R) or blue(B) pixel is a location of a missing green pixel. In the smartgreenl-reconstruction-algorithm a center value of a 3 x 3 pixel array, also called the median value, is applied for the reconstruction of the missing green pixels. Consequently, the simple median filter for green merely replaces a conventional interpolation concept of green reconstruction, whereas the conventional red and blue reconstruction method is maintained to be a simple interpolation. Luminance filtering, color filtering and contour filtering is also restricted to the filtering for green. False color detection is merely based on a conventional interpolation concept of green reconstruction, and also the conventional red and blue reconstruction is maintained to be a simple interpolation.

Such smartgreenl-reconstruction method improves the resolution of the green pixels in the horizontal and vertical direction with the aid of the information of a red and/or blue pixel. This conventional method relies on interpolating the color sample to be interpolated in dependence upon neighboring color samples of the same color and a differently colored sample merely from the same location. As a consequence, the reconstructed signal suffers fromred-and/or blue-colored aliasing. Vertical and horizontal colored edges suffer from a green intensity modulation in the respective direction resembling the border of a postage stamp.

Further improvement as outlined in WO02/063888, herein referred to as the smartgreen2-reconstruction-algorithm, was able to significantly improve resolution but not to remove the mentioned disadvantages of signal distortion and signal aliasing. In particular at edges and high frequencies some signal distortion is still visible such as alternating colors with neighboring pixels. Artifact black and also white dots are generated erroneously.

This is where the invention comes in, the object of which is to specify a method and apparatus for signal processing, and also a computer program product for signal processing, a computing system and a camera adapted for signal processing such that signal quality is improved. In particular, a signal should be improved with regard to signal distortion, and aliasing, but the signal should still provide sufficient resolution.

As regards the method the object is achieved by a method as mentioned in the introduction and characterized by the characterizing part of claim 1.

In a preferred configuration, a further step of weighting red-and/or a blue-pixel of the array with a green-parameter is comprised.

In a further preferred configuration still further steps of summarizing the pixels of the array in one output-pixel, and/or centering the output-pixel in the array is comprised.

As regards the apparatus the object is achieved by an apparatus as mentioned in claim 7.

A preferred configuration also comprises a means for weightening the red-and/or the blue-pixel with a green-parameter.

A further preferred configuration comprises means for summarizing the pixels of the array into one output- pixel, and/or means for centering the output-pixel in the array may be provided

The term pixel as used herein in particular refers to the value of a color sample in the signal.

The present invention has arisen from the idea to provide a concept of flexible design for the reconstruction of images. The main idea is to apply a false-color-filter, implemented in a color-reconstruction-filter. The idea is basically realized by applying the color-reconstruction-filter subsequent to the luminance filter, wherein the color-reconstruction-filter comprises a false-color-filter incorporated therein to eliminate false colors from the input.

Depending on the optical transfer and the matrix, the reconstructed RGB signals may still suffer from colored aliasing according to the Nyquist-theorem. In order to still reduce a rest amount of aliasing subsequent to the luminance-reconstruction-filter the color-reconstruction-filter is applied. According to the invention, the color-reconstruction-filter comprises a false-color-filter to eliminate false colors from the input. In principle a false-color-filter is known from WO 99/04555 but this known conventional type false-color-filter is applied separately and consequently is not implemented in a color-reconstruction filter. The inventive idea to provide a color-reconstruction-filter which comprises a false-color-filter has some major advantages. In particular the proposed inventive concept allows to weight all pixels in a preferable way by green-parameters.

Preferably the false-color-filter is applied to a smallest possible array of green-pixels. Specifically the false-color-filter comprises steps in which the red- and blue-pixels in the smallest possible array of green-pixels are weighted by green-parameters and the weighted red and blue pixels are summarized by a median filter together with an average of one or more of the green-pixels in the array. An average of one or more green-pixels in the array may be taken by applying an average filter. In particular the average of green-pixels in a vertical direction and an average of green-pixels in a horizontal direction may be taken. The median-filtered pixels are compared with low-frequency-filtered pixels of the smallest possible array of green-pixels, whereby false colors are eliminated from the input.

Such scheme allows advantageously for an adjustable false-color-filter, in particular the color-reconstruction-filter and/or the false-color-filter is applied to a smallest array of green-pixels having preferably an array-size of 2x2 or most preferably of 3x3. Still, if necessary, such predetermined small array may also be of 5 x 5 size or larger. Such adjustment is independent of an optical low-pass-filter. Such array however should comprise at least four pixels, comprising two green-pixels, one red-pixel and one blue-pixel.

Preferably the applied color-reconstruction-filter has an array-size of 3 x 3 or 5 x 5. In particular, an array-size of 5 x 5 is preferred in case of a heavy sensor matrix. The coefficients of a corresponding filter function may be chosen as a function of the optical transfer and matrix and are in particular outlined in chapter 4 of the detailed description of a patent application WO 2004/06665. Such methods maximize the resolution for near-white colors which for average scenes seem to be the most important eye catchers. In particular sufficient resolution is provided while the amount for signal distortion is minimized. The rules for defining the filter coefficients of a 3 x 3 and 5 x 5 RGB color-reconstruction-filter are outlined for a preferred embodiment in particular in chapter 3.3 of the detailed description. Further advantages of the false-color-filter are outlined in chapter 3.1 of the detailed description.

It is a particular advantage of the proposed method and the outlined further developed configurations thereof, that further, the green, and also the red and blue, color-reconstruction, i.e. the RGB-reconstruction, is fully independent of the 3 x 3 green false-color-array. The RGB-reconstruction-filter may be of 3 x 3 or 5 x 5 size. It is a particular advantage of the proposed method that the false-color functions are independent of the color-reconstruction-functions.

Specifically one, two or a further number of green-parameters may be used in the color-reconstruction-filter solely within the false-color-filter.

In a further preferred configuration a post-filter is applied in order to maintain in its output a phase to the output of a reconstruction-filter which has been applied previously. Advantageously the post-filter is applied subsequent to a false-color-filter, i.e. the past-filter is applied to the output of the false-color-filter after the RGB-reconstruction-filter. The reconstruction-filter may also be a luminance filter. Specifically the phase is fixed by applying subsequent to a false-color-filter a post-filter of 2 x 2-array-size by which a center-output-pixel of a smallest possible array of green-pixels is positioned in phase with a white-pixel. The white pixel itself is centered with respect to the same array as to which a luminance-reconstruction-filter has been applied to. In particular signals are RGB-reconstructed on basis of a 3 x 3 or 5 x 5 array size and will get the same phase as the white compensated luminance signal due to the 2 x 2 post filter. It is a particular advantage that in this configuration the false color-filter does not influence the phase. The post-filter advantageously also eliminates a green-non-uniformity of an image sensor. Red- and blue-pixels will have the same phase as the green-pixels. In the detailed description with regard to the preferred embodiment this is outlined specifically with regard to Figure 5 of the drawing and chapters 3.4 and 3.5.

Still also as an alternative a post filter may be left out for the use of a 3 x 3 or 5 x 5 RGB color-reconstruction-filter in a further preferred embodiment which is as referred to as a smartgreen4-reconstruction-method. This allows simple and efficient processing and therefore is advantageous with regard to low-cost applications.

As a further idea of the proposed concept the signal reconstruction is based on a white compensated luminance-reconstruction. The most preferred configuration is realized by weightening the red- and/or blue-pixel with a green-parameter, whereas prior art concepts merely rely on the reconstruction of a missing green-pixel. The proposed reconstruction-filters are designed to be applied to an array of pixels of predetermined array size. Consequently filtering is performed in an advantageous way on this array. Whereas conventional methods rely on simple interpolation in dependence upon neighboring samples or a sample of the same location, the proposed concept provides specifically adapted reconstruction-filters which take into account all pixels of the array. The proposed white compensated concept advantageously results in an aliasing free luminance signal, even at the multiples of the sample frequency in case of a camera without optical low pass filter. Moreover this white compensated luminance signal is free of signal distortion. The basic method and apparatus as proposed are adapted to offer a broad and flexible extension. It is possible to offer a variety of several reconstruction-filters which may be chosen and adjusted e.g. in dependence of an optical transfer of an optical system and/or a sensor matrix of an image sensor. The proposed method and apparatus are capable to maintain a rather independency of optical low pass filters. This is particular advantageous as camera designs of potential customers may vary. The proposed method and apparatus are capable to implement adjustable false-color-filters in various ways and in a simple manner as will be outlined hereinafter. In particular weightening the red- and/or blue-pixel with a green-parameter is advantageous for the pixels treated by a false-color-filter. In a specific embodiment the green-parameters may be used solely in the false-color-filter.

Continued developed configurations of the method are described in the dependent method claims. The proposed apparatus may be improved by respective means for executing the method.

In particular it is preferred that a center-output-pixel of a second filter subsequent to a first filter is positioned in phase with the output-pixel, in particular the center-output pixel is centered at the same center position of the array as the output-pixel. Most advantageously this may be performed by an additional post filter, in particular a post filter as further described below.

In a preferred configuration the reconstruction-filter is formed by a luminance-reconstruction-filter and the pixels of the array are added together in one white pixel being the output-pixel. Most preferably the green-parameter or a number of green parameters are chosen in dependence of a sensor matrix of the image sensor. Most preferred two green parameters are provided. Moreover the green parameter or a number thereof may be chosen in dependence of an optical transfer of an optical system providing an image signal to the image sensor. Thereby the RGB-color-signals are advantageously reconstructed with filter weights that can be chosen as a function of an optical transfer of a camera in combination with the heaviness of the sensor matrix. Thereby an application specific improvement of image quality is achieved.

The basic concept of luminance reconstruction described above with one or more of the preferred configurations is referred to in the following referred to as the "white compensated luminance-reconstruction" for RGB-Bayer-image-sensors, or simply "RGB-reconstruction". The green-parameters are also referred to as "smartgreen-parameters". Using the smartgreen-parameters also with a red-and/or blue-pixel as defined by the proposed method and the further developed configurations thereof will be referred to as the "smartgreen3"-reconstruction method. Particular ways of determining the green-parameters are also described in WO 99/04555 and EP 01200422.2 and may be applied and used within smartgreen3 as well.

The specific kind of arranging filters and filtersize of the proposed method results in an aliasing free signal, also and in particular free from green-green differences. Details will be further outlined in chapter 2 of the detailed description with regard to a preferred embodiment and with reference to the drawing.

Specifically a luminance-reconstruction-filter is applied to pixels of an array having an array size of 2 x 2 or 4 x 4 or 6 x 6 or larger if preferred. In a particular preferred configuration the luminance-reconstruction-filter is applied to an array size of 2 x 2 or 4 x 4. The filter size may be chosen as a function of the optical transfer. Also the weights for the respective filter may be chosen differently. Additionally a low pass luminance signal may advantageously be generated by low-pass-filters applied to an array size of respectively 4 x 4 or 6 x 6. In an advantageous configuration the 4 x 4 or 6 x 6 low pass filter is combined with the 2 x 2 or 4 x 4 luminance-reconstruction filter respectively to establish one single filter. None of the resulting signals suffers from green non-uniformity artifacts caused by the sensor.

Further various color-reconstruction-filters are offered for appliance. In particular a 3x3 color-reconstruction-filter is applied in case of a 2 x 2 luminance-reconstruction-filter or a 5 x 5 color-reconstruction-filter is applied in case of a 4 x 4-luminance-reconstruction-filter.

In the whole processing chain as described above, i.e. the - RGB-reconstruction, in particular comprising

- the implementation of a post-filter for phase matching;
- the luminance-signal processing;
- the color-reconstruction-signal processing, comprising the implementation of a false-color-filter and in particular a further post-filter; and
- the contour-signal processing,

the amount of signal distortion is limited to an extremely low level.

This also holds for a final JPEG-conversion. In a preferred configuration as well column- and also row-wise processing may be performed to execute the smartgreen3-reconstruction-algorithm according to the proposed method. This is outlined for a preferred embodiment in chapter 3.2 of the detailed description. Such processing advantageously reduces the amount of internal memory and the amount of data swapping to and from external memory. This will support processing effectivity and speed. Such measure also works if all data transfer is rotated by 90°.

The proposed method is advantageously executed on an apparatus as proposed above, in particular on a computing system and/or a semiconductor device. Such system may advantageously comprise an intermediate memory interface located between an image sensor and a processing chip. Thereby advantageously the length and the number of rows of a pixel array to be filtered is no longer restricted, also the amount of data swap to and from an external memory of course should not delay the processing time too much. Consequently still real-time processing, without any memory as an intermediate interface, is possible. The computing system may be any kind of processor unit or system or computer.

Also real-time processing may preferably be performed without any memory as an intermediate interface. However, in this case, for cost reasons, the total amount of available row delays may be limited, in particular to two. This may result in that only three vertical taps are available for the RGB reconstruction as well as for the realization for the contour signal.

Further the invention leads to a computer program product storable on a medium readable by a computing system comprising a software code section which induces the computing system to execute the method as proposed when the product is executed on a computing system, in particular when executed on the computing system of a camera.

The detailed description will illustrate and describe with reference to the accompanying drawing. While there will be shown and described what is considered as a preferred embodiment of the invention. It should of course being understood that various modifications and changes in form or detail could readily be made without departing from the spirit of the invention. It is therefore intended that the invention may not be limited to the exact form and detail shown and described herein nor to anything less than the whole of the invention as disclosed herein and as claimed hereinafter. Further the features described in the description and the drawings and the claims disclosing the invention, may be essential for the invention considered alone or in combination.

The detailed description accompanying the drawing provides the following chapters:

1. Processing flow of the white compensated luminance reconstruction method

2. The white compensated luminance signal

3. RGB color reconstruction

3.1 A false color killer for 3x3 and 5x5 RGB color reconstruction
3.2 Processing with column packages
3.3 Starting-points for RGB color reconstruction
3.4 A 3x3 color reconstruction filter
3.5 A 5x5 color reconstruction filter

4. Conclusions

APPENDIX 1: The influence of the sensor matrix on the transfer of the OLPF
APPENDIX 2: 2x2 Post-filter without internal row memory
APPENDIX 3: The transfer characteristics of the conventional reconstruction
APPENDIX 4: 4x4 and 6x6 color reconstruction
4.1 4x4 RGB color reconstruction
4.2 6x6 RGB color reconstruction

4.3 Evaluation of 4x4 and 6x6 phase reconstruction filters

The Figures of the drawing show preferred embodiments of the invention and are enumerated as follows:

Figure 1: Location of RGB-reconstruction and contour-reconstruction in a memory based architecture;
Figure 2: Basic block diagram of the smartgreen3 reconstruction; (Particular information to the block regarding the multiplication of the R- and B-colors with the smartgreen parameters may be taken from WO 99/04555.)
Figure 3: Realization of the white compensated luminance pixel Yn;
Figure 4: Several white compensated luminance reconstruction filters; (Figures 3 and 4 illustrate the white-compensated-luminance signal of a preferred embodiment which is advantageously free of green-green differences. Green-green differences may be removed by a restoration of a green uniformity of a Bayer image which allows to eliminate green-green differences in the green signal of the sensor with maintenance of a Laplacian (i.e. smartgreen) RGB-reconstruction method and without visible resolution losses. Also they may be removed by preventing green non-uniformity in the parallel contour signal of RGB Bayer image sensors, which may be performed by developing a two-dimensional parallel contour filter that eliminates the green-green differences caused by the image sensor.)
Figure 5: Phase difference between smartgreen1/2 (plus false color killer) and Yn;
Figure 6: False color killing in 3x3 or 5x5 low frequency RGB signals and a 2x2 post-filter;
(Particular information to the blocks with the false color detector and false color killer may be taken from also WO99/04555. The implementation of the false-color-filter into the color-filter and the 2x2 post filter in Figure 6 illustrates a preferred embodiment.)
Figure 7: False color detection by using smartgreen1 signals in three vertical rows, as e.g. described in WO99/04555;
Figure 8: A referred embodiment of color signal phase restoration by means of a 2x2 post-filter;
Figure 9: Eliminating green non-uniformity by the 2x2 post-filter;
(Green-green differences may be removed by a restoration of green uniformity of a Bayer image which allows to eliminate green-green differences in the green signal of the sensor with maintenance of the Laplacian (or smartgreen) RGB-reconstruction method and without visible resolution losses. Also green-green-differences may be removed by preventing green non-uniformity in the parallel contour signal of RGB Bayer image sensors which is achieved by developing a two-dimensional parallel contour filter that eliminates the green-green differences caused by the image sensor.)
Figure 10: Diagram illustrating the transfer of data packages in a row (left) and in a column (right) direction;
Figure 11: Basic block diagram for 2x2 post-filtering using column wise package transfer from the external memory;
Figure 12: Internal memory for a 2x2 post-filter using column wise data transfer;
Figure 13: Internal package memory with sensor data and with vertical transfer option;
(Figures 10 to 13 illustrate a preferred embodiment. The concept of column wise processing works also when all data transfer is rotated by 90°, resulting in a row wise processing with the very same benefits.)
Figure 14: Value of a 3x3 green reconstruction when a center green is present;
Figure 15: Value of a 3x3 green reconstruction transfer when a center green is absent;
Figure 16: Value of a 3x3 green transfer after a 2x2 post filter;
Figure 17: Greenish diagonal interference for conventional reconstruction (left) and for a better matching green reconstruction (right);
Figure 18: False color killer artifacts with conventional green (top) and better matching green reconstruction (bottom);
(Figures 14 to 18 illustrate a preferred embodiment.)
Figure 19: Laplacian 5x5 green reconstruction for a presence of green;
Figure 20: Laplacian 5x5 green reconstruction for an absence of green;
Figure 21: Laplacian 5x5 red/blue reconstruction for a presence of red/blue;
Figure 22: Laplacian 5x5 red/blue reconstruction for an empty red/blue center row and column;
Figure 23: Laplacian 5x5 red/blue reconstruction for an absence of a red/blue center pixel and an empty red/blue center column;
Figure 24: Value of a rotated red/blue filter for an absence of a red/blue center pixel and empty red/blue center row;
Figure 25: Weights of a total green (left) and a total red/blue filter (right);
Figure 26: Weights of total green (left) and total, but modified, red/blue filter (right);
Figure 27: Example showing on the left hand side a mismatch between a green and a red/blue transfer, on the right hand side the transfers do match;
(Figures 19 to 27 illustrate a preferred embodiment.)
Figure 28: Transfer characteristics of three 6x6 contour filters; (Figure 28 illustrates a preferred embodiment i.e. aliasing free parallel contour signals. This may be achieved by either parallel contour processing for Bayer image sensors, which allows to use the green signal from the image sensor for generating a two-dimensional contour signal in parallel with the RGB color reconstruction. The advantage is that no extra row delays are needed as it is the case with serial contour processing or by an aliasing free contour for RGB Bayer image sensor which is based on a unique 5 x 5 parallel contour filter that, without the need for an optical low pass filter, which has a zero throughput at the first RGB sample frequency. Its signal distortion is almost zero, resulting in a contour signal without visible artifacts. The so far known contour filters amplify the back folded and undesired frequencies outside the Nyquist domain of the sensor as well. This will lead to distortions and as a consequence a better visibility of the unwanted aliasing components in the picture. This unique 5 x 5 filter prevents those aliasing artifacts and moreover eliminates the green-green differences caused in the green channel of the image sensor.)

Figure 29: Example showing the amount of aliasing around the RGB sample frequencies as a function of the sensor matrix;

Figure 30: Horizontal colored aliasing at the middle row of a zone plate scene with (at the top) and without (at the bottom) a unity matrix;

Figure 31: Scheme for preventing a 2x2 post-filter row memory by simultaneously processing data of two rows;

Figure 32: Scheme for preventing a 2x2 post-filter row memory by swapping row data to the external memory;

Figure 33: Basics of a conventional RGB reconstruction;

Figure 34: Value of a conventional 3x3 green reconstruction filter;

Figure 35: Value of a green transfer after the 2x2 post filter;

Figure 36: Value of a red/blue conventional reconstruction for an empty red/blue center row and column;

Figure 37: Value of a red/blue conventional reconstruction for an absence of center red/blue row data only;

Figure 38: Red/blue conventional reconstruction for absence of center red/blue column data only;

Figure 39: Values of four different red/blue reconstruction transfers after the 2x2 post-filter;

Figure 40: Diagrams showing the phase of the reconstructed red pixel as a function of the start position for a 4x4 unity array;

Figure 41: Diagrams showing different center pixels as a function of a red and a blue color;

Figure 42: Diagrams showing maintenance of a 4x4 reconstructed red phase as a function of start position;

Figure 43: A 4x4 red transfer characteristic for start position 1 of Figure 42;

Figure 44: Three 4x4 green reconstruction filters;

Figure 45: Examples having applied the first (top), second (middle) or third (bottom) green filter of Figure 44 respectively;

Figure 46: Colored transients;

- at the top: green-magenta and red-blue transients with 4x4 unity RGB filter,
- at the bottom: the same transients with R/B phase correction and third G-filter;

Figure 47: Diagrams showing maintenance of a 6x6 reconstructed red phase as a function of a start position;

Figure 48: A 6x6 red transfer characteristic for start position 1 of Figure 42;

Figure 49: Weights of an appropriate 6x6 green filter;

Figure 50: Example showing a diagonal transient improvement of a 6x6 phase correction filter;

Figure 51: Example showing a false color killing with a 4x4 (left) and a 3x3 (right) color filter;

Figure 52: Examples showing the bandwidth of an artificial zone plate;

- top left: the best 3x3, top right: the best 5x5 color filter (inclusive a 2x2 post filter,
- bottom left: the best 4x4, bottom right: the best 6x6 phase correction color filter;

Figure 53: Examples of a colored diagonal edge;

- top left: the best 3x3, top right: the best 5x5 filter (inclusive a 2x2 post filter),
- bottom left: the best 4x4, bottom right: the best 6x6 phase correction filter.

(Figures 29 to 53 illustrate a preferred embodiment, in particular with regard to post filtering.)

1. Processing flow of the white compensated luminance reconstruction method

In Figure 1, a part of a general architecture of an integrated circuit with a central bus and an external memory interface is shown. A sensor signal is offered via the central bus to the external memory. For the realization of the RGB-color-reconstruction and of the parallel contour-reconstruction the sensor data is retrieved from the external memory via the central bus to the reconstruction. After reconstruction the data are sent directly to the processing block or sent back to the external memory.

The processing block contains more or less standardized camera functions as the matrix, white balance, knee and gamma. Sending the reconstructed data directly to the processing is an important issue because in order to obtain a fast execution time for still pictures or for video data, the amount of time consuming data swap from and to the memory should be limited.

In Figure 2 a more detailed block diagram of a preferred embodiment of the proposed method, hereinafter referred to as "smartgreen3"-signal-reconstruction, is shown. Via the central bus the sensor data is sent from the external memory in small packets to a small internal memory array in the reconstruction block. From this [1Sx64Hx6V] array in Figure 2, containing 1 Signal (16 bits) and 64 Horizontal by 6 Vertical pixels (768 bytes) as an example, the raw sensor data can be randomly retrieved for reconstruction. In particular, a row of sensor data can be processed in multiples of (64-2*ho) pixels, where ho is the horizontal offset of the filter array. For an nxm reconstruction array, where "n" are horizontal and "m" are vertical pixels, the offset is ho=n div 2 "div" means rounding in the direction of zero to the nearest integer). Therefore, it holds ho=1 for n=3, ho=2 for n=4 or n=5 and ho=3 for n=6. The first pixel that can be reconstructed is at position 1+ho, the last one at position N-ho, where N is the total number of pixels in a sensor row. Reconstructing a complete sensor row requires N/(64-2*ho) packages to be sent to the reconstruction block. In the lower part of Figure 2, the RGB color signals are reconstructed with the raw sensor data. The (low) frequency transfer, by means of the choice of the filter weights, depends on the optical transfer of the camera. Whether the false color killer and the 2x2 post-filters are used or not also depends on the optical transfer. In the upper part of Figure 2 the R and B pixels are multiplied with the smartgreen parameters. The smartgreen parameters may e.g. be retrieved according to the method disclosed in WO 99/04555 or in EP 01 200 422.2. With this specific signal three aliasing free luminance signals are reconstructed: the contour signal, the white compensated luminance signal Yn and a low frequency luminance signal Ylf. The latter has about the same transfer characteristic as the reconstructed RGB signals. By subtracting the low frequency signal Ylf from the white compensated luminance signal Yn, a high frequency luminance component is generated: (Yn-Ylf). It is important to be aware of the fact that in the preferred embodiment, in order to prevent undesired false colors at higher frequencies, the (Yn-Ylf) signal if ever possible should not earlier be added to each color signal then after the matrix and white balance functions in the processing block. The very same counts for the contour signal. Preventing the mentioned undesired false colors is the reason why the total output of the reconstruction block consists of four or respectively three signals. Besides the fastest possible execution time this is a second reason why it is preferred to send all signals directly to the processing block. A third reason can be that it makes twice a [4Sx64Hx1V] internal memory superfluous, one in the reconstruction block for sending the four signals to the external memory and one in the processing block for retrieving them again. The [4Sx64Hx1V] internal memory stands for the storage of four (16 bit) signals of (64-2*ho) horizontal pixels of one vertical row, containing a total of 640 bytes when rounding to 64 pixels.

When maximum flexibility of the design is required, e.g. for a time consuming reconstruction and/or processing by means of specific software via the CPU, then the two [4Sx64Hx1V] internal memories, one for the reconstruction and one for the processing, should be applied.

At the top of Figure 2 the aliasing free contour is realized followed by the overshoot control processor which prevents over- and undershoots at lower frequencies. Two dimensional sharpness improvement using a two-dimensional step transient signal is achieved by the realization of a two-dimensional detection signal which is suited for controlling overshoots. This so called step transient signal can be used for several overshoot (and undershoot) control methods, and resulting in a very attractive sharpness improvement without exaggerated and unnatural looking overshoots. It is allowed to add the contour and the (Yn-Ylf) signal to a single signal that is sent to the internal [4Sx64Hx1V] memory.

The following chapters may be summarized as follows.

In chapter 2 the realization of an aliasing free and zero distortion luminance signal Yn with a 2x2 and 4x4 filter array is described. In chapter 3 follows the realization of the low frequency RGB reconstruction with a false color killer. A low frequency luminance signal with a 4x4 and a 6x6 low pass filter array may also be applied. Details are explained in particular in a chapter 3 of the detailed description of a patent application WO 2004/06565 4x4 and 6x6 aliasing free contour signals may be realized also alternatively or additional to a 5x5 aliasing free contour-reconstruction-filter. Details of a contour-reconstruction-filter are disclosed in a patent application WO 2004/06183. The proposed concept may be adapted in a flexible way as a function of the optical transfer and sensor matrix. Details are described in particular in a chapter 4 of the detailed description of a patent application WO 2004/06565.

<u>2. The white compensated luminance signal.</u>

The white compensated luminance signal is based on the calculation of the smartgreen parameters. Examples are shown in WO 99/04555 and EP 01 200 422.2. The SmartGcntrlR and SmartGcntrlB parameters are referred to as: wbr and wbb respectively. Figure 3 shows that the red and blue pixels are multiplied with the smartgreen parameters. Next the four pixels are added together resulting in a white compensated luminance pixel Yn. The center of pixel Yn is shifted half a pixel to the right and to the bottom, considering the R pixel as the first one. The consequence is that all other signals that have to be reconstructed, i.e. red-green-blue and contour, should get the same center position as this Yn signal.

The advantages of the white compensated luminance signal Yn are the very same as for the 5x5 aliasing free contour signal. An aliasing free contour for RGB Bayer image sensors is based on a unique 5 x 5 parallel contour filter that, without the need for an optical low pass filter, has a zero throughput at the first RGB sample frequency. Its signal distortion is almost zero, resulting in a contour signal without visible artifacts. The so far known contour filters amplify the back folded and undesired frequencies outside the Nyquist domain of the sensor as well. This will lead to distortions and as a consequence a better visibility of the unwanted aliasing components in the picture. This unique 5 x 5 contour filter prevents those aliasing artifacts and moreover eliminates the green-green differences caused in the green channel of the image sensor. Particular advantages are:

1. Without the need of an OLPF (optical low pass filter), the Yn signal has a zero throughput at the first RGB sample frequencies, so it will cause no aliasing at those points. At the second and higher multiples of the sample frequencies the throughput is low, but the low pass of the lens and the modulation transfer function (MTF) of the sensor will be effective there as well.
2. The signal distortion is almost zero, resulting in a luminance signal Yn without visible artifacts.

In the following it will be explained why a 2x2 white compensated luminance filter is particularly advantageous.

1. The 2x2 unity is needed for the elimination of the modulated color information in the sequential RGB Bayer color signal of the image sensor and the elimination of the green non-uniformity caused by the image sensor. Preventing green non-uniformity in the parallel contour signal of RGB Bayer image sensors is achieved by a method for developing a two-dimensional parallel contour filter that eliminates the green-green differences caused by the image sensor. Parallel contour processing for Bayer image sensors allows to use the green signal from the image sensor for generating a two-dimensional contour signal in parallel with the RGB color reconstruction.
The advantage is that no extra row delays are needed as it is the case with serial contour processing. It has to be noted that whatever OLPF-type has been used, it does neither influence this color modulation in large saturated color areas nor the green non-uniformity.
2. The multiplication by the smartgreen parameters is needed in order to undo the effect of a matrix, wherein the sum of the coefficients of the matrix is not equal to unity, and/or the effect of an environmental color temperature.

These are the two reasons why the smartgreen parameters are calculated. If those parameters are not unity, the color sensor will not act as a black and white sensor.

A slight disadvantage of the 2x2 white compensated luminance signal Yn may be that the resolution will be reduced when an optical low pass filter (OLPF) is applied. However this can be compensated by applying 4x4 filters for the reconstruction of Yn. Depending on the amount of the low pass transfer of the OLPF, a Yn filter with heavier weights can be chosen. On the left hand side of Figure 4 the already described 2x2 Yn filter is shown. In the middle and on the right hand side two 4x4 Yn filters are shown. The right one is the 'heaviest' filter. Besides for compensating the transfer loss of an OLPF they also can be applied for compensation of the transfer loss of the lens.

<u>3. RGB color reconstruction.</u>

The reconstruction method described in this preferred embodiment should be suited for cameras with an arbitrary optical low pass filter (OLPF) or with no OLPF at all. The choice of an appropriate OLPF is not a simple matter. In most cases it is a compromise between the loss of sharpness and the acceptance of a certain amount of aliasing or preferably no aliasing at all. Relevant parameters are:

1. the optical transfer of the lens;
2. the modulation transfer function (MTF) of the sensor, including a possible pixel microlens, determining light sensitive parameters;
3. the sensor matrix, determined by the color array of the sensor. As explained in appendix 1 the extra amount of aliasing, caused by the heaviness of the matrix, influences the specification of the OLPF transfer;
4. a given reconstruction algorithm, which of course results in a certain transfer characteristic as well, causing the need for more or less aliasing reduction by means of the OLPF.

If one of those four parameters in a camera has been modified, one should consider the adaptation of an OLPF. Here a problem arises which is that usually an OLPF is specified without taking all four mentioned parameters into account. Therefore in the preferred embodiment it is tried to anticipate on an existing or a preferred camera design, i.e. the optics (pt. 1) and the sensor (pt. 2 and 3), a reconstruction method that offers some flexibility (pf.4). The transfer of the reconstruction filters can be changed by choosing certain filter weights, but most important is the possibility to apply a false color killer.

In this chapter the RGB color reconstruction filters are explained: one using a 3x3 array and one with a 5x5 array. Both can be applied with a false color killer. First it is explained how the important false color killer is realized and why it causes hardly or no visible artifacts (black and white dots) in comparison with the one applied with smartgreen1/2 as outlined in WO 99 /04555 and EP 01 200 422.2 respectively.

3.1 A false color killer for 3x3 and 5x5 RGB color reconstruction.

If a weak or no optical low pass filter has been applied it should be possible to use a false color killer. An inevitable requirement of the detector of the false color killer in this embodiment is that it should be based on the smallest possible green reconstruction array in order to obtain the highest possible green resolution. Until now the best array found is the 3x3 median filter in particular according to the smartgreen1/2 method. When using a 3x3 array in combination with the 6x6 array of smartgreen3, this means however that there will be a phase difference between the reconstructed green center pixel of smartgreen1 and the white compensated luminance pixel of smartgreen 3.

Figure 5 shows this phase difference: the center green of smartgreen1 has been shifted half a pixel to the right and to the bottom, so to the south-east. Of course three other directions are possible as well, but later it will become clear that the south-east version has been chosen on purpose.

In order to maintain the phase of the smartgreen1 or smartgreen2 signal and its false color killer, 3x3 or 5x5 color reconstruction filters have to be applied. In such a case, the resulting RGB signals will have the same phase difference with the white compensated luminance signal Yn of smartgreen 3 as the smartgreen1/2 signal. This phase difference problem can be solved by applying a 2x2 post-filter after the reconstructed color signals and their false color killer, as it is shown in Figure 6. The low frequency output color signals Ro, Go and Bo will match then with the white compensated luminance signal Yn.

In the upper part of Figure 6 the path of the false color detector is shown. Two types of false color detectors can be selected here. The first one is using method and the second one is using method2 for presence and absence of green, respectively. The second and somewhat better detector type, using method2 only has been chosen here. This one requires three adjacent rows at a time within each row a smartgreen signal as shown in Figure 7. The red and blue pixels in rows 2 to 6 of Figure 7 are multiplied with the smartgreen parameters first. Then, with the data in rows 2 to 4 a smartgreen1/2 signal is reconstructed in row 3 with a median filter, in row 4 with the data in rows 3 to 5 and finally in row 5 with the data in rows 4 to 6. The three smartgreen1/2 signals and the FCsigmaG signal are offered to the false color detector. FCsigmaG is the sum of the values of the four green pixels surrounding the center green pixel, divided by 4.

Example: Horizontal pixel delay

For the reconstruction of the smartgreen1/2 signals in the horizontal direction four horizontal pixel delays are needed. With the center pixel as reference, having a delay of two pixels, this means that the reconstructed RGB signals should have a delay of two pixels as well. Also the three luminance signals, Yn, Ylf and contour as shown in Figure 2, should get a two pixel delay with maintenance of the proper phase. This can for example be done by starting their reconstruction with a two pixel delay. No detailed attention will be paid to horizontal delay aspects because they can be solved by means of pixel delays starting at the right position.

In the lower part of Figure 6 the RGB color reconstruction is shown, of which the details of which will be further discussed in the next chapter. The three low frequency color signals Rlf, Glf and Blf are offered to the false color killer. With the aid of three row memories, the three color signals are filtered by a 2x2 post-filter, after which the phase relation with the white compensated luminance signal is restored. It is shown in Figure 8 why in Figure 5 the center smartgreen1/2 pixel (or Rlf, Glf and Blf pixels) was chosen on purpose to be generated in row 4 and column 4. By means of a single row and a single pixel delay the previously generated color signals now can be added to be 2x2 post-filtered.

Although the details of the RGB color reconstruction have not yet been explained, the reasons why the false color killer of smartgreen3 - which has been referred to as the false-color-filter above - is better than the one of smartgreen1/2, are mentioned here:

1. By preference false color killing is done on low frequency reconstructed RGB signals, causing less artifacts.
2. If by any chance artifacts of the false color killer should occur, they will be reduced by the 2x2 post-filter. Also the green non-uniformity is eliminated by the post-filter, as e.g. demonstrated in Figure 9.
3. The high frequency contribution of the white compensated luminance signal will mask possible false color killer artifacts.
4. The false color detector using surrounding smartgreen pixels similar to method2, as shown in Figure 7, somewhat better in performance than the one of method1.

Item 1 is no longer valid when the conventional RGB color reconstruction is applied, which however advantageously is not excluded by the smartgreen3 application. It can be regarded as an advantage of smartgreen3 that even with no real low pass color signals, there is not much difference between a smartgreen1 or 2 based false color detector. After the final smartgreen3 reconstruction the result with conventional reconstruction filters may be very acceptable because it hardly suffers from artifacts.

A remark about the false color detector is that it uses a certain level above which false colors will be killed. False colors below that level, for instance at small amplitudes due to the optical low pass transfer, will not be killed. In case of smartgreen3 the adjustment of the false color detector is much less critical then in case of smartgreen1/2.

A major advantage of smartgreen3 regarding color and luminance artifacts is that the post stamp looking borders of prior art methods are vanished. The reason is that the smartgreen1/ 2 signal is not applied at all in the color and luminance signals. Instead of the aliasing smartgreen 1/2 signal a distortion free white compensated luminance signal Yn is applied.

The left hand side of Figure 9 shows the green non-uniformity using the conventional reconstruction method. On the right hand side a 2x2 post-filter shows the elimination of that non-uniformity.

3.2 Processing with column packages

Having explained the need for a 2x2 post-filter in order to match the phase of the RGB color signals with the white compensated luminance signal, it will be very clear that at best no row memories should be implemented in the hardware. Three solutions will be described to realize this. Two of them are explained in Appendix 2, the most interesting one is explained here.

Until now it has been assumed that the 64 pixel wide packets of sensor data are transferred from the external memory to the reconstruction block in the row direction. On the left hand side of Figure 10 this row wise package transfer is shown. Arriving at the end of the first row the package transfer starts at the begin of row 2 and so on. This horizontal transfer requires however the availability of a full row memory for the 2x2 post-filter.

Given the condition that the sensor data of the complete picture has been stored in the external memory, it is however also possible to apply a package transfer in the column direction. On the right hand side of Figure 10 this column wise package transfer is shown. After sending the first package of the first row, the first one of the second row is sent. This procedure is continued until the last row. Then the second package of the first row is sent, shifted (64-2*ho) pixels to the right, and the procedure starts again, until finally all horizontal pixels in the last row have been reconstructed.

For both, the row and column wise package transfer, the signal reconstruction is executed in the horizontal direction within each package. By means of storing the RGB color signals in an internal memory with the width of the package, and then moving to the next row, its data can be used for the 2x2 post-filter. The advantage of column wise package transferring is that it does not need a full row memory. An internal memory having the width of a package is sufficiently wide to be independent of the number of horizontal pixels of the sensor.

In Figure 11 the basic block diagram of column wise package transfer is shown including the internal memory, which is only 64 pixels wide, needed for the 2x2 post-filter. It is to be noticed that Figure 11 is almost the same as Figure 32. Appendix 2, except that no interconnection of the [3Sx64Hx1V] post-filter memory to the central bus and external memory is needed. As will be explained in Appendix 2 this will advantageously prevent 66% of data swapping to the external memory.

Figure 12 shows that the internal post-filter memory is a FIFO (first-in-first-out) memory of only 64 pixels width. If a pixel of the previous row has been sent to the post-filter, its space of storage place becomes available. The actual reconstructed RGB data can then be stored on that initial free space. Consequently a [3Sx64Hx1V] internal memory is sufficient for such purpose in the preferred embodiment. The total number of bytes for a 16 bit RGB data storage amounts to 384.

3.2.1 Reducing the amount of sensor data transfer from the external memory

If the internal [1Sx64Hx6V] input memory of sensor data is able to shift downwards in the vertical direction as this is shown in Figure 13, then a package from the external memory only needs to have a width of 64 pixels with a height of a single row: [1Sx64Hx1V]. Every time data of the next row have to be reconstructed, the data in the internal memory are shifted one row downwards. Subsequently only the upper row is filled with data from the external memory.

A reconstruction immediately followed by the processing, using a column wise package transfer without a demand of a vertical transfer option in the internal memory, needs an amount of units:

- sensor data from external to internal memory: [1Sx64Hx6V] or: 6 transfer units

(continued)

| | |
|---|---|
| • RGB data from processing block to external memory: [3Sx64Hx1V], being: | 3 transfer units |
| what makes a total of: | 9 transfer units |
| • Including the vertical transfer option this becomes [1Sx64Hx1V], or: | 1 transfer units |
| • The three units of the RGB data to external memory remain: | 3 transfer units |
| makes a total of: | 4 transfer units |

Consequently the amount of data swapping for reconstruction and processing has been reduced by more than 56%.

A transfer unit is regarded to amount to 1Sx64Hx1V, i. e. 1 Signal of 64 Horizontal pixels.

3.3 Starting-points for RGB color reconstruction.

In general three specific starting-points have to be taken into account for the RGB color reconstruction of smartgreen3 in the preferred embodiment.

1. With filters having a larger bandwidth, like the conventional RGB reconstruction, the differences between the transfer characteristics of the single colors will cause colored interferences at higher black and white scene frequencies. This is caused by the back folding of the different transfer characteristics at each multiple of their sample frequency. Because there are two times as much green pixels as red or blue pixels on a Bayer sensor, a better matching of the green transfers has the first priority. It will be shown that the best matching green characteristics do not offer the best performance at edges due to artifacts. There is no real explanation for this phenomenon yet. The coefficients mentioned in the next chapters have been found in series of trial and error and have been approved in experiments.
2. With filters having a bandwidth below the Nyquist frequency like the 5x5 one, there will of course be aliasing around the multiples of the sample frequency. Only a proper OLPF can prevent such aliasing. If those low frequency RGB filters do not match sufficiently then a colored reproduction of black and white low scene frequencies will occur. It will be shown that the heaviness of the matrix coefficients play a very important role here.
3. One should choose green coefficients which also prevent the green non-uniformity problem caused by the RGB Bayer image sensors. Figure 9 demonstrates that in case of a 3x3 or 5x5 RGB filter the 2x2 post-filter already eliminates the green non-uniformity. Nevertheless it helps if also the 3x3 and 5x5 filters eliminate green-green differences.

3.4 A 3x3 color reconstruction filter.

In Appendix 3 the transfer characteristics of the conventional RGB color reconstruction filters are shown. In Figures 14 and 15, better matching characteristics for a 3x3 green reconstruction filter are shown. In the upper-left corner the filter weights are displayed.

Although also the 2x2 post-filter will eliminate green-green differences, the green reconstruction filters of Figures 14 and 15 will already do that. A method for developing a two-dimensional parallel contour filter that eliminates the green-green differences caused by the image sensor can also be applied.

As a rule it holds: "The subtraction of neighbor diagonal filter coefficients should result in a zero contribution. This will average and as a consequence eliminate the green-green differences of the green pixels".

This rule also be applied to a luminance-reconstruction filter as explained in the description of the white compensated luminance signal in chapter 2. If, however, a filter should not be capable to solve the green non-uniformity it will be mentioned explicitly.

In Figure 16 the f a green transfer after the 2x2 post filter is shown. On the left hand side the transfer is shown for "green is present" and on the right hand side for "green is absent". It is to be noticed that the amount of low frequency aliasing is determined by the first filter, i.e. the reconstruction filter. The post-filter only reduces high frequency components. The advantages of better matching green filters are:

- that they will cause less greenish interferences at higher diagonal frequencies, which is visible from Figure 17),
- that less false color killer artifacts will occur, which is visible from Figure 18,

- that it is free of artifacts at edges, which is visible also from Figure 18.

In Figure 17, a low pass filtered zone plate scene has been applied with a unity sensor matrix, i. e. no smartgreen3 processing has been applied, no false color killer and no 2x2 post-filter. Figure 17 shows the color signal after the 3x3 reconstruction filters. Besides the reduction of the greenish diagonal interferences on the right hand side also some loss in resolution can be seen. Later on in this processing this loss can also be compensated by a proper choice of the Yn-signal.
In Figure 18 the false color killer artifacts are shown for a square of a MacBeth color checker chart, here being enlarged four times. Although not shown, the square is of yellow color. The color signals of the 3x3 conventional (top) and the smartgreen3 (bottom) reconstruction are depicted. For the latter nor the smartgreen3 high frequency processing and neither the 2x2 post-filter has been applied. The false color detector for both uses merely the conventional smartgreen1 signal according to detection method2.
It is to be noticed that a difference to the smartgreen1/2 reconstruction method is that smartgreen3 does not apply the smartgreen signal as a color signal. It is only used for the false color detector. The lack of artifacts in the lower part is mainly caused by the green transfer characteristics. Although they are matching better than the conventional reconstruction ones, they are still different. Nevertheless they offer a surprisingly perfect reconstruction at colored and black and white edges. This makes the green filter combination of the Figures 14 and 15 very unique and preferable.
This kind of filter may also be applied to a reconstruction concept referred to as smartgreen4. Details are described in particular in a chapter 5 of the detailed description of a patent application WO 2004/006182.

<u>3.5. A 5x5 color reconstruction filter.</u>

In Figures 19 and 20 the transfer characteristics of a 5x5 green reconstruction filter are shown. In the upper-left corner the filter weights are shown. It is to be noticed that the filter in Figure 19 alone does not eliminate the green-green differences. In Figures 21, 22, 23 and 24 the transfer characteristics of 5x5 red and blue filters are shown.
In order to make Laplacian filtering possible it is necessary that for the total green filter the weights of each filter is multiplied by such an integer factor that the total weights of both filters become equal. The weights for the presence of green are multiplied by a factor of 3 and those for the absence of green with a factor of 5, visible on the left hand side of Figure 25. For the total red/blue filter the weights have already been matched by multiplying with a factor of six for Figure 22 and a factor of two for Figures 23 and 24, as visible on the right hand side of Figure 25.
In order to fulfill point 2 of chapter 3.3, the RGB transfer matching at low frequencies, the weights should be chosen very carefully. Figure 27 shows on the right hand side the result of a zone plate using the filter weights herein above and on the left hand side with modified red/blue weights as shown herein below in Figure 26. The reason for the greenish low frequency color is a mismatch between the green and the red/blue transfer and the use of a rather heavy matrix as sensors of the FT19 (3000x2000 pixels) type have. This will be shown in detail in Appendix 1. It is to be noticed that the original zone plate scene has been low pass filtered before being transferred to a FT19 sensor signal in order to simulate a certain optical transfer and to prevent an exaggerated amount of aliasing due to the heavy matrix. The original zone plate has been realized with an amplitude of 100%, independently of the frequency. Although better matching transfer characteristics between "green present" and "absent" are possible, the filters of Figures 19 and 20 hardly suffer from artifacts at colored as well as of black and white edges, while the better matching does. There is a resemblance with the previously mentioned 3x3 green filter: it is not an ideal matching one but it hardly suffers from artifacts at edges. In spite of those small artifacts as well as a green non-uniformity of this 5x5 green filter, the 2x2 post-filter will reduce and respectively eliminate them.
In order to see the differences best, one may cover first the left and then the right hand side of Figure 27.
In Appendix 4 the RGB color reconstruction is explained for 4x4 or 6x6 arrays.

- Already two interesting reconstruction filters have been described, one with a 3x3 and one with a 5x5 array. The necessary 2x2 post-filter for a proper phase relation with the white compensated luminance signal is not a real problem when column wise processing is applied. Moreover those filters can in principle be applied with or without false color killer.
- The 4x4 and 6x6 filters are less suited to be applied with a false color detector, due to the less convenient phase relation between them, but appliance is possible.

<u>4. Conclusions</u>

The following particular advantages are achieved with the smartgreen3 reconstruction-method as compared with smartgreen1 and smartgreen2:

- It is a flexible design. Depending on the heaviness of the sensor matrix a choice can be made between two color reconstruction filters. As a consequence the (low pass) luminance filters can be defined application specific. Several high frequency luminance filters can be chosen and adjusted as function of the optical transfer of the camera.
- Due to the false color killer depending on the chosen color reconstruction, it does hardly or not suffer from visible artifacts (black and white dots). The reason is that a stronger low pass filtered color reconstruction is used than with smartgreen 1 or smartgreen2.
- There are no artifacts at all due to the smartgreen reconstruction for the simple reason that the smartgreen concept is used only for the false color detection and not as a color signal. In order to compensate the loss of resolution, a high frequency luminance signal is generated.
- Depending on the chosen color reconstruction, the bandwidth of the back folding colored aliasing is smaller than with smartgreen1 and smartgreen2.
- The transfers of the red, green and blue reconstruction filters are matched on such a way that less or no greenish interferences will occur at higher diagonal frequencies as it is the case with the conventional smartgreen1 and smartgreen2 filters.
- The color reconstruction filters are free of post stamp border looking artifacts at color and luminance edges.
- All generated luminance signals are free of aliasing and distortion by means of the so called luminance white compensation in combination with the filter weights.
- All filters of the smartgreen3 design, presented here, eliminate the green non-uniformity caused by the sensor. In particular the 5x5 green reconstruction filter finally constitutes this with the help of the 2x2 post-filter.

In summary, due to its flexibility, the lack of signal distortion and its false color killer, smartgreen3 is well suited for the reconstruction and processing of digital still images and of contiguous video pixels of sensors with a Bayer color filter array.

Appendix 1: The influence of the sensor matrix on the transfer of the OLPF

As outlined above the sensor matrix plays a role in the specification of the transfer characteristic of an optical low pass filter (OLPF). Expressing the amount of aliasing in a single representative parameter will not be outlined in detail. But the above statement will be made clear by aid of the Figures 29 and 30 showing the results of an artificial generated zone plate.

The upper/left part of Figure 29 is supposed to be a compromise between loss of sharpness and an acceptable amount of aliasing, given a (simulated) OLPF with a certain transfer. The conventional reconstruction method and a unity sensor matrix are used.

The lower/right part shows the very same OLPF and reconstruction method, the only difference is that a Philips FT19 sensor matrix has been applied. The first aimed compromise can at best be reached now by adapting the transfer of the OLPF.

The upper part of Figure 30 shows the RGB signals of the middle row of the zone plate scene when using a unity matrix. The same OLPF and reconstruction method has been used as for Figure 29. The lower part of Figure 30 shows the results of the same row when using the matrix of the Philips FT19 sensor.

It is advisable that the sensor matrix should be taken into account when defining an OLPF in order to find a compromise between loss of sharpness and the amount of aliasing. As has been made clear, the very same counts for the reconstruction method.

A rule of thumb for judging the heaviness of a sensor matrix.

Given the matrix parameters it is hardly possible to judge whether it is a heavy matrix or not. Therefore the following rule of thumb has been developed:

"When inverse matrix values, for one or more colors, of one or both of the added colors other then the primary value, are larger than half that primary value, then the matrix can be regarded as a (rather) heavy matrix, causing a lot of extra aliasing and extra colored noise."

Because the color temperature of the scene influences the inverse matrix values, the sensor matrix should preferably be defined at a color temperature somewhat in the middle of the white balance range. For a range of 3000 to 7000 K (Kelvin) a color temperature of about 5000 K will be fine.

The parameters of the FT19 matrix:

| | | | |
|---|---|---|---|
| red | 2.1610 | -1.7720 | 0.6120 |
| green | -0.1580 | 2.0830 | -0.9240 |
| blue | -0.0190 | -0.6910 | 1.7090 |

The inverse parameters of the FT19 matrix:

| | | | |
|---|---|---|---|
| red | 0.4858 | 0.4420 | 0.0815 |
| green | 0.0486 | 0.6285 | 0.3223 |
| blue | 0.0252 | 0.2590 | 0.7162 |

Looking at the inverse red matrix values, the added amount of green (0.4420) to the red primary (0.4858) exceeds almost two times the rule of thumb. For the inverse green matrix the added amount of blue to the green primary also does not fulfill the rule of thumb but can be considered as acceptable. The inverse blue matrix is the only one which clearly has added amounts of red and green values far below of half the primary blue value (0.7162). Especially on account of the red parameters the FT19 matrix can be regarded as a heavy matrix.

In case of a heavy matrix, independent of the optical transfer, always a 5x5 color reconstruction filter should be applied. The factor-2-criterion using the inverse matrix values has been explained in this Appendix. Applying a 5x5 color filter and than the 6x6 Ylf filter of Figure 28 is advisable as a logical consequence.

Appendix 2: A 2x2 post-filter without internal row memory

Referring to chapter 3.1, in this Appendix two methods are explained which prevent the undesired row memory for the 2x2 color post-filter.

The first method uses a simultaneous color processing with both row 3 and row 4 as a center row. Figure 31 shows that the upper part uses as input data from rows 1 to 5, resulting in RGB color data at the center row 3. In the lower part input data from row 2 to 6 is used, with RGB data at center row 4. The signals R3-G3-B3 and R4-G4-B4 are offered to the 2x2 post-filter which uses an internal pixel delay for the 6 color signals in order to be able to execute the 2x2 post-filtering.

The amount of extra circuitry for this simultaneous color processing can be minimized by means of a smart combination of available signals. By doing this, only one extra smartgreen1 median filter (resulting in a total of 4 of them instead of 3), an extra false color killer and an extra RGB reconstruction filter are needed. The chip area needed for the extra median filter and the false color killer is extremely small. The 3 color reconstruction filters will consume the largest part of the extra area.

The second method uses the external memory for the storage of the row data of the three reconstructed low frequency RGB color signals. Therefore, as shown in Figure 32, an internal memory is used as an interface to the central bus for storage and retrieval of reconstructed color row data. The size is [3Sx64x1], i.e. 3 Signals of 64 Horizontal pixels, being 384 bytes for 16 bit signals. A slight disadvantage of this method is the time consuming swap of color data which will increase the total execution time of a sensor picture.

For the 2x2 post-filtering the data of the actual reconstructed color pixel at position (x,y) is used with the data in the internal memory at position (x,y-1). The horizontal position is x, the row number is y, so y-1 is the previous row. The first impression may be that the internal memory should contain two 64 pixel packages RGB color data for two rows: one package for the previous row and one for the row being reconstructed and to be sent to the external memory. So [6Sx64Hx1V], which is two times larger then illustrated in Figure 32. However, if a pixel of the previous row has been sent to the post-filter, its space in the internal memory becomes free. The actual reconstructed RGB data can be stored then in that particular space. This means that a [3Sx64Hx1V] internal memory is sufficient.

Regarding the amount of data swap different rules apply. First a package of color data of the previous row has to be sent to the internal memory. After that package has been used by the post-filter, the package with color data of the actual row has to be sent to the external memory. So for post-filtering a package of data and two packages have to be swapped. Supposing that the output of the reconstruction is directly connected to the processing this means the following for the increase of the amount of data swapping and consequently the execution time:

| | |
|---|---|
| • sensor data from external to internal memory: [1Sx64Hx6V] or: | 6 transfer units |
| • RGB data from processing block to external memory: [3Sx64Hx1V], or: | 3 transfer units |
| without post-filtering the relative total amount of swapping is: | 9 transfer units |
| • with post-filtering, 2x [3Sx64Hx1V] extra packages are needed, so: | 6 transfer units |
| resulting in a total amount of swapping of: | 15 transfer units |

Due to memory based post-filtering the increase of the amount of swapping is:

$$(15/9)*100\%-100\% = 66\%$$

A transfer unit is regarded as 1Sx64Hx1V, i. e. 1 Signal of 64 Horizontal pixels.

Appendix 3: The transfer characteristics of conventional reconstruction

Figure 33 has a variety of new features as compared to smartgreen1. Added is in particular the corresponding 3D transfer for each possible start position of the conventional RGB color reconstruction. For green there are two different transfer characteristics, for red and blue even four.

For the conventional green reconstruction the green transfer is unity if center green is present and according to the 3D plot in Figure 34 below if center green is absent. The differences in the green reconstruction transfers will cause a greenish modulation at higher diagonal frequencies due to the back folding of the different green transfers at each multiple of the green sample frequency.

Another slight disadvantage of this green reconstruction filter is that it suffers from the green non-uniformity caused by the RGB Bayer image sensors. The 2x2 post-filter will however solve this problem. It allows to eliminate green-green differences in the green signal of the sensor with maintenance of the Laplacian or smartgreen RGB reconstruction method and without visible resolution losses.

In Figure 35 it is shown that the green transfer characteristics become more equal after 2x2 post-filtering. On the left hand side the transfer for the presence of green is shown, on the right hand side the transfer for the absence of green.

It is to be noticed that the amount of low frequency aliasing is mainly determined by the first reconstruction filter. The post-filter only reduces high frequency components. The greenish modulation at higher diagonal frequencies however will be reduced.

For the conventional red/blue reconstruction four different transfer characteristics play a role:

1. If center red/blue is present then the transfer is unity.
2. If there is no red/blue center pixel and the center row as well as center column do not contain red/blue pixels then the transfer of Figure 36 is the result.
3. If there is no red/blue center pixel and the center column does not contain red/blue pixels then the transfer of Figure 37 counts.

If there is no red/blue center pixel and the center row does not contain red/blue pixels then the transfer of Figure 38 counts, being equal to the transfer of Figure 37 but rotated by 90°.

In Figure 39 the 4 different red/blue transfers are shown after 2x2 post-filtering. It is to be noticed that the amount of low frequency aliasing is mainly determined by the first reconstruction filter. The post-filter only reduces high frequency components.

Appendix 4: A 4x4 and 6x6 color reconstruction

At a first glance, preferably if no false color killer is needed, it looks attractive to apply a 4x4 or a 6x6 RGB color reconstruction filter because it is expected that the phase of the reconstructed pixel will be the same as of the white compensated luminance signal as illustrated with Figure 3. In that case no post-filter is needed. It will be explained in the next two chapters of this appendix, for a 4x4 and for a 6x6 color reconstruction array that the red and blue phase, averaged over the four start positions, will correspond with the one of the white compensated luminance signal, but that for each start-position the phase will be different.

4x4 RGB color reconstruction

For the sake of simplicity a 4x4 red (and blue) reconstruction filter with unity weights is supposed as it is shown on the left hand side of Figure 40. In Figure 40 different red start positions are shown with the involved red pixels of the reconstruction and the reconstructed red pixel. For none of the start positions the reconstructed red pixel corresponds with the phase of the white compensated luminance pixel. Only the average value of the four positions, as a function of the start position reconstructed red pixels, will have the desired phase match. Because the reconstruction concerns still photography pictures, which are very sensitive for artifacts, the averaged phase hardly has any significance. Besides the mentioned phase mismatch for a single red or blue color, there is also a relative phase difference between the three reconstructed RGB pixels as it is shown in Figure 41. For the green color a 4x4 unity filter is supposed of which the reconstructed pixel has a proper phase match with the white compensated luminance signal.

It is shown in Figure 42 that with specific filter coefficients the position of the reconstructed red (or blue) pixel can be maintained in correspondence with the phase of the white compensated luminance signal. This filter will be referred to as the red/blue phase correction filter. As can be seen in Figure 42 the red/blue reconstruction concerns only three involved pixels.

In Figure 43 the transfer characteristic for start position 1 Figure 42 is shown.

According to the starting points for a color reconstruction filter mentioned in chapter 3.3, the green coefficients should be defined with care. Both green transfer characteristics should have a certain match and they have to match sufficiently with the red/blue filter transfer. Moreover it is preferred that the green non-uniformity is eliminated.

In Figure 44 three 4x4 green reconstruction filters are shown, wherein independent of the start position, the reconstructed green pixel has a proper phase match with the white compensated luminance signal. Further they eliminate the green non-uniformity caused by the image sensor. The explanation of the green uniformity restoration of those three filters is omitted, as outlined in chapter 2. Further a two-dimensional parallel contour filter may eliminate green-green differences caused by an image sensor.

There are several ways to determine the position of the reconstructed green. For example, the dashed black printed filter coefficients in Figure 44 count for the first green start position, the undashed green ones for the second green start position. When adding the dashed black coefficients in column a and c in the left part of Figure 44, their reconstructed pixel is located in column b and row p. When adding the dashed black coefficients in column b and d the result is located in column c and row q. Combining pixels at positions (b,p) and (c,q) results in the position of the final reconstructed green pixel. For the undashed green printed coefficients a similar explanation results in the very same reconstructed green position.

The position of the reconstructed green of the second green filter in Figure 44, is to be determined at first supposing that all weights are unity. The position then will be the same as for the first green filter. In order to involve the weights of a factor of 2, for the dashed black weights at position (b,p) and (c,q), the pixel values have to be added once more. This again results in a pixel with the very same position as a reconstructed green. In a similar way the position of the undashed green colored coefficients can be determined.

For the third green filter adding the dashed black coefficients will result in the desired reconstructed green position.

At first it will be examined which of the three green filters has the best match with the red/blue phase correction filter of Figure 42 (and/ 43) by using an artificial zone plate and the sensor matrix of the FT19. Because it is not the intention to apply a false color killer for this examination the filter combination with the best grey information should be chosen. At the top of Figure 45 a unity green filter is applied, in the middle the second one. Both have a purple color shift towards the mid frequencies. Clearly the bottom picture, using the third green filter, is the best one. As already has been explained in Appendix 1, the interferences in the middle are caused by the matrix coefficients. With a unity matrix they completely vanish. On the seventh 'white' ring of the zone plate the color shift is picked and shown enlarged in the square in the right part of Figure 45. It is to be noticed that no high frequency luminance processing has been applied. The result is due to of the color reconstruction only.

A similar test with the unity RB filter and the three green filters can be done, but all have unacceptable low frequency artifacts and the one with the third green filter has a strong greenish color shift. Therefore, in order to show the improvement of the 4x4 red/blue phase correction filter, diagonal and vertical colored edges will be shown in stead of a zone plate scene.

The most difficult edges are the green-magenta and the red-blue transients, which here originated from an ideal step function in this case. In Figure 46 clearly the improvement of the phase corrected red and blue reconstruction can be seen. The transients have been six times enlarged, further a unity sensor matrix has been applied. In the lower part of Figure 46 clearly the improvement of the phase corrected red and blue reconstruction can be seen.

<u>6x6 RGB color reconstruction</u>

Similar measures as for the 4x4 array can be applied for a 6x6 RGB reconstruction filter with, again for the sake of simplicity, unity weights. The position of the reconstructed red (or blue) color depends on the red (or blue) start position. In other words than in the previous chapter, the position of the reconstructed red pixel becomes equal to the position of the red pixel which is closest near the position of the white compensated luminance pixel, but then shifted diagonally one pixel over the white compensated luminance position which is again clear in Figure 40. Also the final position of red and blue reconstructed pixels will be opposite to each other, just like it has been shown in Figure 41.

With specific filter coefficients as shown in Figure 47 the position of the reconstructed red (or blue) pixel can be maintained in correspondence with the phase of the white compensated luminance signal.

In Figure 48 the 6x6 transfer characteristic for start position 1 of Figure 42 is shown.

The low red/blue bandwidth makes it less difficult to find an appropriate green reconstruction filter. Filter weights of one of those green filters are shown in Figure 49.

In Figure 50 the diagonal transfer improvement is shown with, on the left hand side a unity filter and on the right hand side the phase corrected reconstruction.

Evaluation of 4x4 and 6x6 phase reconstruction filters

The best 4x4 and the best 6x6 phase reconstruction filters of the previous chapter of this Appendix will be compared with the best 3x3 and 5x5 filters of chapters 3.4 and 3.5. respectively. The latter filters are followed by the unity 2x2 post-filter.

It is examined at first if a 4x4 (or 6x6) filter can be applied with a false color killer, neglecting the phase difference between both. On the left hand side of Figure 51 the color killing with the 4x4 color filter is shown, on the right hand side with the 3x3 filter followed by a 2x2 post-filter. Both artificial zone plate scenes are processed with the FT19 matrix. Two important aspects can be seen. When looking at the differences in the mid and higher frequency region, the color killing artifacts at the left hand side are rather severe when compared with the right hand side. Further for both methods it counts that the color killer does not act at the false colors near the red/blue sample frequency. This is due to a too small sensor signal for the false color detector. Afterwards this signal is strongly amplified by the color matrix.

In Figure 52 the bandwidth of the 4 color reconstruction methods with the FT19 matrix is shown using an artificial black and white (i.e. colorless) zone plate. Clearly the 3x3 filter offers the best resolution. Although the 5x5 and 4x4 look rather equal, the 5x5 filter shows less artifacts at the mid frequencies. The bandwidth of the 6x6 color filter can be regarded as fairly low.

In Figure 53 a six times enlarged diagonal green-magenta edge is shown for the 4 reconstruction methods using a unity matrix. Careful examination shows a too high color resolution loss at the 6x6 filter (bottom-right). The 3x3 filter has the sharpest color edge, followed by the 5x5 and the 4x4 filter.

Conclusions about the 4x4 and 6x6 reconstruction filters:

- Only with very specific filter coefficients it is possible to maintain the position of the reconstructed red or blue color with the white compensated luminance pixel.
- The resolution of the 6x6 filter is too low. For the 4x4 filter it may be acceptable. Even the 5x5 filter, followed by a 2x2 post-filter has a better resolution than the 4x4 filter.
- The 4x4 and 6x6 filters are less suited to be applied with a false color detector.

In conclusion for Appendix 4 the color bandwidth of the 6x6 filter is less acceptable. Therefore a reconstruction block with a 3x3 and 5x5 reconstruction filter is sufficient because also the 4x4 filter offers no real benefits. The necessary 2x2 post-filter for the 3x3 and 5x5 filters is not a real problem when column wise processing is applied. Moreover those filters can is principle applied with or without a false color killer.

## Claims

**1.** A method for signal processing, wherein a sensor signal of an image sensor is provided as an input and wherein the input is reconstructed in a filter to establish an output for further processing, wherein the filter comprises a luminance-reconstruction-filter, and a red-green-blue-color reconstruction-filter, wherein

- the input comprises a plurality of pixels, and a pixel provides a color value assigned to at least one of the colors red, green or blue,

comprising the steps of :

- applying the luminance-reconstruction-filter to an array of pixels of predetermined array size comprising a number of pixels, wherein at least one of the number of pixels is formed by a red-pixel assigned to the color of red, at least one of the number of pixels is formed by a blue-pixel assigned to the color of blue, and at least one of the number of pixels is formed by a green-pixel assigned to the color of green, **characterized by**
- applying the red-green-blue-color-reconstruction filter to pixels of the array, comprising applying a false-color-killer to low frequency color signals in the red-green-blue-color-reconstruction filter, in order to eliminate false colors,
- applying a false color detector subsequent to the luminance-reconstruction-filter, the false color detector controlling the false color killer, and
- applying a post-filter subsequent to the false-color-killer.

**2.** The method as claimed in claim 1, **characterized in that** application of the luminance reconstruction filter comprises weighting the red and/or the blue-pixel by a green-parameter.

**3.** The method as claimed in claim 1, **characterized in that** application of the luminance-reconstruction-filter comprises the following steps:

- weighting the red-and or blue-pixels in a predetermined array of green-pixels respectively by one or more further green-parameters,
- applying an average filter to one or more green-pixels in the array,
- summarizing the weighted red-and blue pixels and an average of one or more of the green-pixels in the array by a median filter,

the application of the false color detector comprising:

- comparing the median-filtered pixels with low-frequency-filtered pixels of the predetermined array of green-pixels.

**4.** The method as claimed in claim 3, **characterized in that** the predetermined array of green-pixels has an array-size of 3 x 3.

**5.** The method as claimed in any one of the preceding claims, **characterized in that** the applied color-reconstruction-filter has an array-size of 3 x 3 or 5 x5.

**6.** The method as claimed in claim 1, **characterized in that** the post-filter has an array-size of 2x2, to position a center-output-pixel of a predetermined array of green-pixels in phase with a white-pixel which is centered as an output-pixel with respect to the same array as that to which a luminance-reconstruction-filter has been applied to.

**7.** An apparatus for signal processing, which is in particular adapted to execute the method as claimed in claims 1 to 6, comprising an image sensor for providing a sensor signal as an input and a filter for reconstructing the input to establish an output for further processing, wherein the filter comprises a luminance-reconstruction-filter, and a red-green-blue-color-reconstruction- filter, wherein

- the input comprises a plurality of pixels and a pixel provides a color value assigned to at least one of the colors red, green or blue,

wherein

- the luminance-reconstruction-filter is adapted to be applied to an array of pixels of predetermined array size comprising a number of pixels, wherein at least one of the number of pixels if formed by a red-pixel assigned to the color of red, at least one of the number of pixels is formed by a blue-pixel assigned to the color of blue, and at least one of the number of pixels is formed by a green-pixel assigned to the color of green, **characterized in that**
- the red-green-blue-color-reconstruction is adapted to be applied to filter pixels of the array, comprising a false-color-killer to eliminate false colors from low frequency color signals in the red-green-blue-color-reconstruction filter, further comprising
- a false color detector subsequent to the luminance-reconstruction-filter, the false color detector controlling the false color killer,
- and a post-filter subsequent to the false-color-killer.

**8.** A computer program product storable on medium readable by a computing system, in particular a computing system of a camera, comprising a software code section which induces the computing system to execute the method as claimed in claim 1 when the product is executed on the computing system, in particular when executed on the computing system of a camera.

**9.** A computing system and/or semiconductor device, in particular a computing system of a camera, for executing and/or storing a computer program product as claimed in claim 8 thereon.

**10.** A camera comprising an optical system, an image sensor and an apparatus as claimed in claim 7 or a computing system as claimed in claim 9.

**Patentansprüche**

**1.** Verfahren zur Signalverarbeitung, wobei ein Sensorsignal eines Bildsensors als Eingangssignal geliefert wird und wobei das Eingangssignal in einem Filter rekonstruiert wird um ein Ausgangssignal zur weiteren Verarbeitung zu bilden, wobei das Filter ein Leuchtdichterekonstruktionsfilter und ein Rot-Grün-Blau-Farbrekonstruktionsfilter umfasst, wobei

- das Eingangssignal eine Anzahl Pixel enthält, und ein Pixel einen Farbwert liefert, der wenigstens einer der Farben Rot, Grün oder Blau zugeordnet ist,

wobei das Verfahren die nachfolgenden Verfahrensschritte umfasst:

- das Anwenden des Leuchtdichterekonstruktionsfilters auf eine Anordnung von Pixeln einer vorbestimmten Anordnungsgröße mit einer Anzahl Pixel, wobei wenigstens ein Pixel der vielen Pixel durch ein Rotpixel gebildet wird, das der Farbe Rot zugeordnet ist, wenigstens ein Pixel der vielen Pixel durch ein Blaupixel gebildet wird, das der Farbe Blau zugeordnet ist, und wenigstens ein Pixel der vielen Pixel durch ein Grünpixel gebildet wird, das der Farbe Grün zugeordnet ist,

**gekennzeichnet durch**

- das Anwenden des Rot-Grün-Blau-Farbrekonstruktionsfilters auf Pixel der Anordnung, mit der Anwendung eines Falschfarbenlöschers auf NF-Farbsignale in dem Rot-Grün-Blau-Farbrekonstruktionsfilter, um falsche Farben zu eliminieren,
- das Anwenden eines Falschfarbendetektors hinter dem Leuchtdichterekonstruktionsfilter,

wobei der Falschfarbendetektor den Falschfarbenlöscher steuert, und

- das Anwenden eines Nachfilters hinter dem Falschfarbenlöscher.

**2.** Verfahren nach Anspruch 1, **dadurch gekennzeichnet, dass** Anwendung des Leuchtdichterekonstruktionsfilters das Gewichten des Rot- und/oder des Blaupixels durch einen Grünparameter umfasst.

**3.** Verfahren nach Anspruch 1, **dadurch gekennzeichnet, dass** Anwendung des Leuchtdichterekonstruktionsfilters die nachfolgenden Verfahrensschritte umfasst:

- das Gewichten des Rot- und/oder Blaupixels in einer vorbestimmten Anordnung von Grünpixeln durch einen oder mehrere weitere Grünparameter,
- das Anwenden eines Mittelwertfilters auf ein oder mehrere Grünpixel in der Anordnung,
- das Zusammenfassen der gewichteten Rot- und Blaupixel und eines Mittelwertes eines oder mehrerer der Grünpixel in der Anordnung durch ein Medianfilter,

wobei die Anwendung des Falschfarbendetektors Folgendes umfasst:

- das Vergleichen der mediangefilterten Pixel mit den NF-gefilterten Pixeln der vorbestimmten Anordnung von Grünpixeln.

**4.** Verfahren nach Anspruch 3, **dadurch gekennzeichnet, dass** die vorbestimmte Anordnung von Grünpixeln eine Anordnungsgröße von 3x3 hat.

**5.** Verfahren nach einem der vorstehenden Ansprüche, **dadurch gekennzeichnet, dass** das angewandte Farbrekonstruktionsfilter eine Anordnungsgröße von 3x3 oder 5x5 hat.

6. Verfahren nach Anspruch 1, **dadurch gekennzeichnet, dass** das Nachfilter eine Anordnungsgröße von 2x2 hat um ein zentrales Ausgangspixel einer vorbestimmten Anordnung von Grünpixeln in Phase mit einem Weißpixel zu positionieren, das als Ausgangspixel in Bezug auf dieselbe Anordnung zentriert ist, auf das ein Leuchtdichterekonstruktionsfilter angewandt worden ist.

7. Anordnung zur Signalverarbeitung, die insbesondere zum Durchführen des Verfahrens nach Anspruch 1 bis 6 vorgesehen ist, wobei die Anordnung einen Bildsensor aufweist zum Liefern eines Sensorsignals als Eingangssignal und ein Filter zum Rekonstruieren des Eingangssignals zum Bilden eines Ausgangssignals zur weiteren Verarbeitung, wobei das Filter ein Leuchtdichterekonstruktionsfilter und ein Rot-Grün-Blau-Farbrekonstruktionsfilter aufweist, wobei

    - das Eingangssignal eine Anzahl Pixel aufweist und ein Pixel einen Farbwert liefert, der wenigstens einer der Farben Rot, Grün oder Blau zugeordnet ist,

    wobei

    - das Leuchtdichterekonstruktionsfilter dazu vorgesehen ist, auf eine Anordnung von Pixeln einer vorbestimmten Anordnungsgröße mit einer Anzahl Pixel angewandt zu werden,

    wobei wenigstens eines der vielen Pixel durch ein Rotpixel gebildet wird, das der Farbe Rot zugeordnet ist, wenigstens eines der vielen Pixel durch ein Blaupixel gebildet wird, das der Farbe Blau zugeordnet ist, und wenigstens eines der vielen Pixel durch ein Grünpixel gebildet wird, das der Farbe Grün zugeordnet ist, **dadurch gekennzeichnet, dass**

    - die Rot-Crrün-Blau-Farbrekonstruktion dazu vorgesehen ist, auf Filterpixel der Anordnung angewandt zu werden, mit einem Falschfarbenlöscher zum Eliminieren falscher Farben aus NF-Farbsignalen in dem Rot-Grün-Blau-Farbrekonstruktionsfilter, weiterhin umfassend
    - einen Falschfarbendetektor hinter dem Leuchtdichterekonstruktionsfilter, wobei der Falschfarbendetektor den Falschfarbenlöscher steuert, und
    - ein Nachfilter hinter dem Falschfarbenlöscher.

8. Computerprogrammprodukt, das auf einem Medium speicherbar ist, das von einem Rechensystem, insbesondere von einem Rechensystem einer Kamera, ausgelesen werden kann, mit einem Softwarecodeteil, der das Rechensystem veranlasst das Verfahren nach Anspruch 1 durchzuführen, wenn das Produkt in dem Rechensystem, insbesondere wenn in dem Rechensystem einer Kamera durchgeführt wird.

9. Rechensystem und/oder Halbleiteranordnung, insbesondere ein Rechensystem einer Kamera, zum Durchführen und/oder Speichern eines Computerprogrammprodukts nach Anspruch 8 darin.

10. Kamera mit einem optischen System, einem Bildsensor und einer Anordnung nach Anspruch 7 oder einem Rechensystem nach Anspruch 9.

**Revendications**

1. Procédé de traitement de signal, **caractérisé en ce qu'**un signal de capteur d'un capteur d'image est fourni en entrée et **en ce que** l'entrée est reconstruite dans un filtre afin d'établir une sortie pour traitement supplémentaire, dans lequel le filtre comprend un filtre de reconstruction de luminance et un filtre de reconstruction de couleur rouge-verte-bleue, dans lequel

    - l'entrée comprend une pluralité de pixels et un pixel fournit une valeur de couleur affectée à l'une des couleurs rouge, verte ou bleue, comprenant les étapes de :

        - application du filtre de reconstruction de luminance à une matrice de pixels ayant une taille de matrice prédéterminée comprenant un certain nombre de pixels, au moins l'un de ce nombre de pixels étant formé par un pixel rouge affecté à la couleur rouge, au moins l'un de ce nombre de pixels étant formé par un pixel bleu affecté à la couleur bleue, et au moins l'un de ce nombre de pixels étant formé par un pixel vert affecté à la couleur verte, **caractérisé par** :

- l'application du filtre de reconstruction de couleur rouge-verte-bleue aux pixels de la matrice, comprenant l'application d'un éliminateur de fausses couleurs à des signaux de couleur à basse fréquence dans le filtre de reconstruction de couleur rouge-verte-bleue, afin d'éliminer les fausses couleurs,
- l'application d'un détecteur de fausses couleurs après le filtre de reconstruction de luminance, le détecteur de fausses couleurs commandant l'éliminateur de fausses couleurs, et
- l'application d'un post-filtre après l'éliminateur de fausses couleurs.

**2.** Procédé selon la revendication 1, **caractérisé en ce que** l'application du filtre de reconstruction de luminance comprend la pondération du pixel rouge et/ou bleu par un paramètre vert.

**3.** Procédé selon la revendication 1, **caractérisé en ce que** l'application du filtre de reconstruction de luminance comprend les étapes suivantes :

- pondération des pixels rouges ou bleus dans une matrice prédéterminée de pixels verts respectivement par un ou plusieurs paramètres verts,
- application d'un filtre de moyenne à un ou plusieurs pixels verts dans la matrice,
- agrégation des pixels rouges et bleus pondérés et d'une moyenne d'un ou plusieurs des pixels verts de la matrice par un filtre médian,
- application du détecteur de fausses couleurs comprenant :

  - la comparaison des pixels filtrés par filtrage médian à des pixels filtrés à basse fréquence de la matrice prédéterminée de pixels verts.

**4.** Procédé selon la revendication 3, **caractérisé en ce que** la matrice prédéterminée de pixels verts a une taille de matrice de 3x3.

**5.** Procédé selon l'une quelconque des revendications précédentes, **caractérisé en ce que** le filtre de reconstruction de couleur appliqué a une taille de matrice de 3x3 ou de 5x5.

**6.** Procédé selon la revendication 1, **caractérisé en ce que** le post-filtre a une taille de matrice de 2x2 pour positionner un pixel de sortie central d'une matrice prédéterminée de pixels verts en phase avec un pixel blanc qui est centré sur un pixel de sortie par rapport à la même matrice que celle à laquelle un filtre de reconstruction de luminance a été appliqué.

**7.** Appareil de traitement de signal qui est plus particulièrement apte à exécuter le procédé des revendications 1 à 6, comprenant un capteur d'image pour fournir un signal de capteur en tant qu'entrée et un filtre pour reconstruire l'entrée afin d'établir une sortie pour traitement supplémentaire, le filtre comprenant un filtre de reconstruction de luminance et un filtre de reconstruction de couleur rouge-verte-bleue, dans lequel

- l'entrée comprend une pluralité de pixels et un pixel fournit une valeur de couleur affectée à au moins l'une des couleurs rouge, verte ou bleue,

dans lequel :

- le filtre de reconstruction de luminance est apte à être appliqué à une matrice de pixels ayant une taille de matrice prédéterminée comprenant un certain nombre de pixels, au moins l'un de ce nombre de pixels étant formé par un pixel rouge affecté à la couleur rouge, au moins l'un de ce nombre de pixels étant formé d'un pixel bleu affecté à la couleur bleue, et au moins l'un de ce nombre de pixels étant formé d'un pixel vert affecté à la couleur verte, **caractérisé en ce que** :

  - la reconstruction de couleur rouge-verte-bleue est apte à être appliquée pour filtrer des pixels de la matrice, comprenant un éliminateur de fausses couleurs pour éliminer des fausses couleurs de signaux de couleur à basse fréquence dans le filtre de reconstruction de couleur rouge-verte-bleue, comprenant en outre :

    - un détecteur de fausses couleurs après le filtre de reconstruction de luminance, le détecteur de fausses couleurs commandant l'éliminateur de fausses couleurs,
    - et un post-filtre après l'éliminateur de fausses couleurs.

**8.** Produit à base de programme d'ordinateur pouvant être stocké sur un support lisible par un système d'ordinateur, notamment un système d'ordinateur d'appareil photo, comprenant une section de code logiciel qui comprend le système d'ordinateur afin d'exécuter le procédé selon la revendication 1 lorsque le produit est exécuté sur le système d'ordinateur, notamment lorsqu'il est exécuté sur le système d'ordinateur d'un appareil photo.

**9.** Système d'ordinateur et/ou dispositif à semi-conducteur et plus particulièrement, système d'ordinateur d'appareil photo, pour exécuter et/ou stocker sur celui-ci un produit à base de programme d'ordinateur selon la revendication 8.

**10.** Appareil photo comprenant un système optique, un capteur d'image et un appareil selon la revendication 7 ou un système d'ordinateur selon la revendication 9.

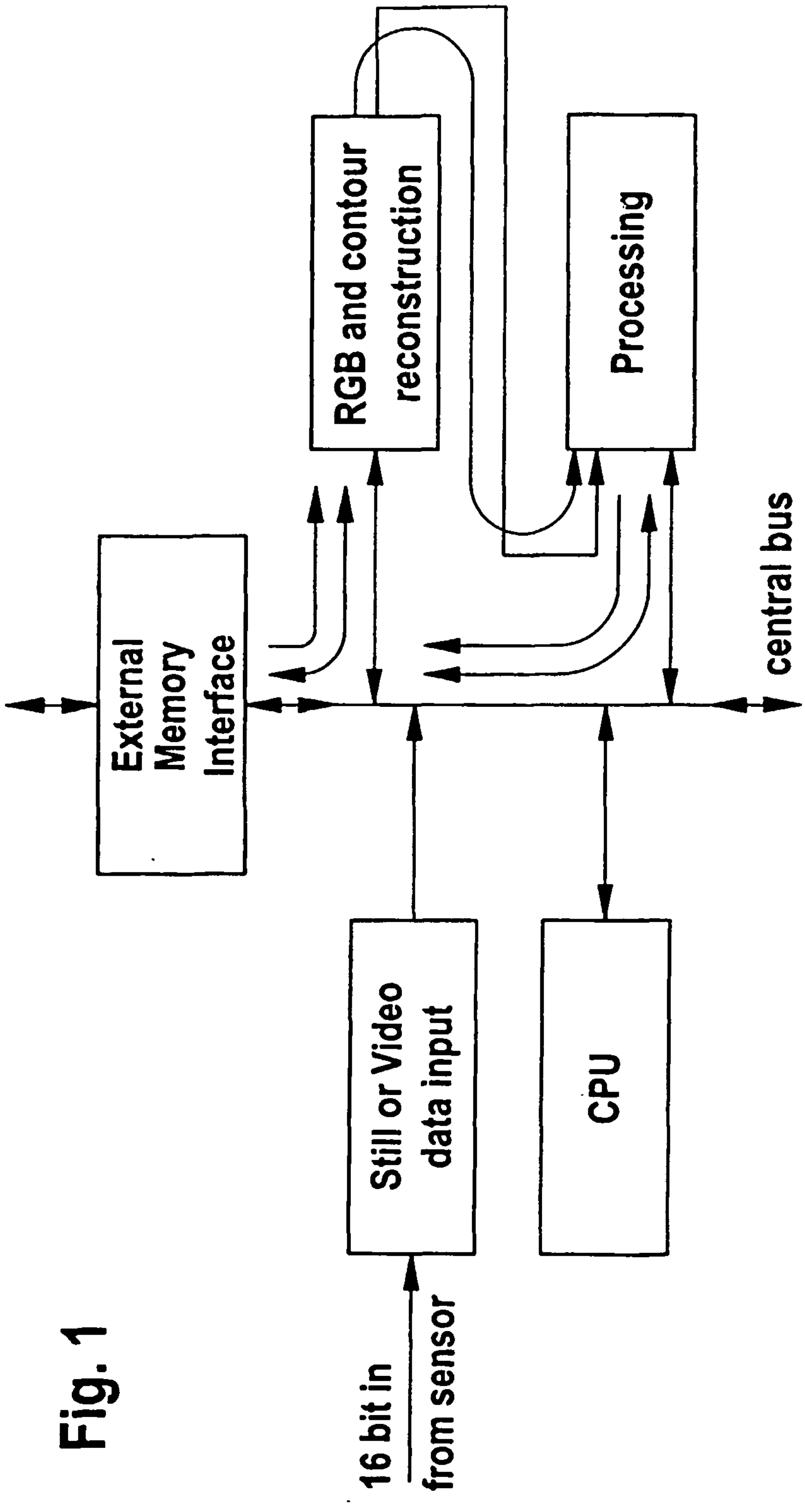
RGB and contour reconstruction
Processing
External Memory Interface
central bus
Still or Video data input
CPU
16 bit in from sensor

Fig. 1

Fig. 2

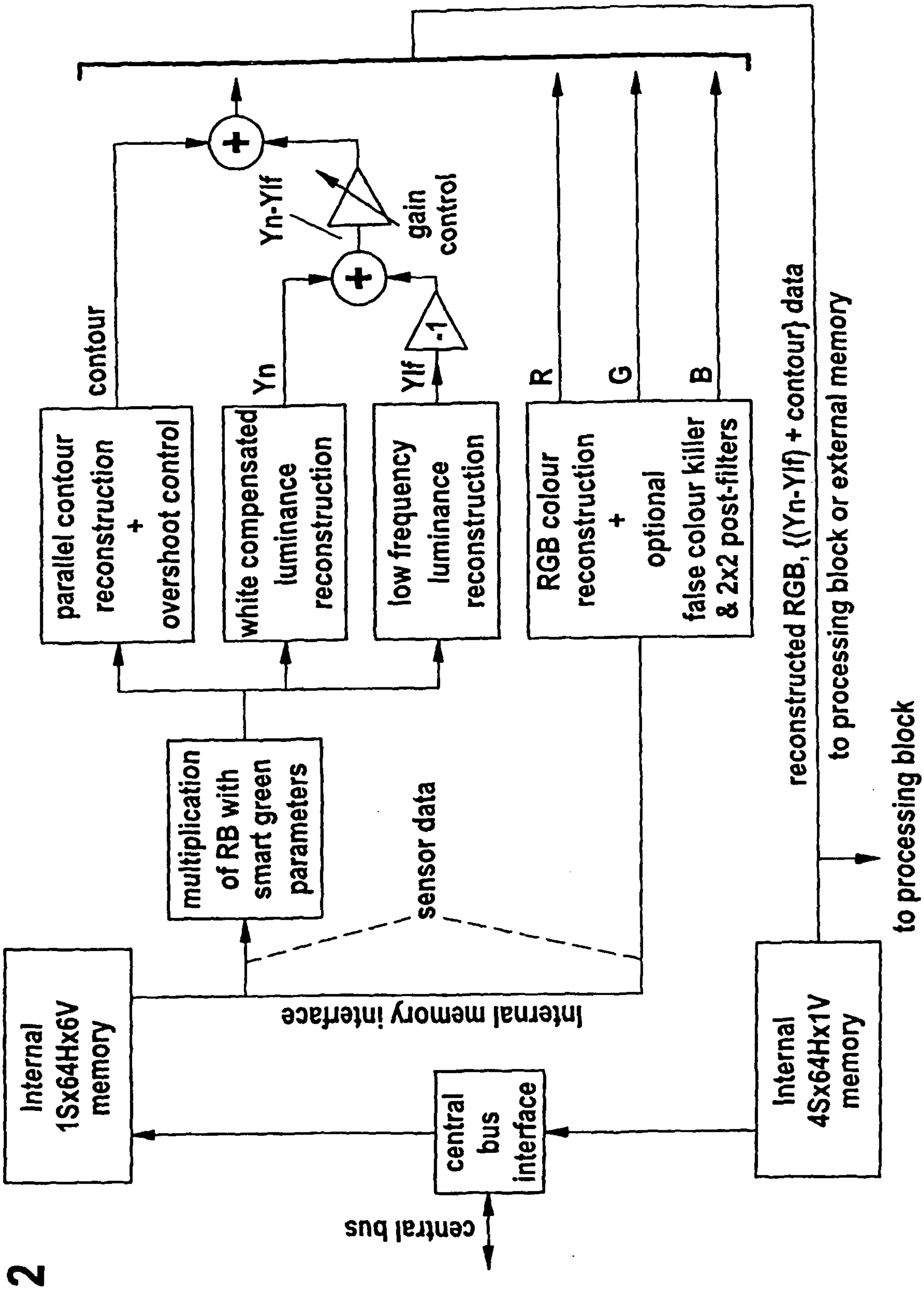
Internal 1Sx64Hx6V memory
Internal memory interface
multiplication of RB with smart green parameters
sensor data
parallel contour reconstruction + overshoot control
contour
white compensated luminance reconstruction
Yn
low frequency luminance reconstruction
Ylf
-1
Yn-Ylf
gain control
RGB colour reconstruction + optional false colour killer & 2x2 post-filters
R
G
B
reconstructed RGB, {(Yn-Ylf) + contour} data
to processing block or external memory
to processing block
Internal 4Sx64Hx1V memory
central bus interface
central bus

Fig. 3

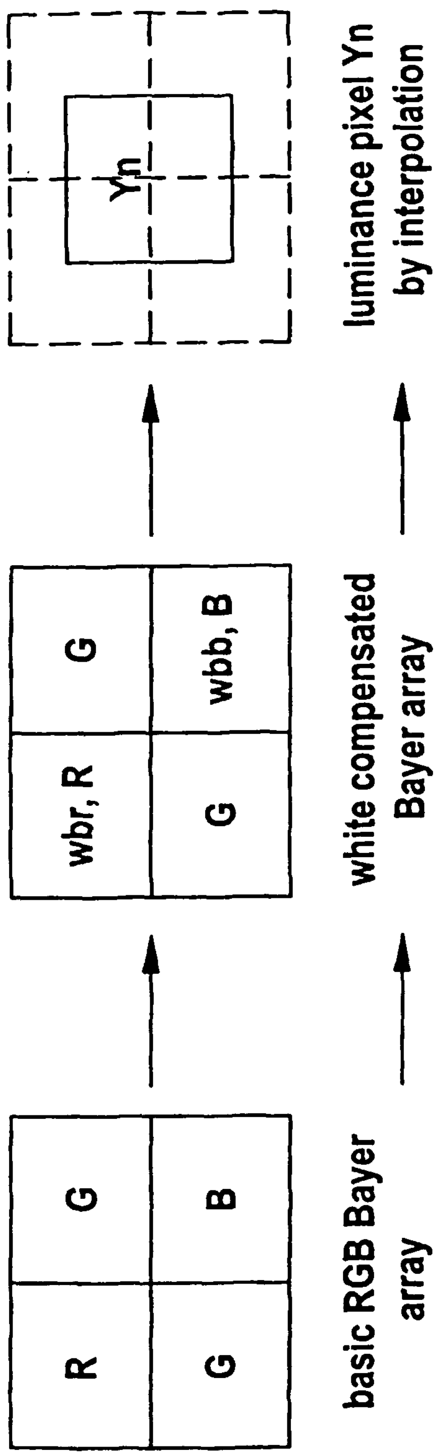
R
G
G
B
basic RGB Bayer array
wbr, R
G
G
wbb, B
white compensated Bayer array
Yn
luminance pixel Yn by interpolation

Fig. 4

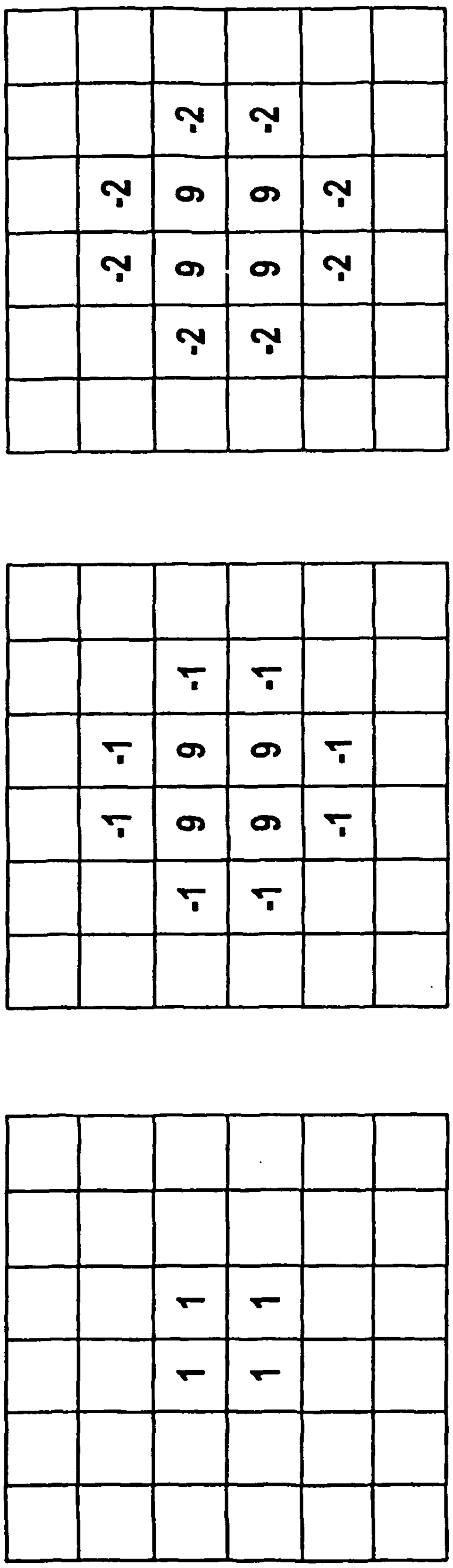

Fig. 5

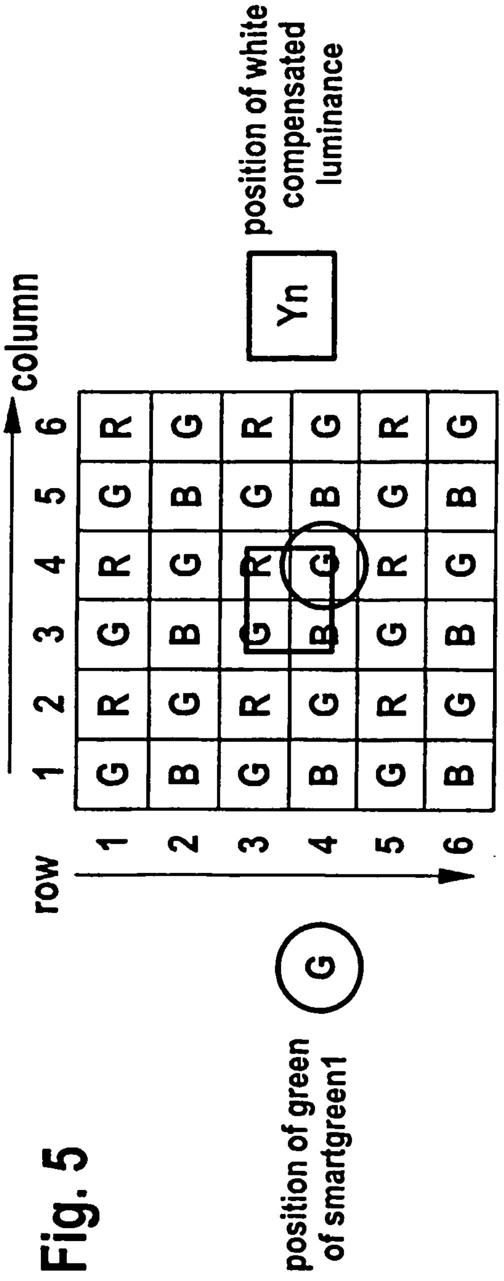

row
column
1
2
3
4
5
6
G R G R G R
B G B G B G
G R G R G R
B G B G B G
G R G R G R
B G B G B G
Yn
position of white compensated luminance
G
position of green of smartgreen1


Fig. 6

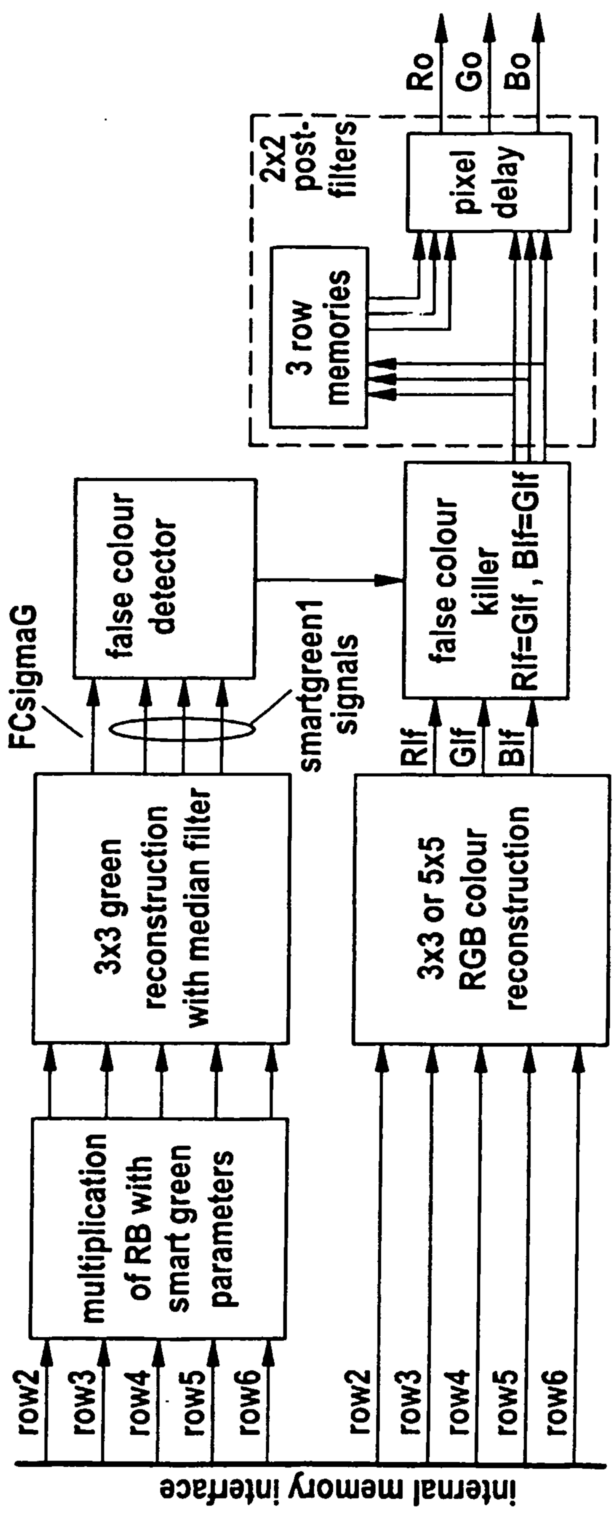

internal memory interface
row2
row3
row4
row5
row6
multiplication of RB with smart green parameters
3x3 green reconstruction with median filter
FCsigmaG
smartgreen1 signals
false colour detector
3x3 or 5x5 RGB colour reconstruction
Rlf
Glf
Blf
false colour killer
Rlf=Glf , Blf=Glf
3 row memories
pixel delay
2x2 post-filters
Ro
Go
Bo

Fig. 7

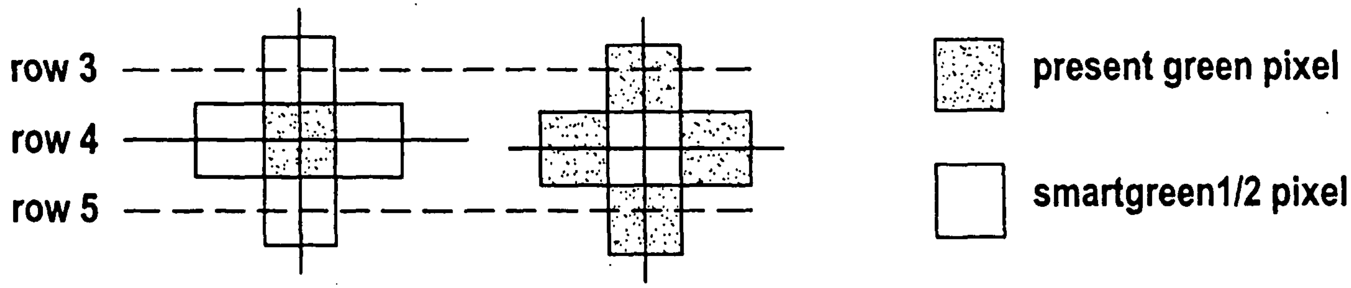
row 3
row 4
row 5
present green pixel
smartgreen1/2 pixel

Fig. 8

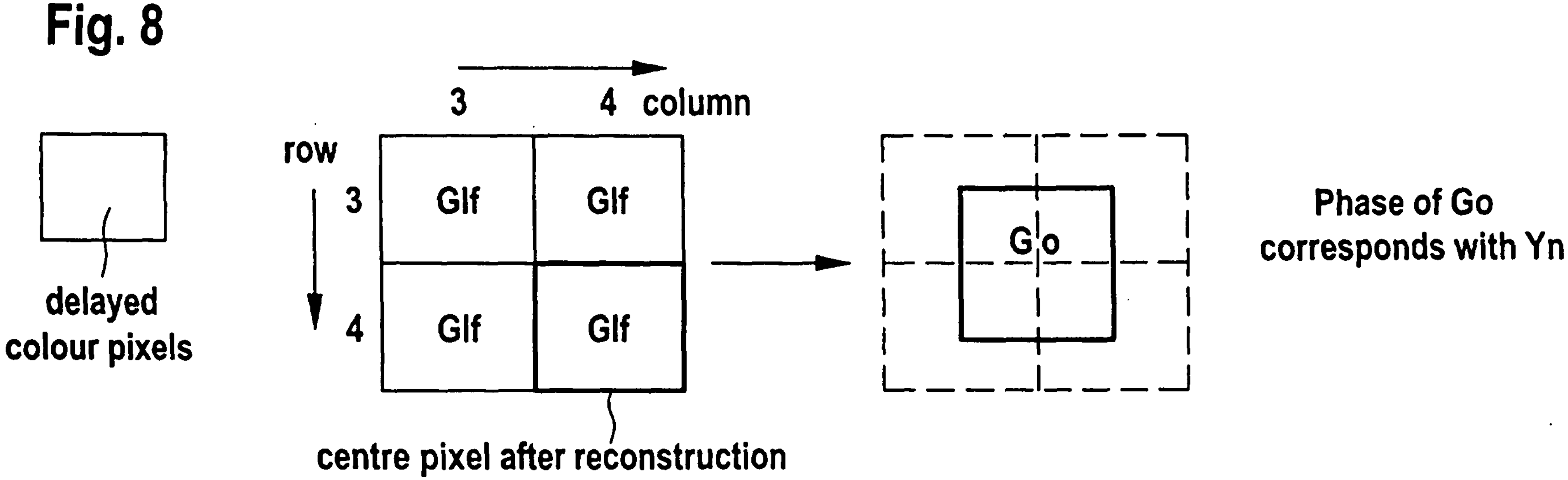
delayed colour pixels
3
4 column
row
3
4
Glf
Glf
Glf
Glf
centre pixel after reconstruction
Go
Phase of Go corresponds with Yn

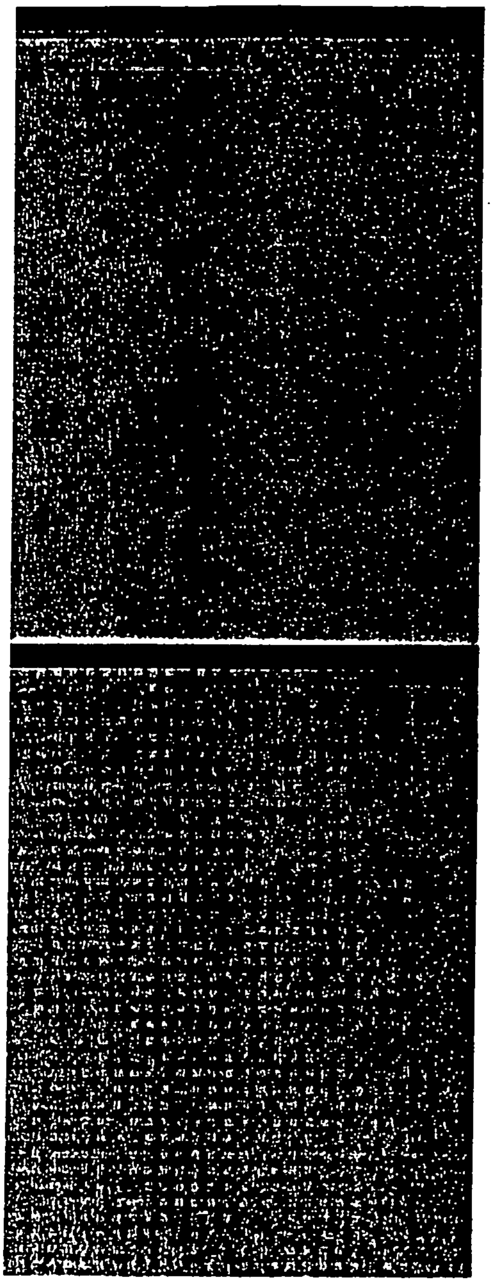

Fig. 9

Fig. 10

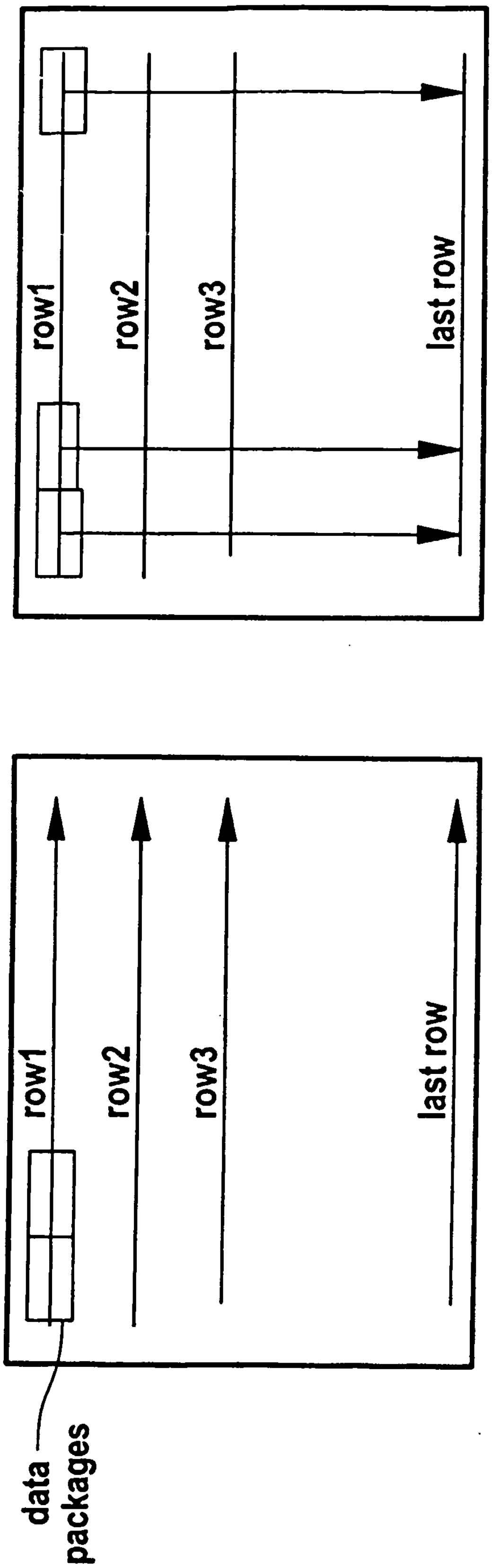
row1
row2
row3
last row
row1
row2
row3
last row
data packages

Fig. 11

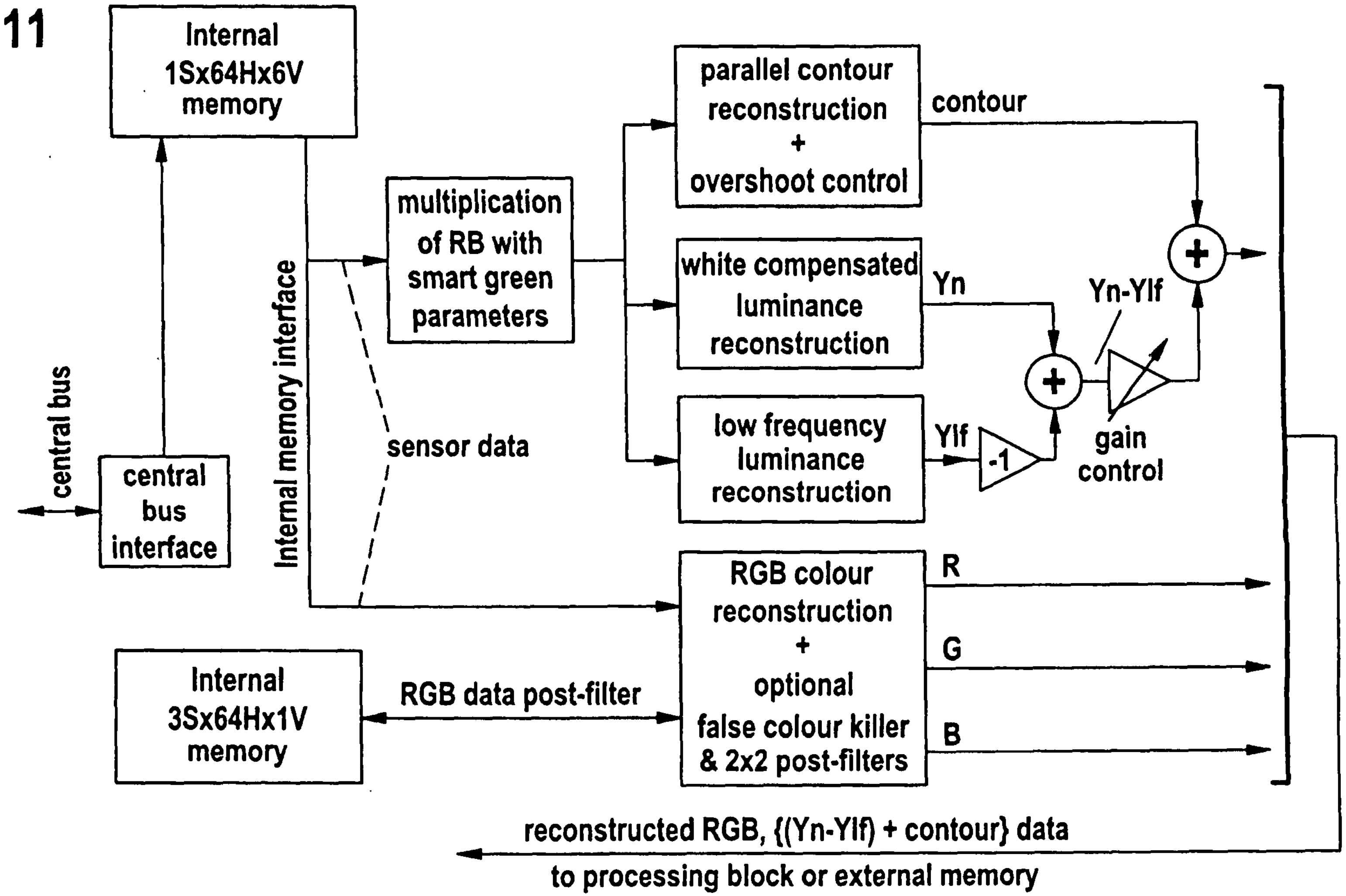
Internal 1Sx64Hx6V memory
central bus
central bus interface
Internal memory interface
multiplication of RB with smart green parameters
sensor data
parallel contour reconstruction + overshoot control
contour
white compensated luminance reconstruction
Yn
low frequency luminance reconstruction
Ylf
-1
Yn-Ylf
gain control
RGB colour reconstruction + optional false colour killer & 2x2 post-filters
R
G
B
Internal 3Sx64Hx1V memory
RGB data post-filter
reconstructed RGB, {(Yn-Ylf) + contour} data
to processing block or external memory

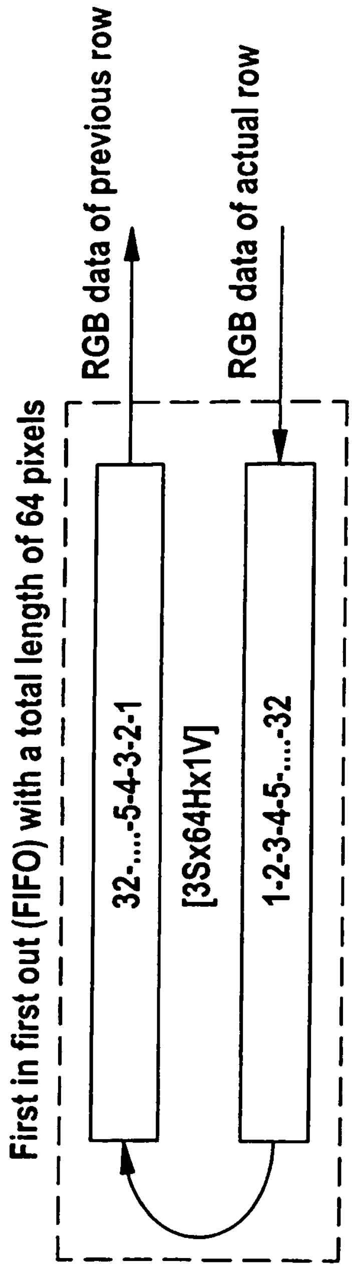
First in first out (FIFO) with a total length of 64 pixels
RGB data of previous row
RGB data of actual row
32-.....-5-4-3-2-1
[3Sx64Hx1V]
1-2-3-4-5-.....-32

Fig. 12

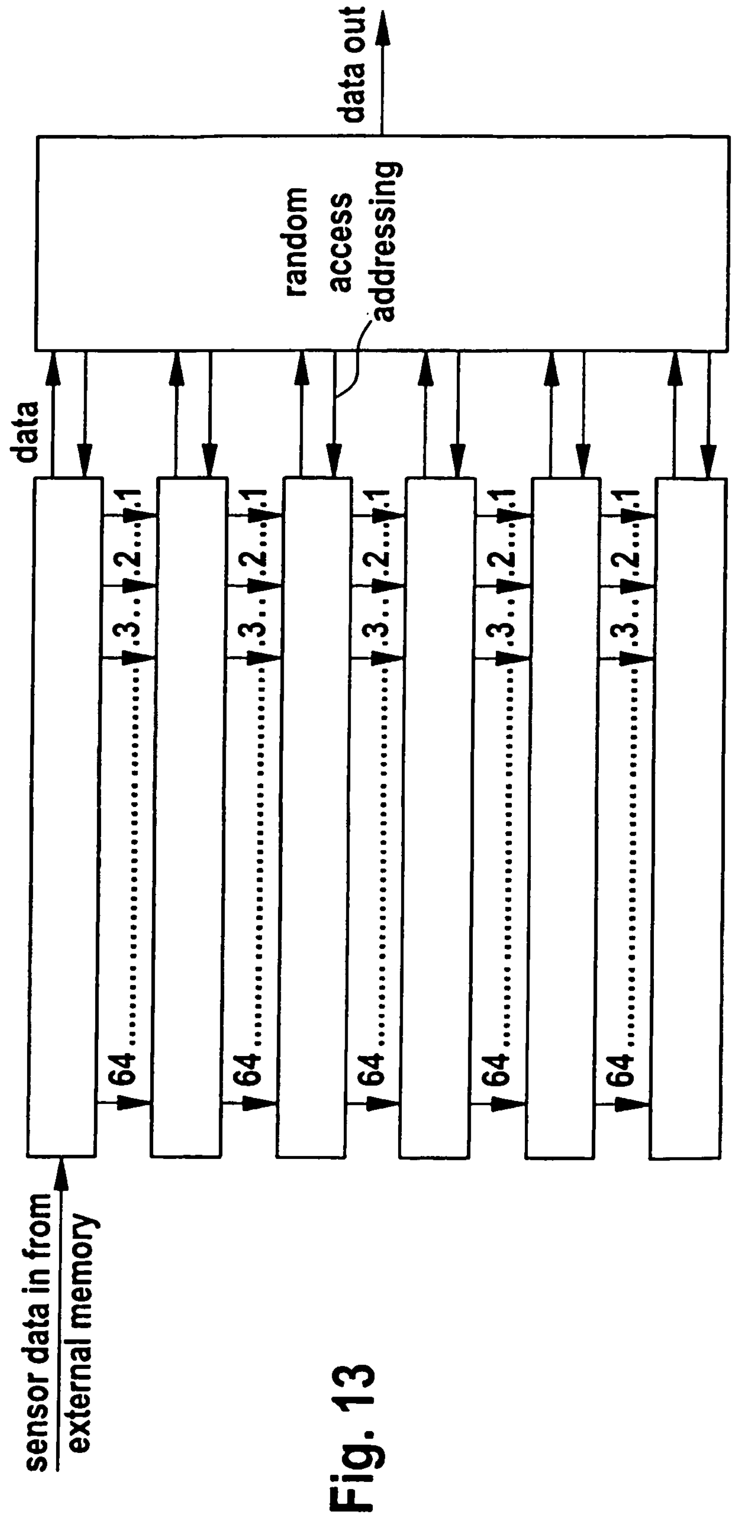
data out
random
access
addressing
data
1
2
3
64
sensor data in from
external memory

Fig. 13

Fig. 14

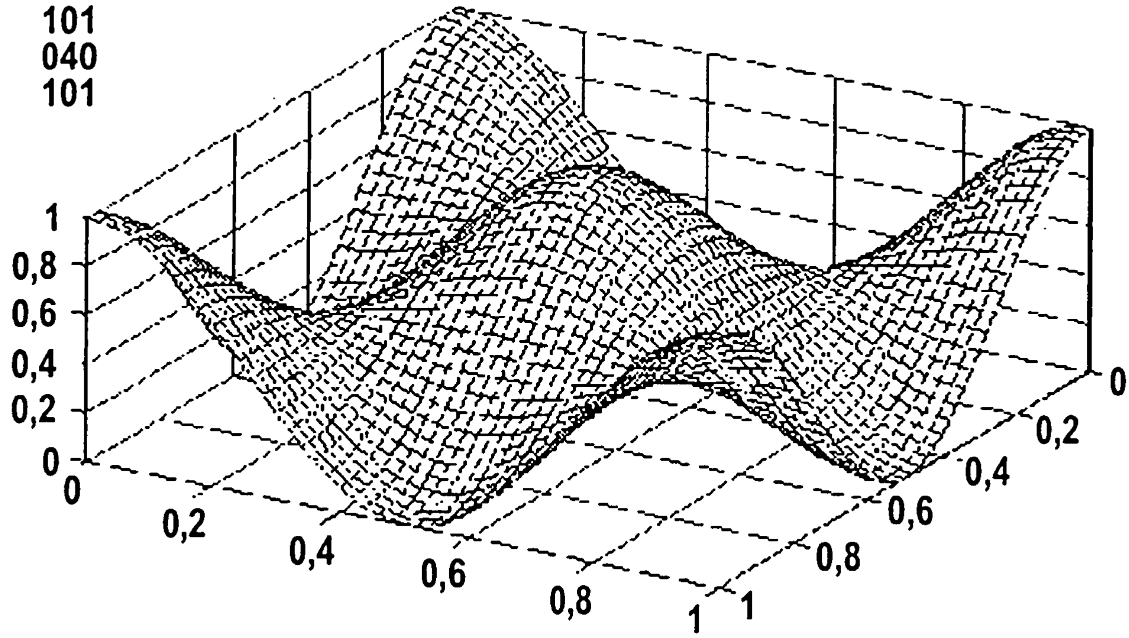
101
040
101
1
0,8
0,6
0,4
0,2
0
0
0,2
0,4
0,6
0,8
1
0
0,2
0,4
0,6
0,8
1

Fig. 15

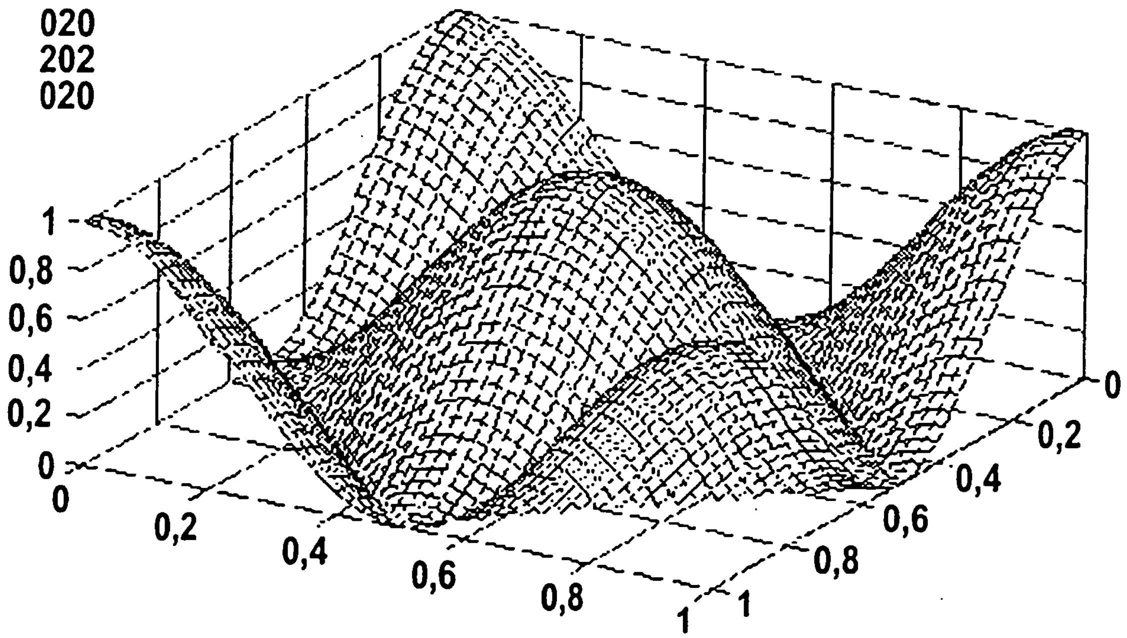
020
202
020
1
0,8
0,6
0,4
0,2
0
0
0,2
0,4
0,6
0,8
1
0
0,2
0,4
0,6
0,8
1

Fig. 16

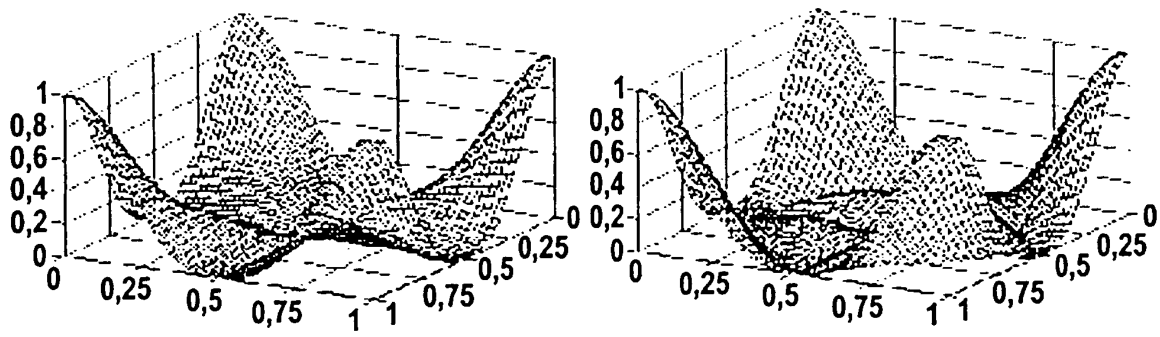
1
0,8
0,6
0,4
0,2
0
0
0,25
0,5
0,75
1
1
0,75
0,5
0,25
0
1
0,8
0,6
0,4
0,2
0
0
0,25
0,5
0,75
1
1
0,75
0,5
0,25
0

Fig. 17

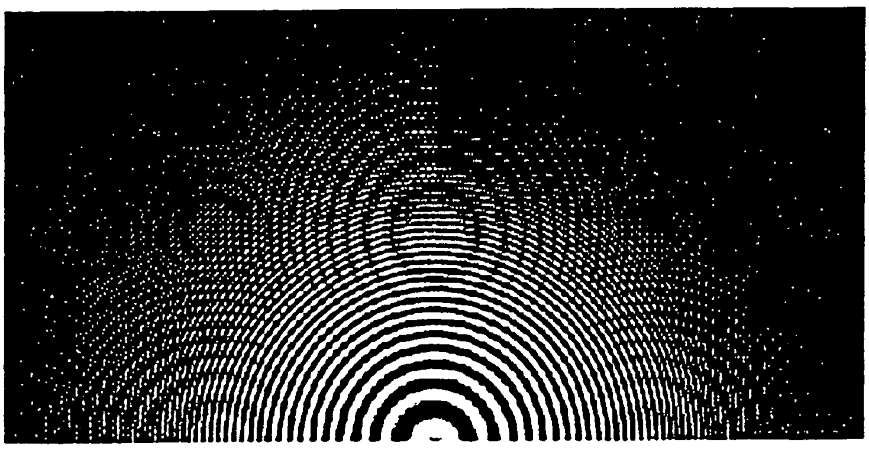

Fig. 18

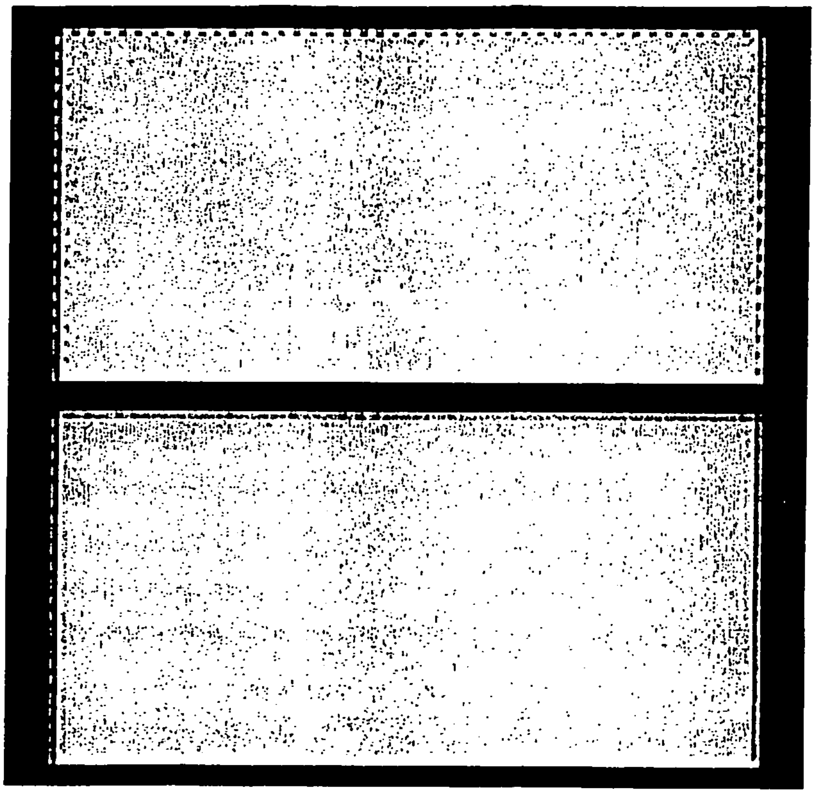

Fig. 19

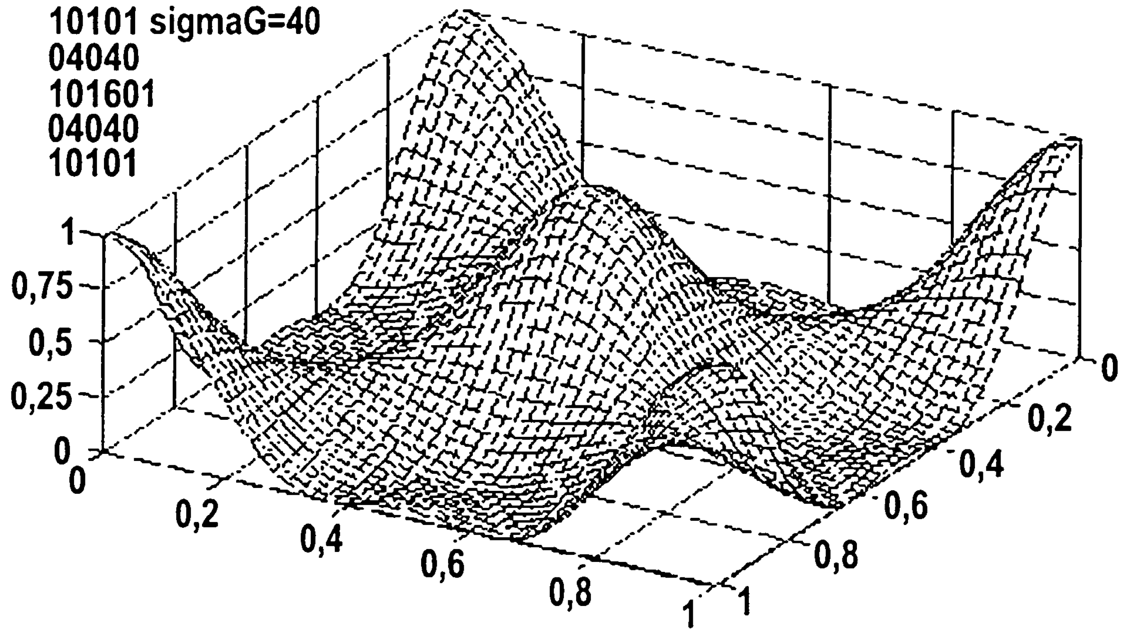
10101 sigmaG=40
04040
101601
04040
10101
1
0,75
0,5
0,25
0
0
0,2
0,4
0,6
0,8
1
1
0,8
0,6
0,4
0,2
0

Fig. 20

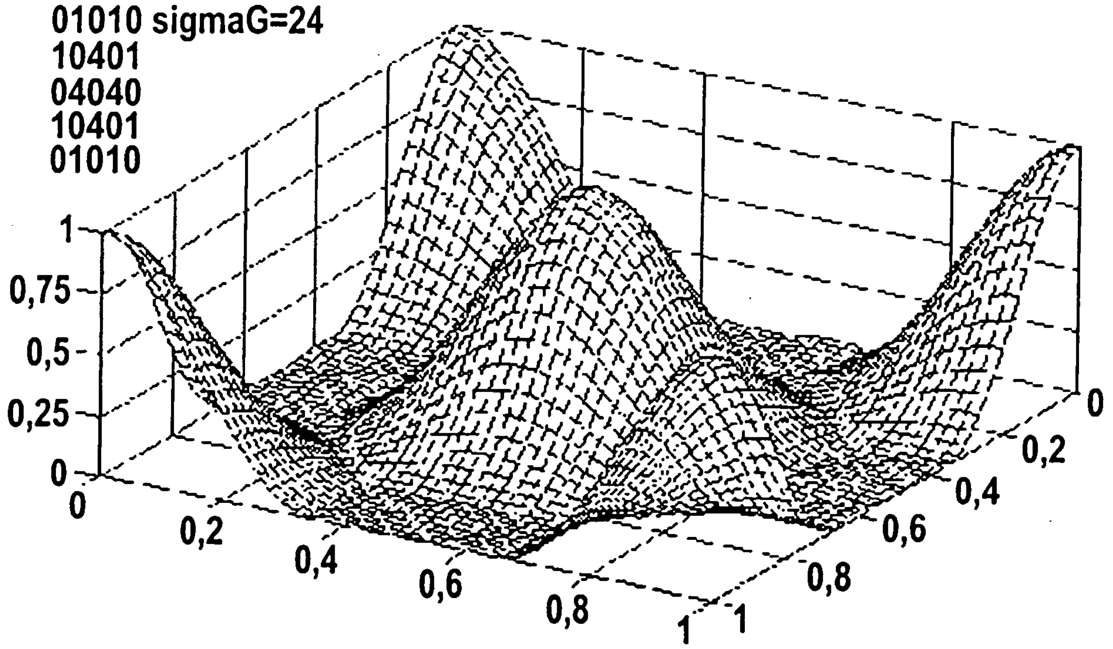
01010 sigmaG=24
10401
04040
10401
01010
1
0,75
0,5
0,25
0
0
0,2
0,4
0,6
0,8
1
1
0,8
0,6
0,4
0,2
0

Fig. 21

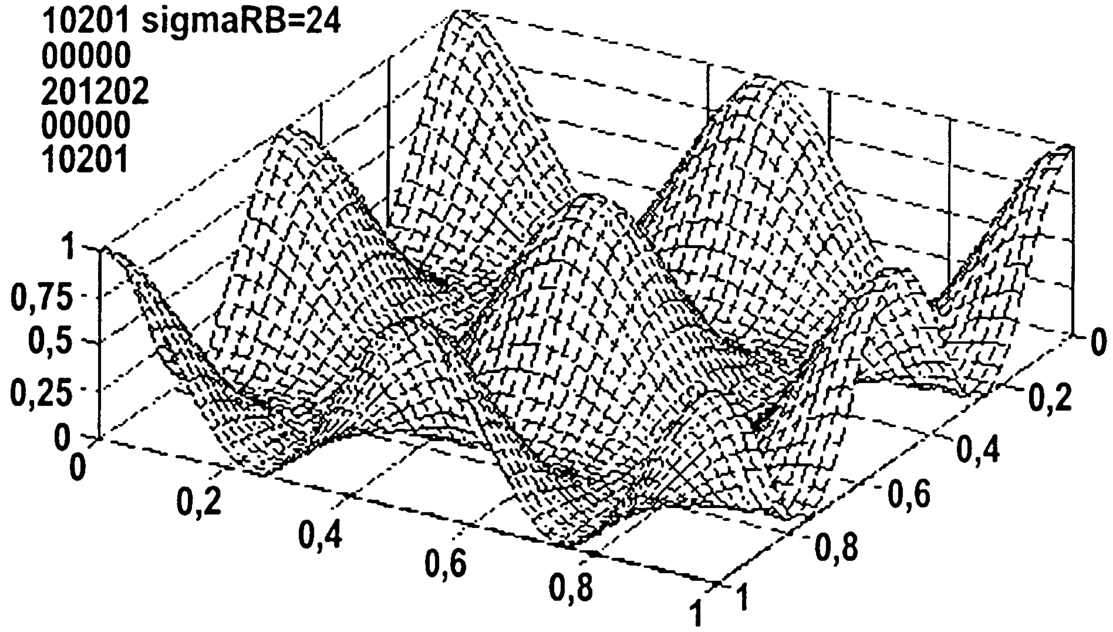
10201 sigmaRB=24
00000
201202
00000
10201
1
0,75
0,5
0,25
0
0
0,2
0,4
0,6
0,8
1
0
0,2
0,4
0,6
0,8
1

Fig. 22

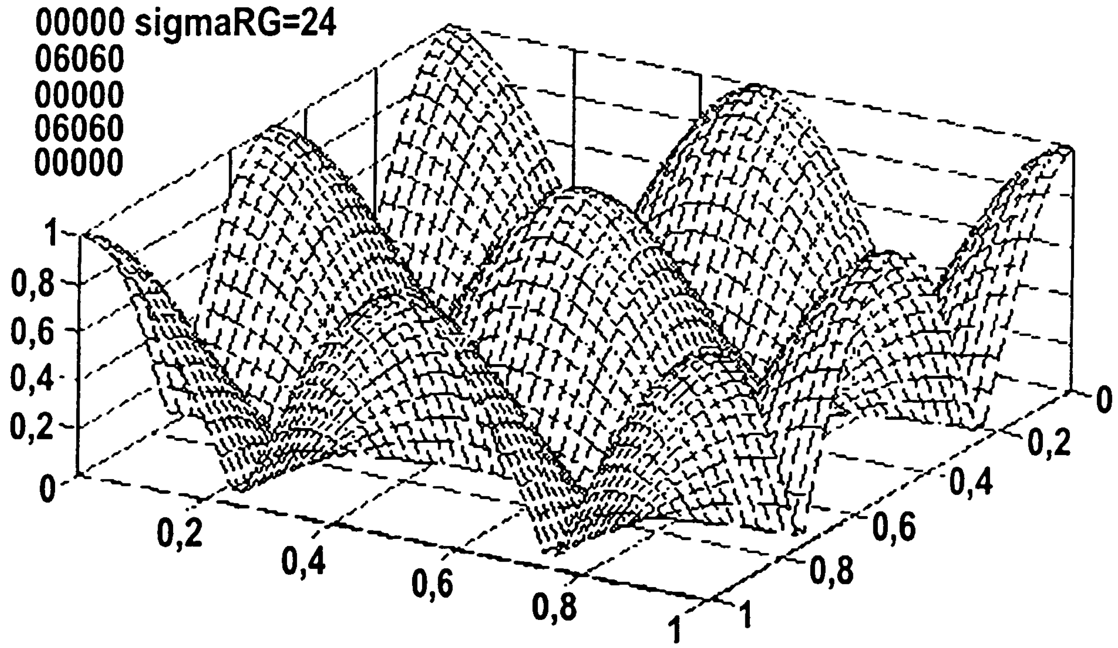
00000 sigmaRG=24
06060
00000
06060
00000
1
0,8
0,6
0,4
0,2
0
0,2
0,4
0,6
0,8
1
0
0,2
0,4
0,6
0,8
1

Fig. 23

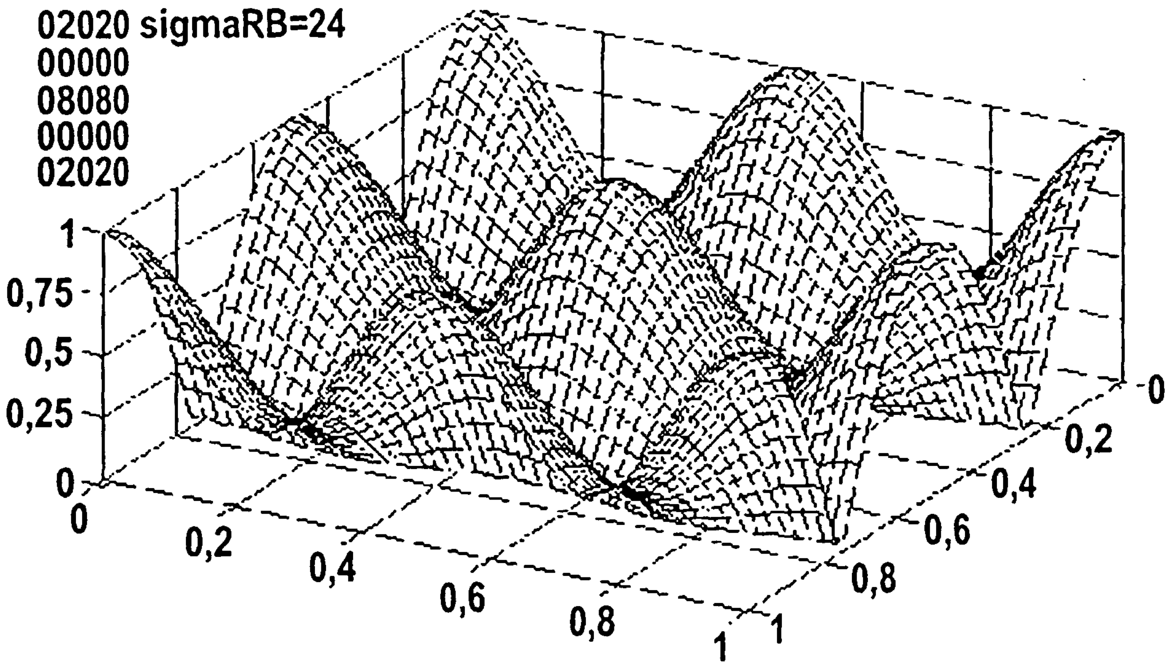
02020 sigmaRB=24
00000
08080
00000
02020
1
0,75
0,5
0,25
0
0
0,2
0,4
0,6
0,8
1
1
0,8
0,6
0,4
0,2
0

Fig. 24

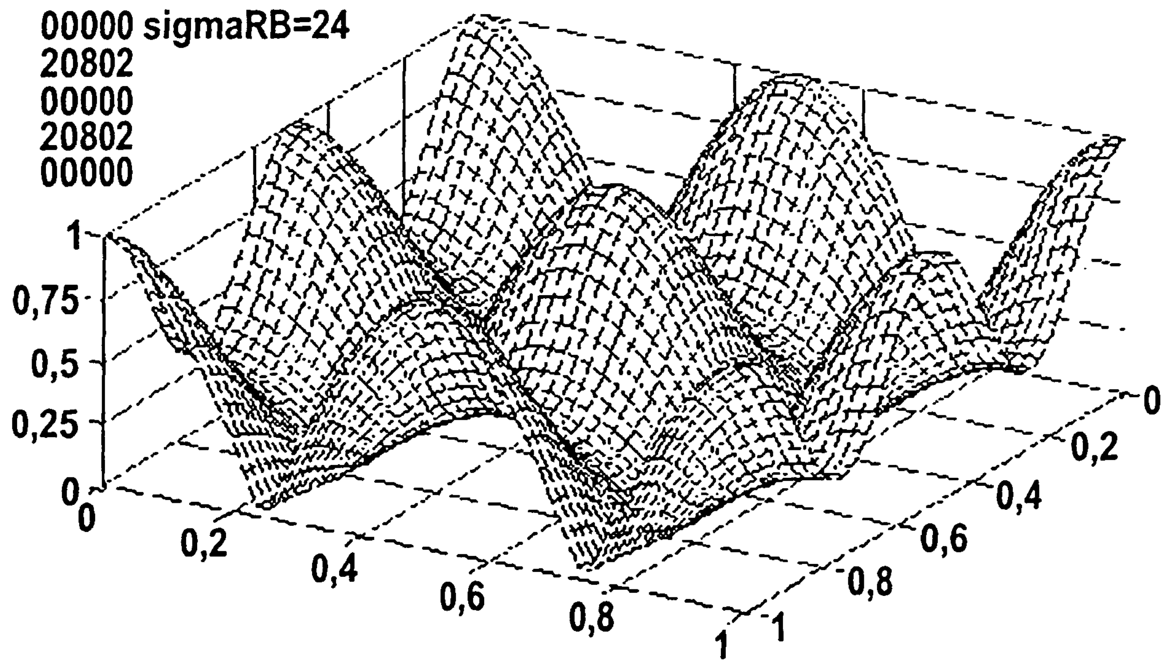
00000 sigmaRB=24
20802
00000
20802
00000
1
0,75
0,5
0,25
0
0
0,2
0,4
0,6
0,8
1
1
0,8
0,6
0,4
0,2
0

Fig. 25

| | | | | | |
|---|---|---|---|---|---|
| | | | | | |
| | 3 | 5 | 3 | 5 | 3 |
| | 5 | 12 | 20 | 12 | 5 |
| | 3 | 20 | 48 | 20 | 5 |
| | 5 | 12 | 20 | 12 | 5 |
| | 3 | 5 | 3 | 5 | 3 |

sigmaG = 120

| | | | | | |
|---|---|---|---|---|---|
| | | | | | |
| | 1 | 2 | 2 | 2 | 1 |
| | 2 | 6 | 8 | 6 | 2 |
| | 2 | 8 | 12 | 8 | 2 |
| | 2 | 6 | 8 | 6 | 2 |
| | 1 | 2 | 2 | 2 | 1 |

sigmaR/B = 24

Fig. 26

| | | | | | |
|---|---|---|---|---|---|
| | | | | | |
| | 3 | 5 | 3 | 5 | 3 |
| | 5 | 12 | 20 | 12 | 5 |
| | 3 | 20 | 48 | 20 | 5 |
| | 5 | 12 | 20 | 12 | 5 |
| | 3 | 5 | 3 | 5 | 3 |

sigmaG = 120

| | | | | | |
|---|---|---|---|---|---|
| | | | | | |
| | 2 | 4 | 4 | 4 | 2 |
| | 4 | 8 | 8 | 8 | 4 |
| | 4 | 8 | 8 | 8 | 4 |
| | 4 | 8 | 8 | 8 | 4 |
| | 2 | 4 | 4 | 4 | 2 |

sigmaR/B = 24

Fig. 27

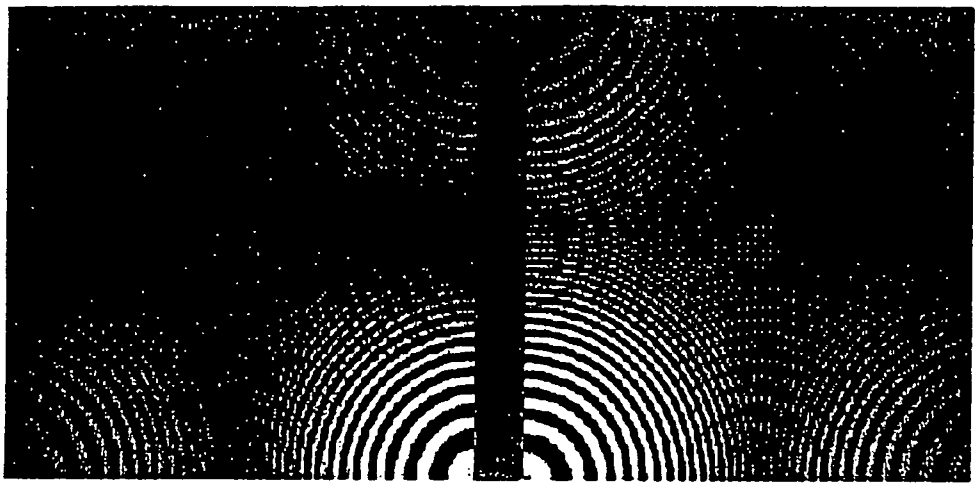

Fig. 28

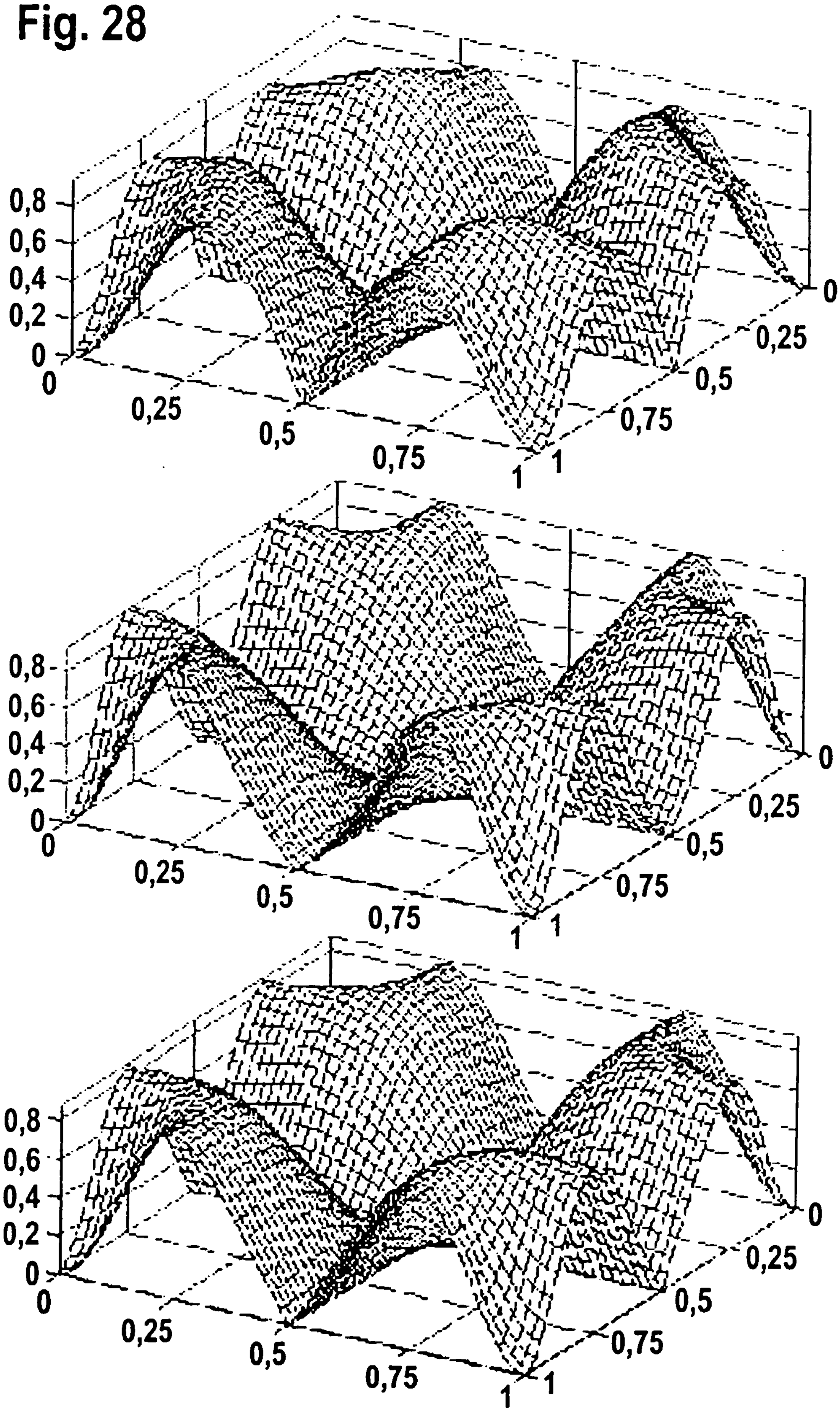
0,8
0,6
0,4
0,2
0
0
0,25
0,5
0,75
1
0
0,25
0,5
0,75
1
0,8
0,6
0,4
0,2
0
0
0,25
0,5
0,75
1
0
0,25
0,5
0,75
1
0,8
0,6
0,4
0,2
0
0
0,25
0,5
0,75
1
0
0,25
0,5
0,75
1

Fig. 29

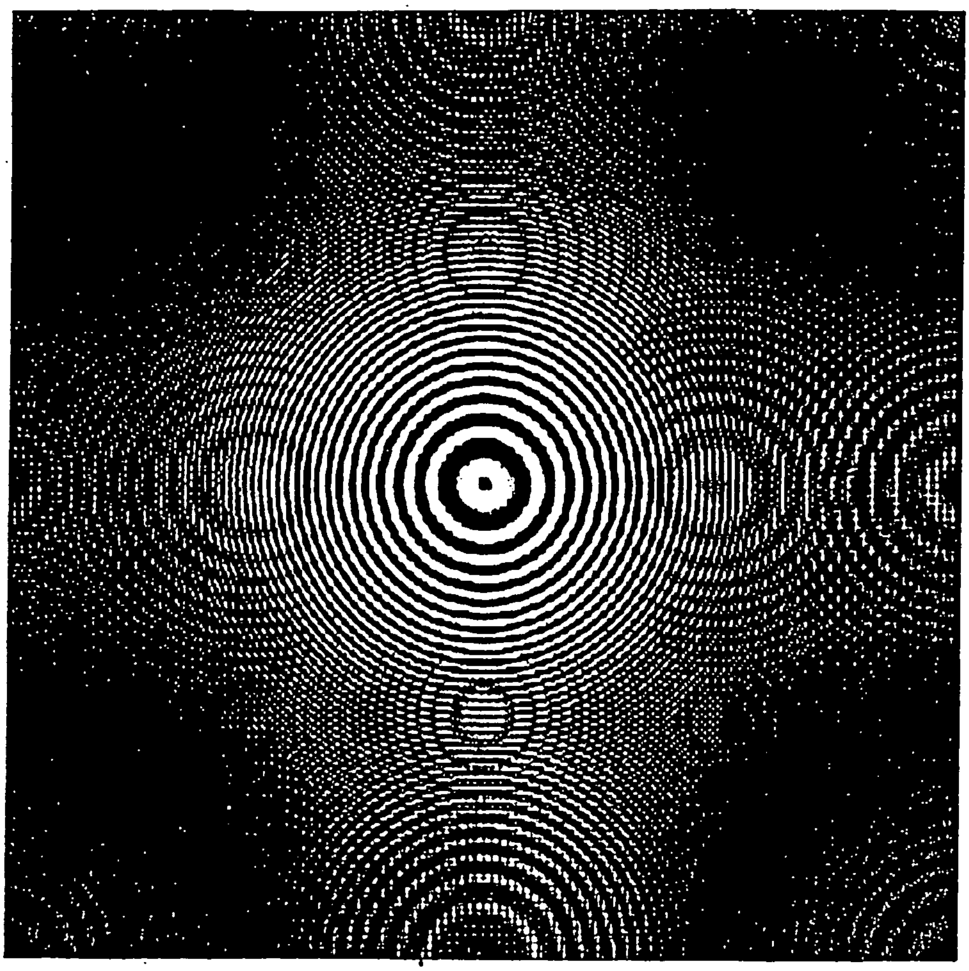

Fig. 30

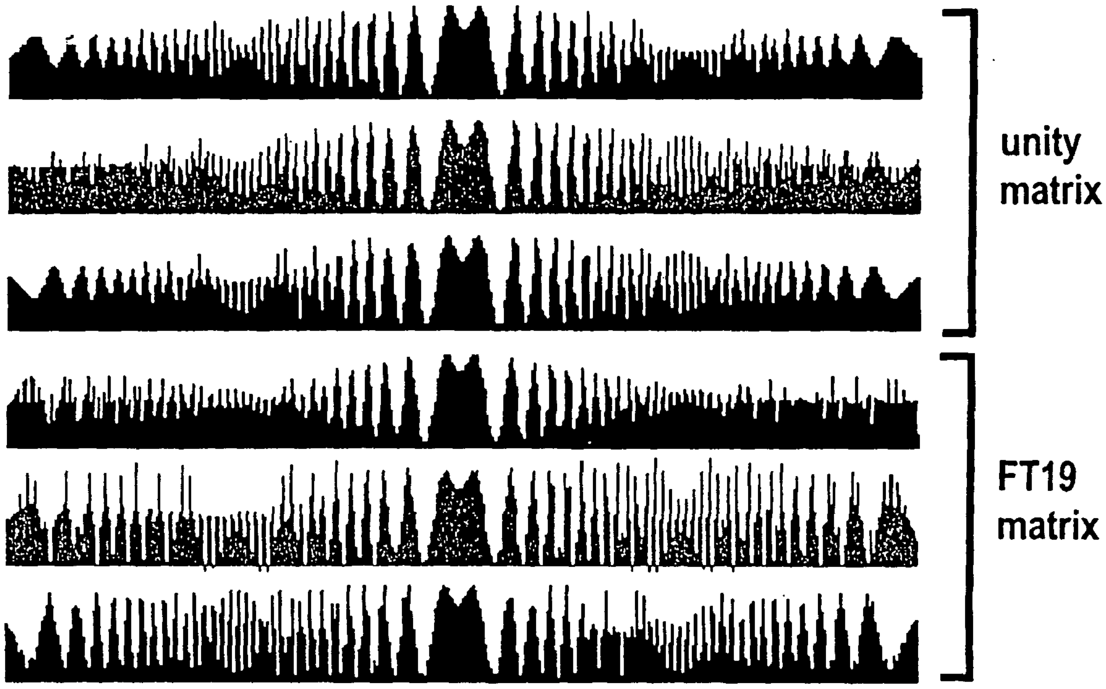

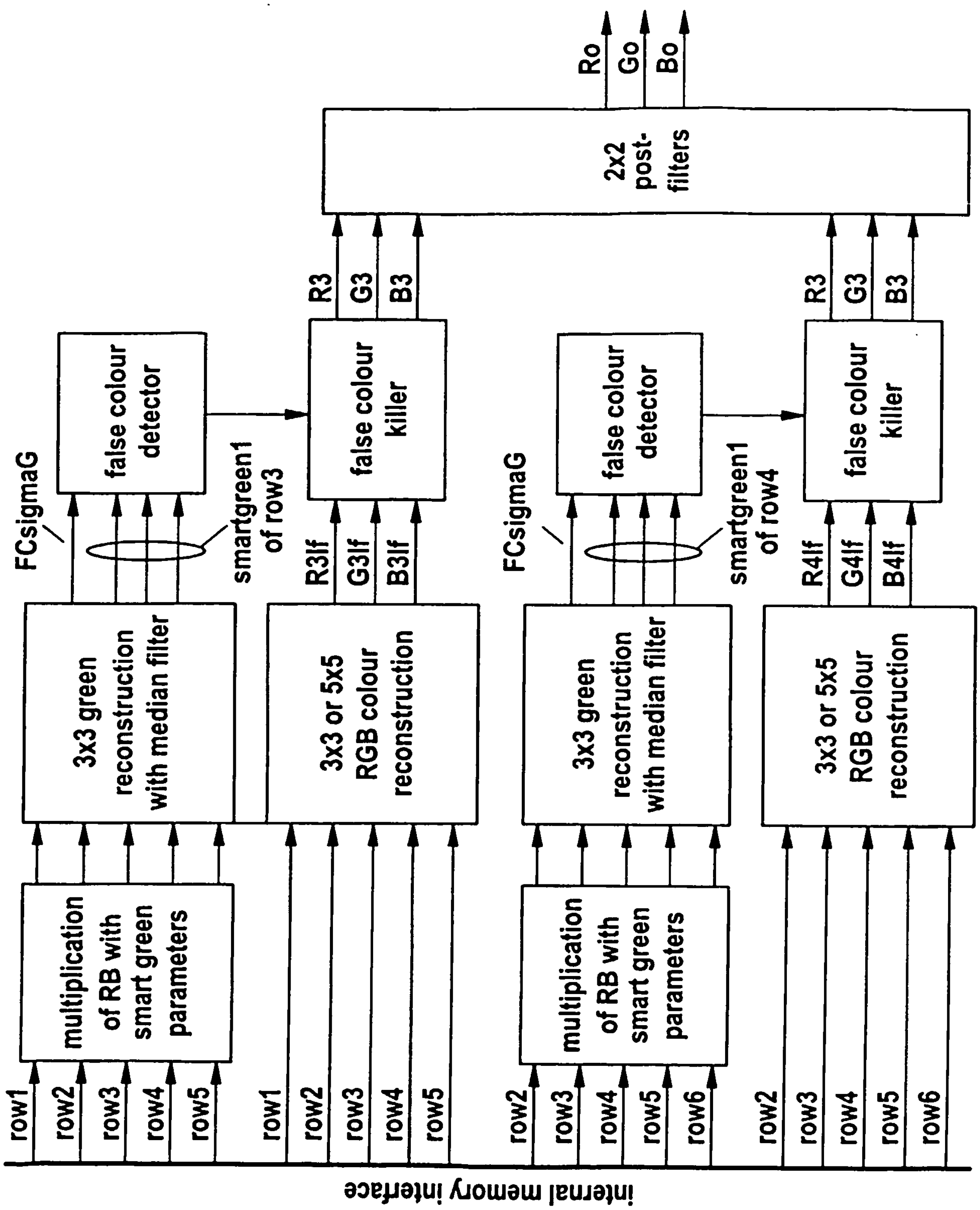
internal memory interface
row1
row2
row3
row4
row5
multiplication of RB with smart green parameters
3x3 green reconstruction with median filter
FCsigmaG
smartgreen1 of row3
false colour detector
row1
row2
row3
row4
row5
3x3 or 5x5 RGB colour reconstruction
R3lf
G3lf
B3lf
false colour killer
R3
G3
B3
row2
row3
row4
row5
row6
multiplication of RB with smart green parameters
3x3 green reconstruction with median filter
FCsigmaG
smartgreen1 of row4
false colour detector
row2
row3
row4
row5
row6
3x3 or 5x5 RGB colour reconstruction
R4lf
G4lf
B4lf
false colour killer
R3
G3
B3
2x2 post-filters
Ro
Go
Bo

Fig. 31

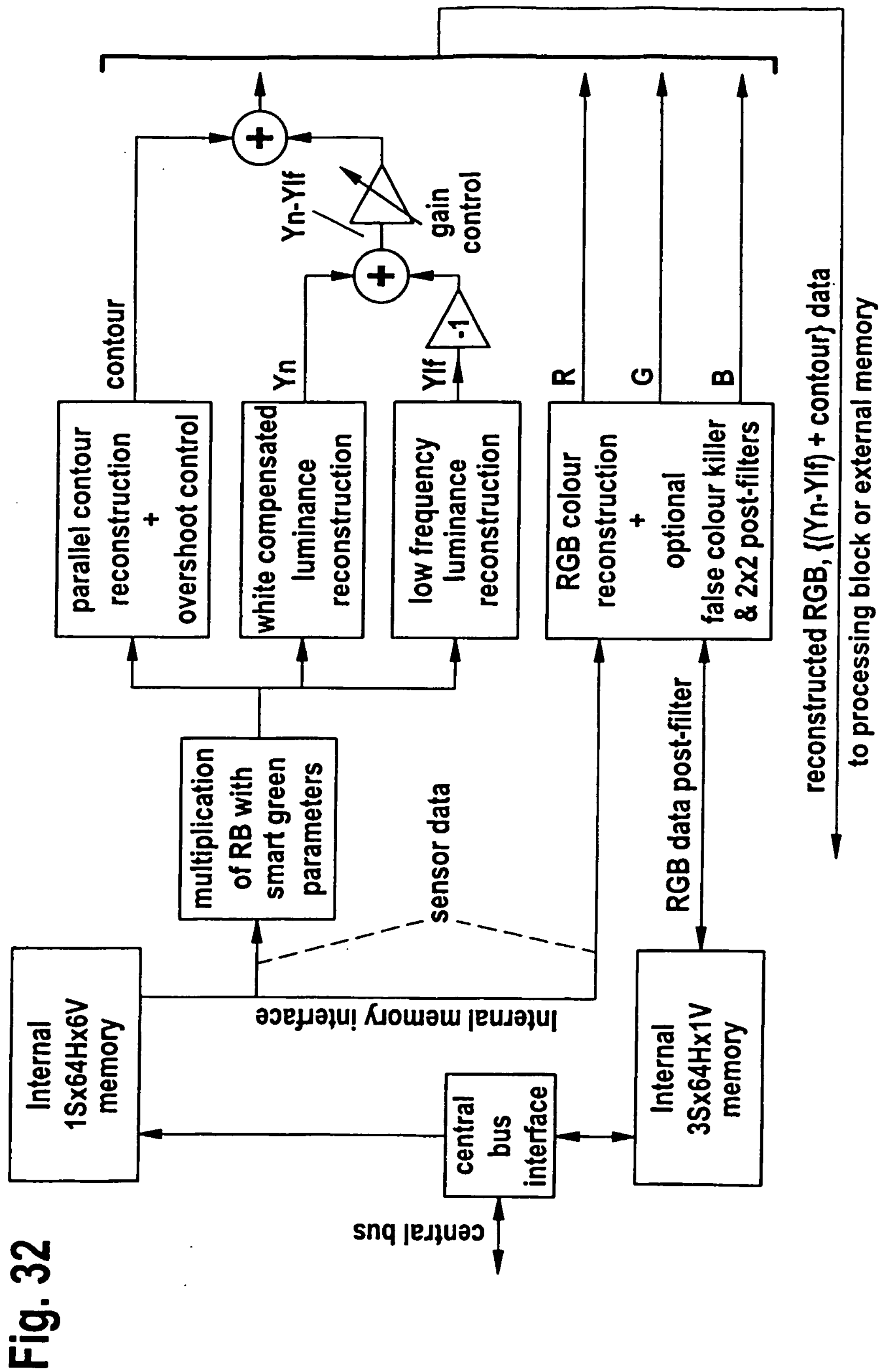
Internal 1Sx64Hx6V memory
central bus interface
central bus
Internal 3Sx64Hx1V memory
Internal memory interface
sensor data
multiplication of RB with smart green parameters
RGB data post-filter
parallel contour reconstruction + overshoot control
white compensated luminance reconstruction
low frequency luminance reconstruction
RGB colour reconstruction + optional false colour killer & 2x2 post-filters
contour
Yn
Ylf
-1
Yn-Ylf
gain control
R
G
B
reconstructed RGB, {(Yn-Ylf) + contour} data
to processing block or external memory

Fig. 32

Fig. 33

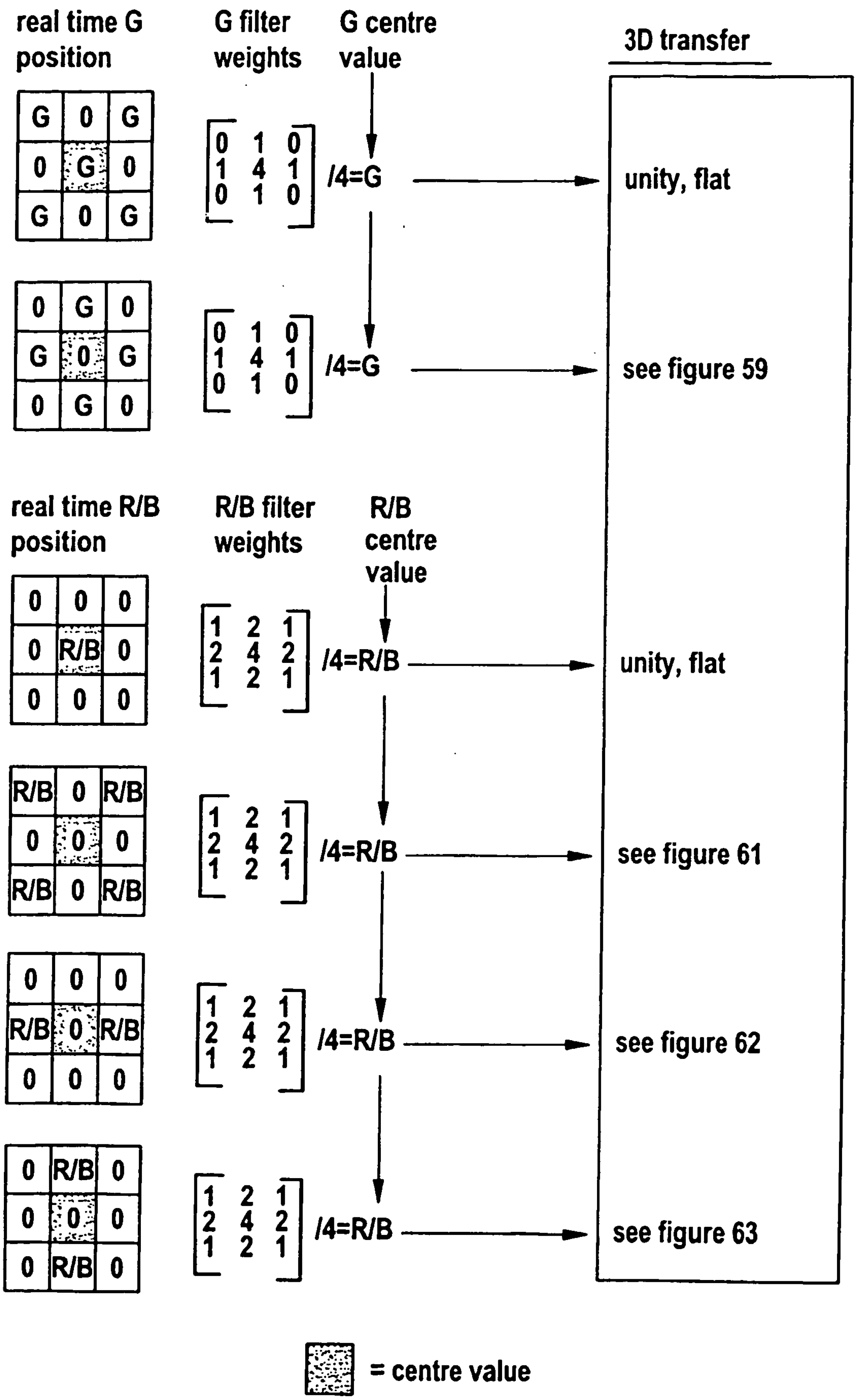
real time G position
G filter weights
G centre value
3D transfer
G 0 G
0 G 0
G 0 G
0 1 0
1 4 1
0 1 0
/4=G
unity, flat
0 G 0
G 0 G
0 G 0
/4=G
see figure 59
real time R/B position
R/B filter weights
R/B centre value
1 2 1
2 4 2
1 2 1
/4=R/B
unity, flat
see figure 61
see figure 62
see figure 63
= centre value

Fig. 34

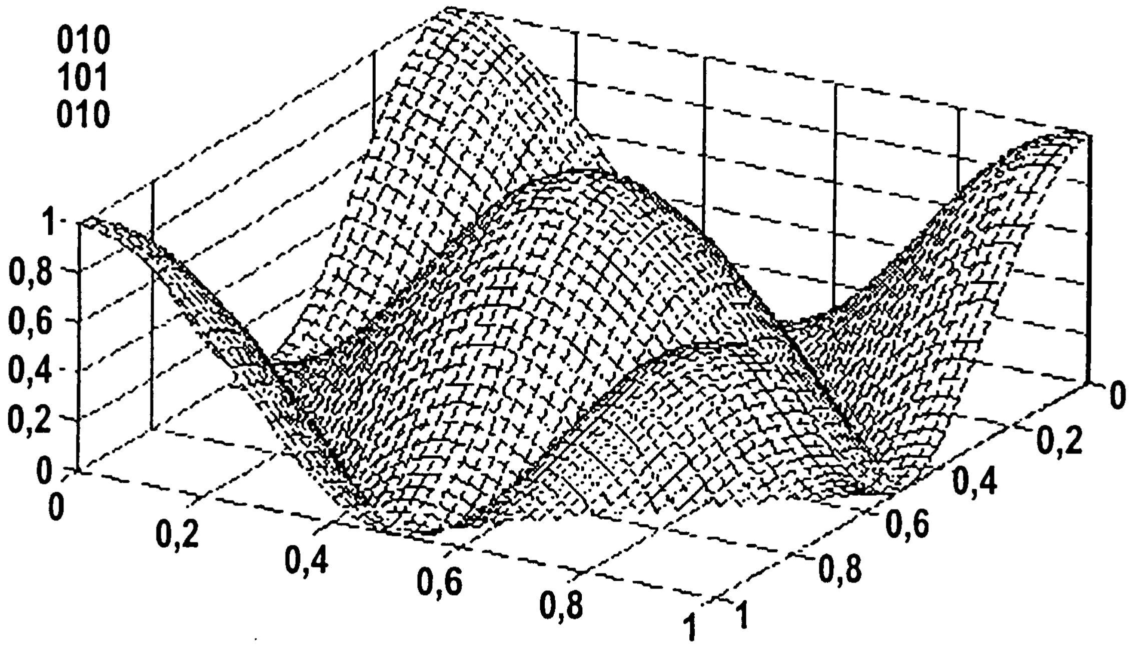

Fig. 35

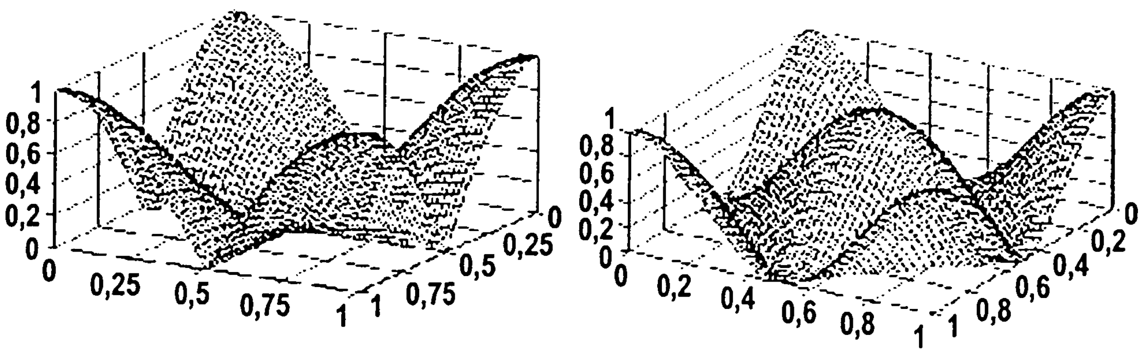
1
0,8
0,6
0,4
0,2
0
0
0,25
0,5
0,75
1
1
0,75
0,5
0,25
0
1
0,8
0,6
0,4
0,2
0
0
0,2
0,4
0,6
0,8
1
1
0,8
0,6
0,4
0,2
0

Fig. 36

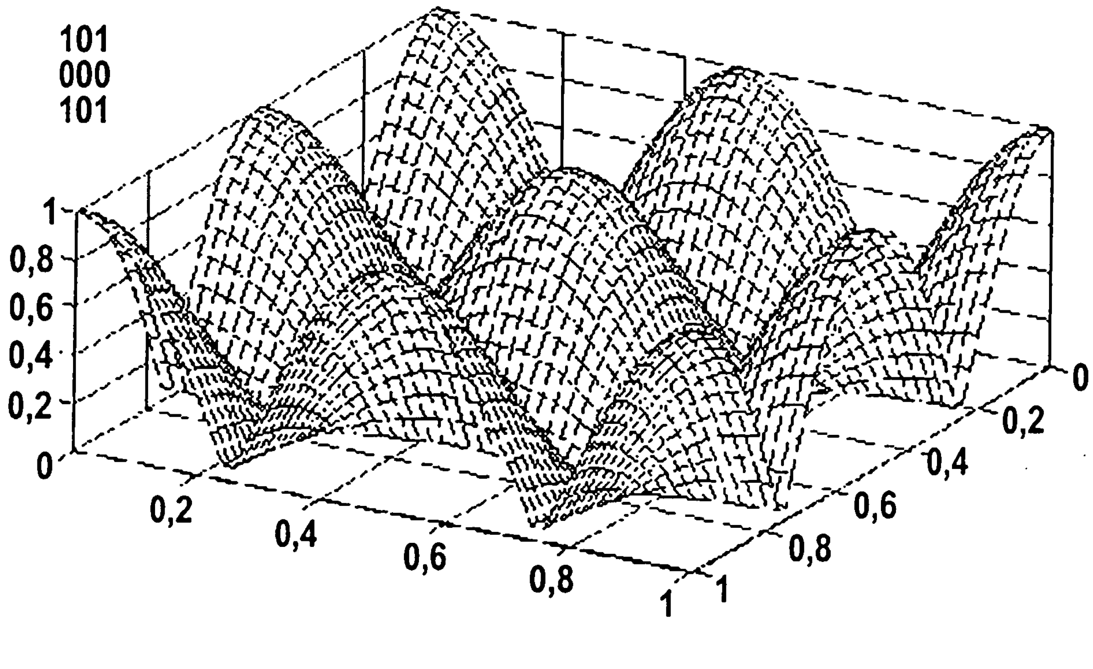
101
000
101
1
0,8
0,6
0,4
0,2
0
0,2
0,4
0,6
0,8
1
1
0,8
0,6
0,4
0,2
0

Fig. 37

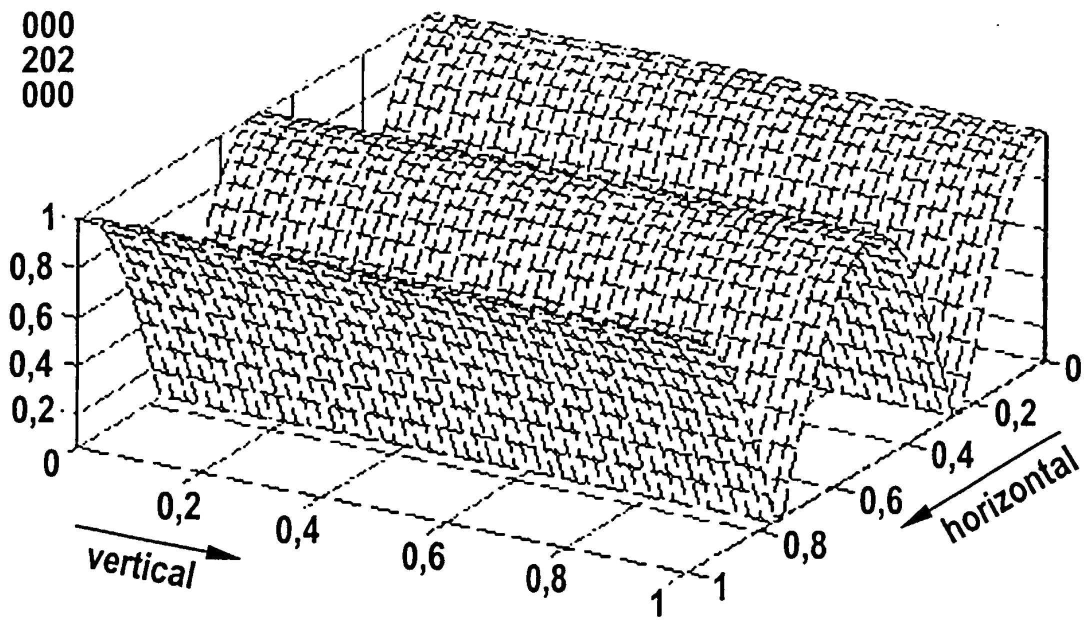
000
202
000
1
0,8
0,6
0,4
0,2
0
0,2
0,4
0,6
0,8
1
vertical
0
0,2
0,4
0,6
0,8
1
horizontal

Fig. 38

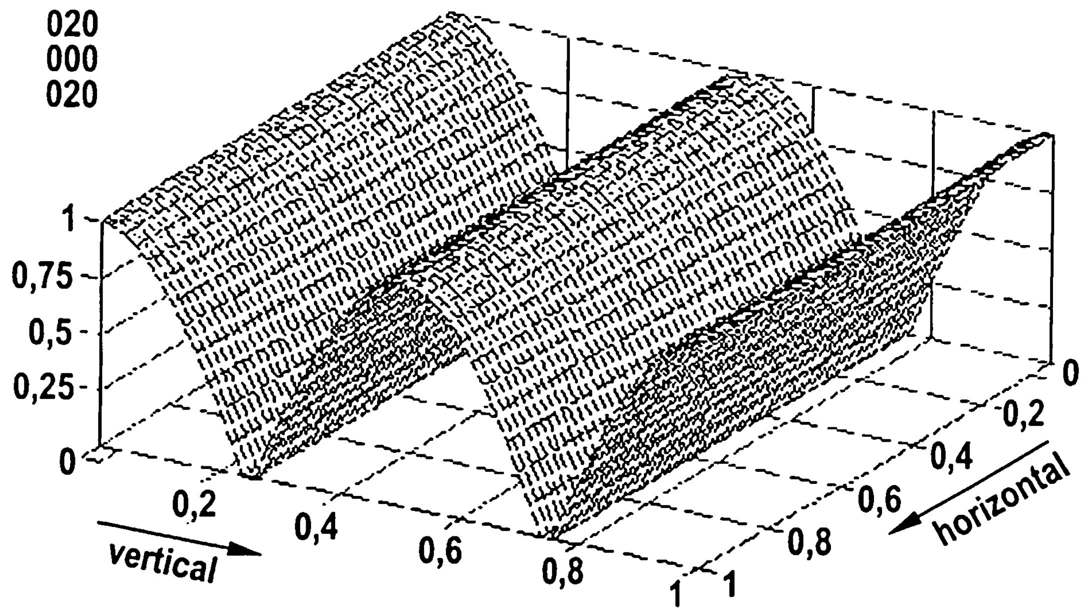
020
000
020
1
0,75
0,5
0,25
0
0,2
0,4
0,6
0,8
1
vertical
0
0,2
0,4
0,6
0,8
1
horizontal

Fig. 39

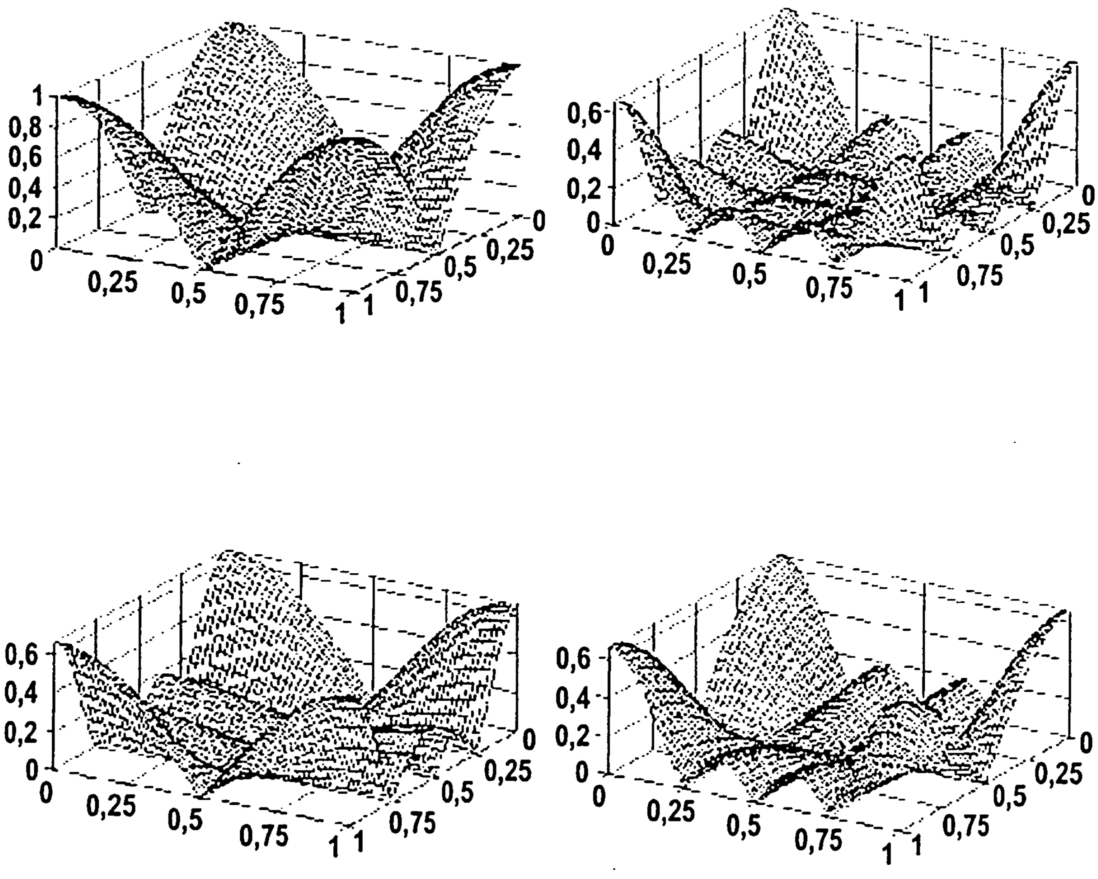
1
0,8
0,6
0,4
0,2
0
0,25
0,5
0,75
1
0
0,25
0,5
0,75
1
0,6
0,4
0,2
0
0
0,25
0,5
0,75
1
0
0,25
0,5
0,75
1
0,6
0,4
0,2
0
0
0,25
0,5
0,75
1
0
0,25
0,5
0,75
1
0,6
0,4
0,2
0
0
0,25
0,5
0,75
1
0
0,25
0,5
0,75
1

Fig. 40

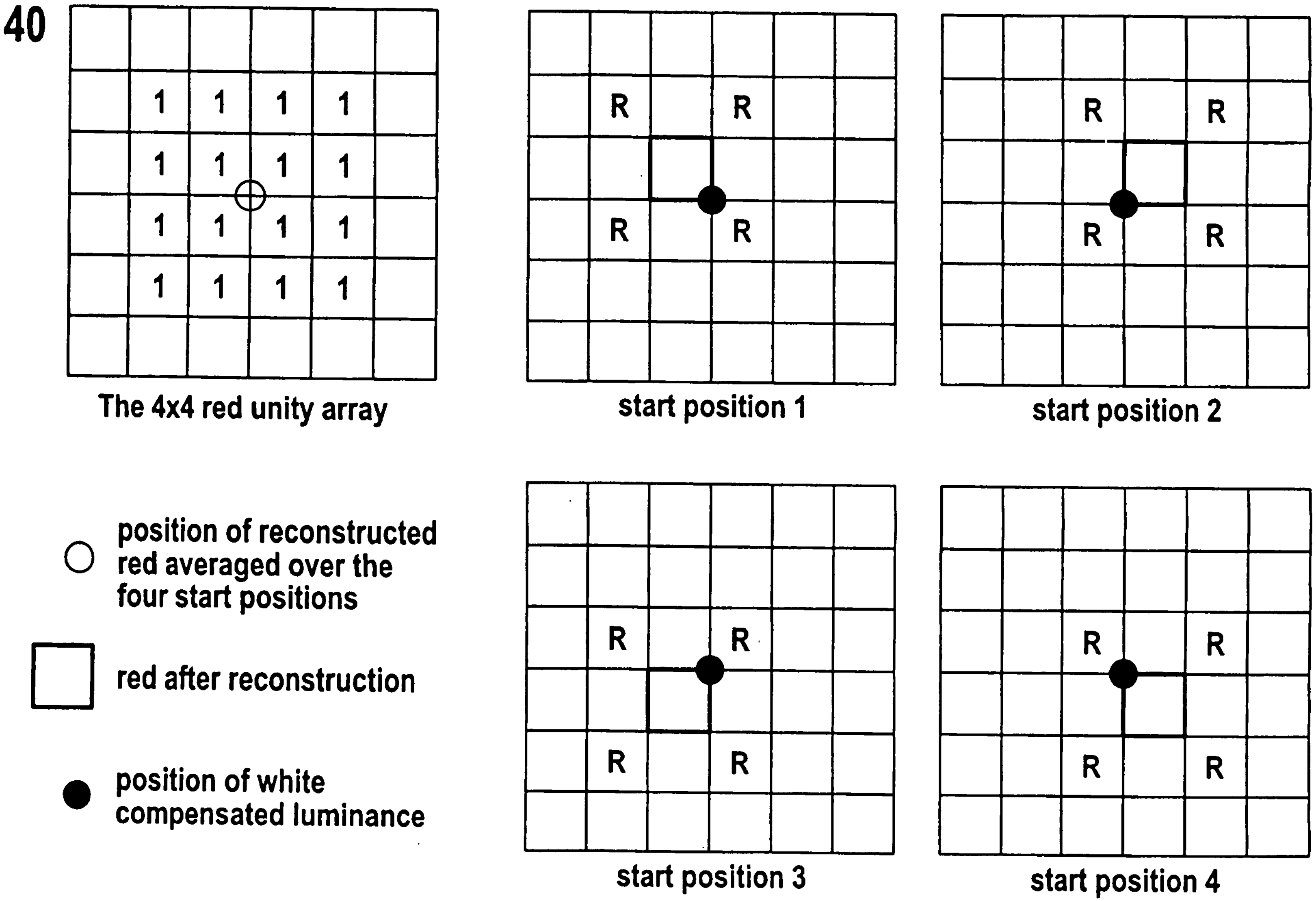
1 1 1 1
1 1 1 1
1 1 1 1
1 1 1 1
The 4x4 red unity array
R R
R R
start position 1
R R
R R
start position 2
R R
R R
start position 3
R R
R R
start position 4
position of reconstructed red averaged over the four start positions
red after reconstruction
position of white compensated luminance

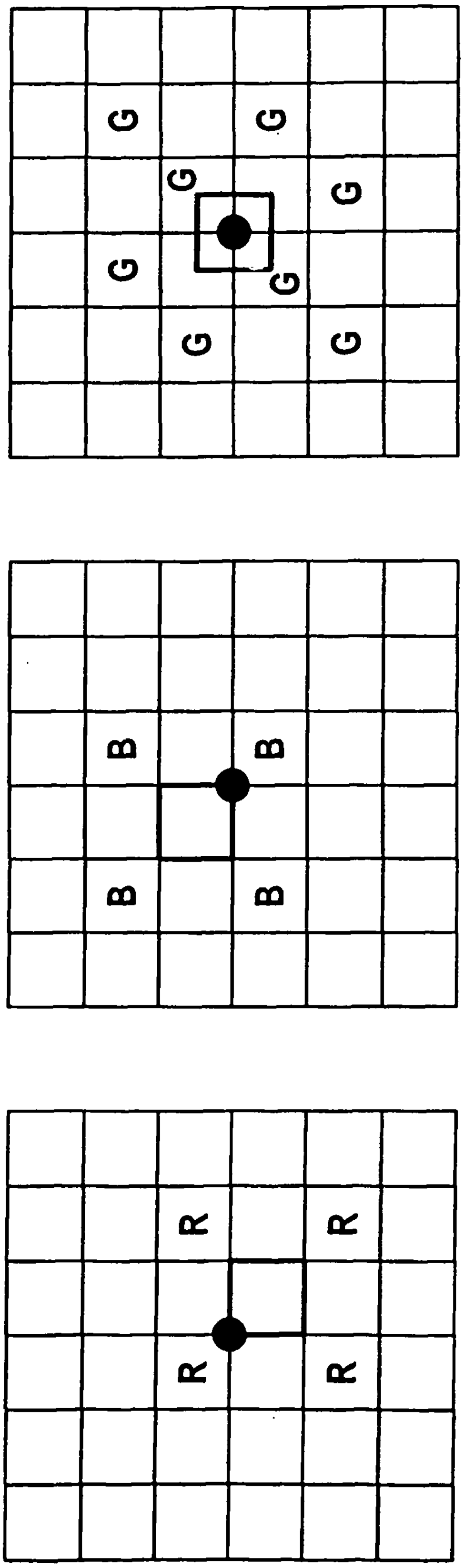


Fig. 41

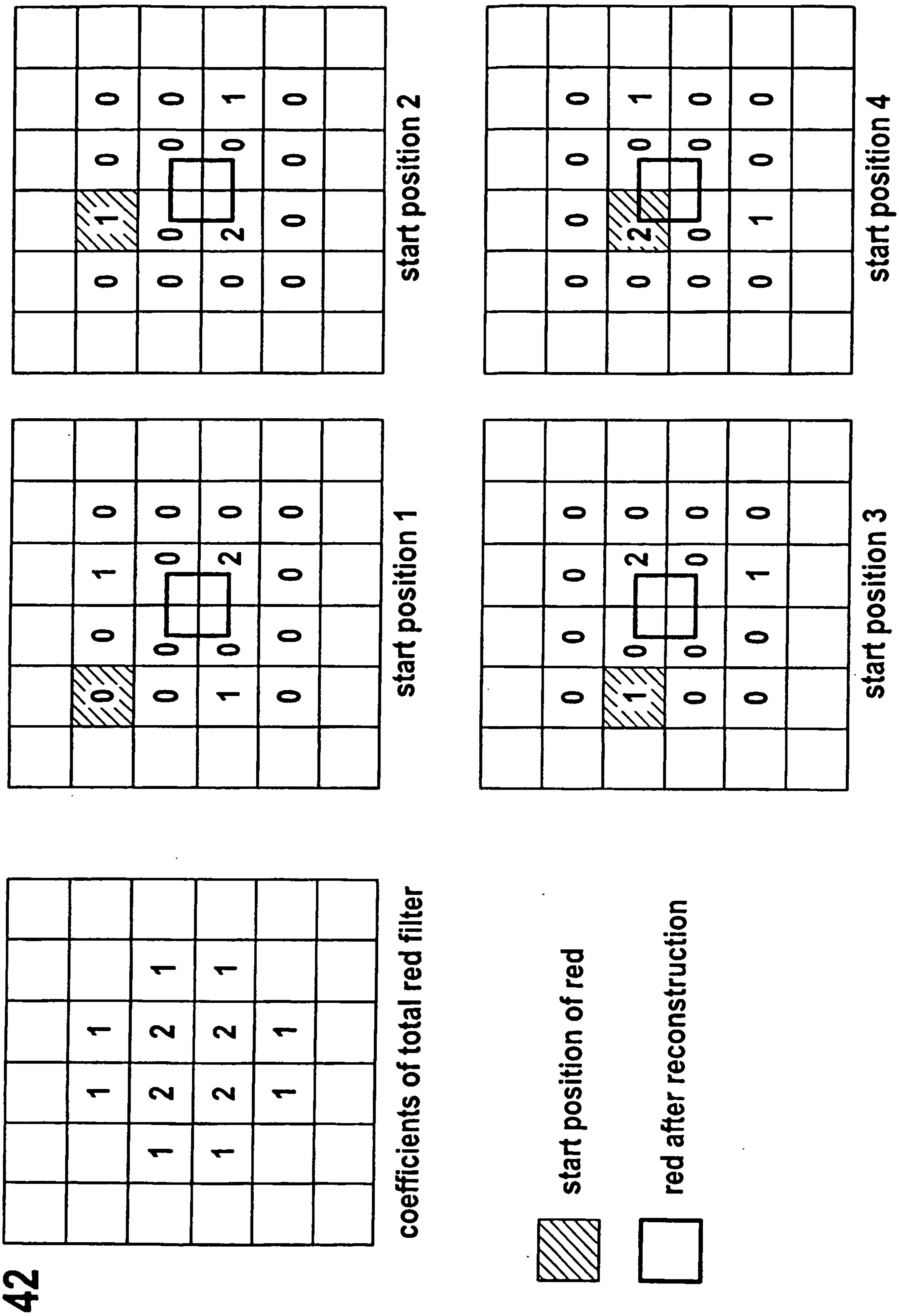
start position 2
start position 4
start position 1
start position 3
coefficients of total red filter
start position of red
red after reconstruction

Fig. 42

Fig. 43

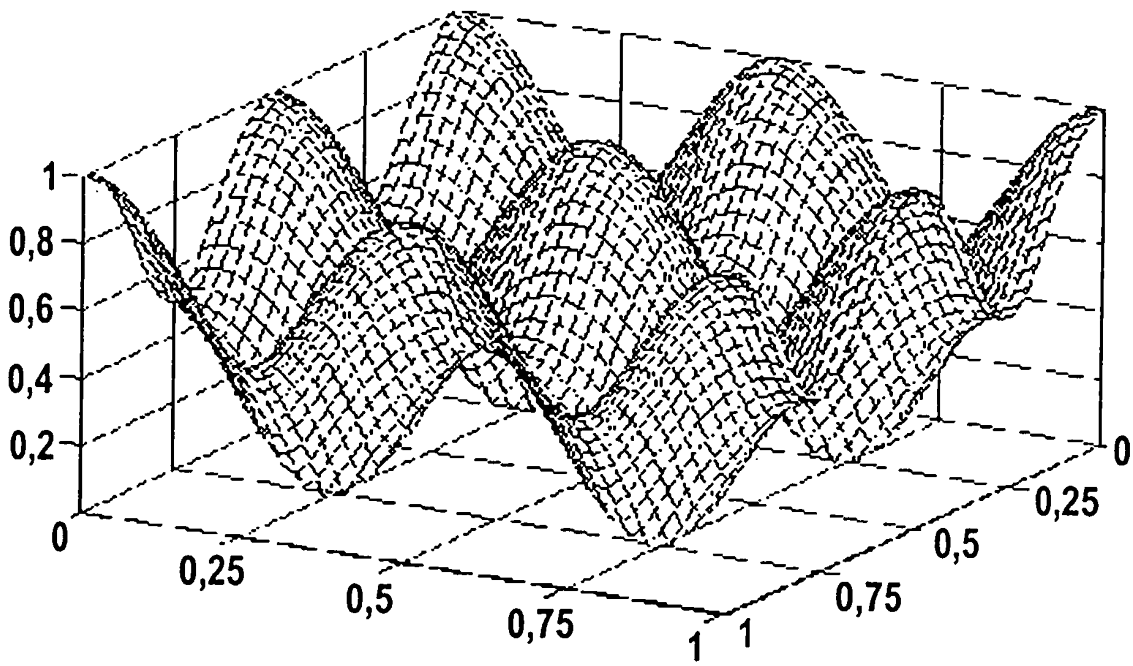

Fig. 44

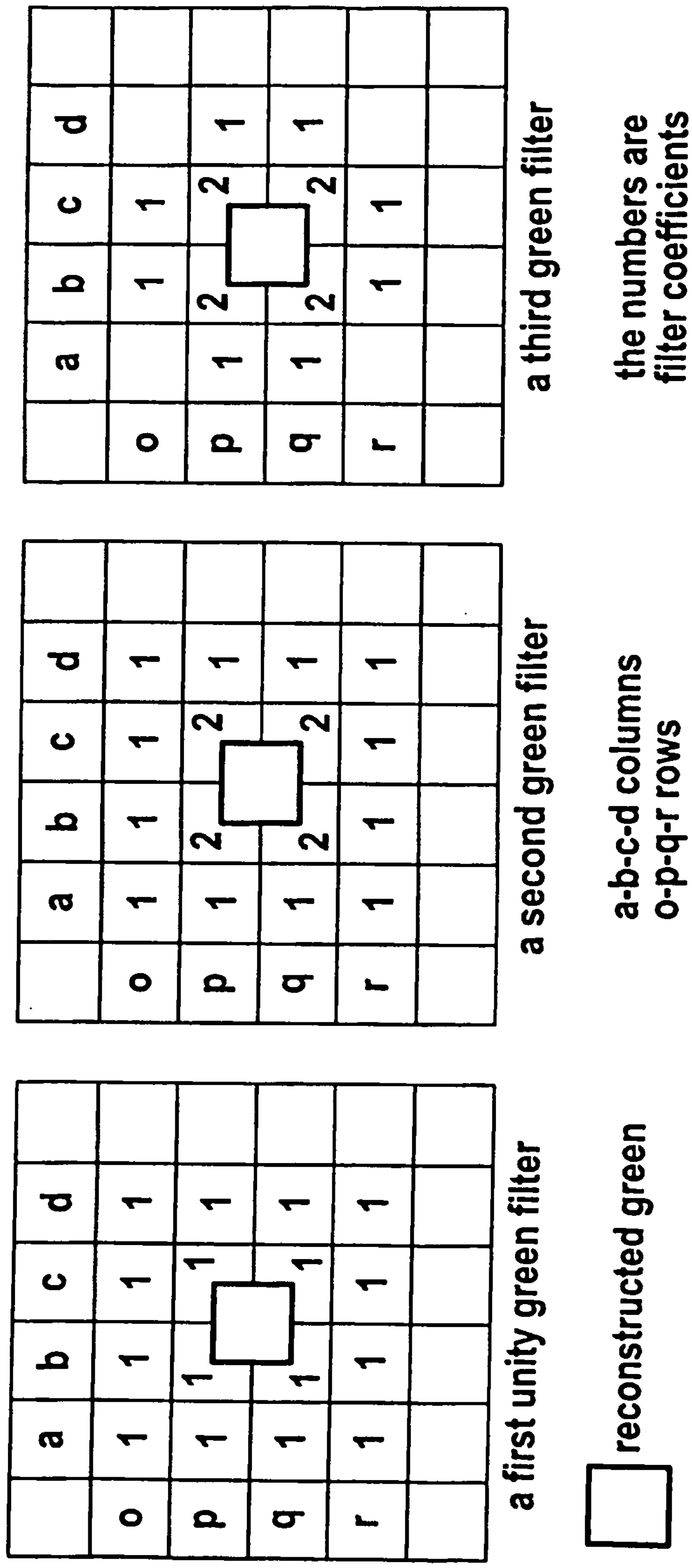
a b c d
o
p
q
r
1
2
a first unity green filter
a second green filter
a third green filter
reconstructed green
a-b-c-d columns
o-p-q-r rows
the numbers are
filter coefficients

Fig. 45

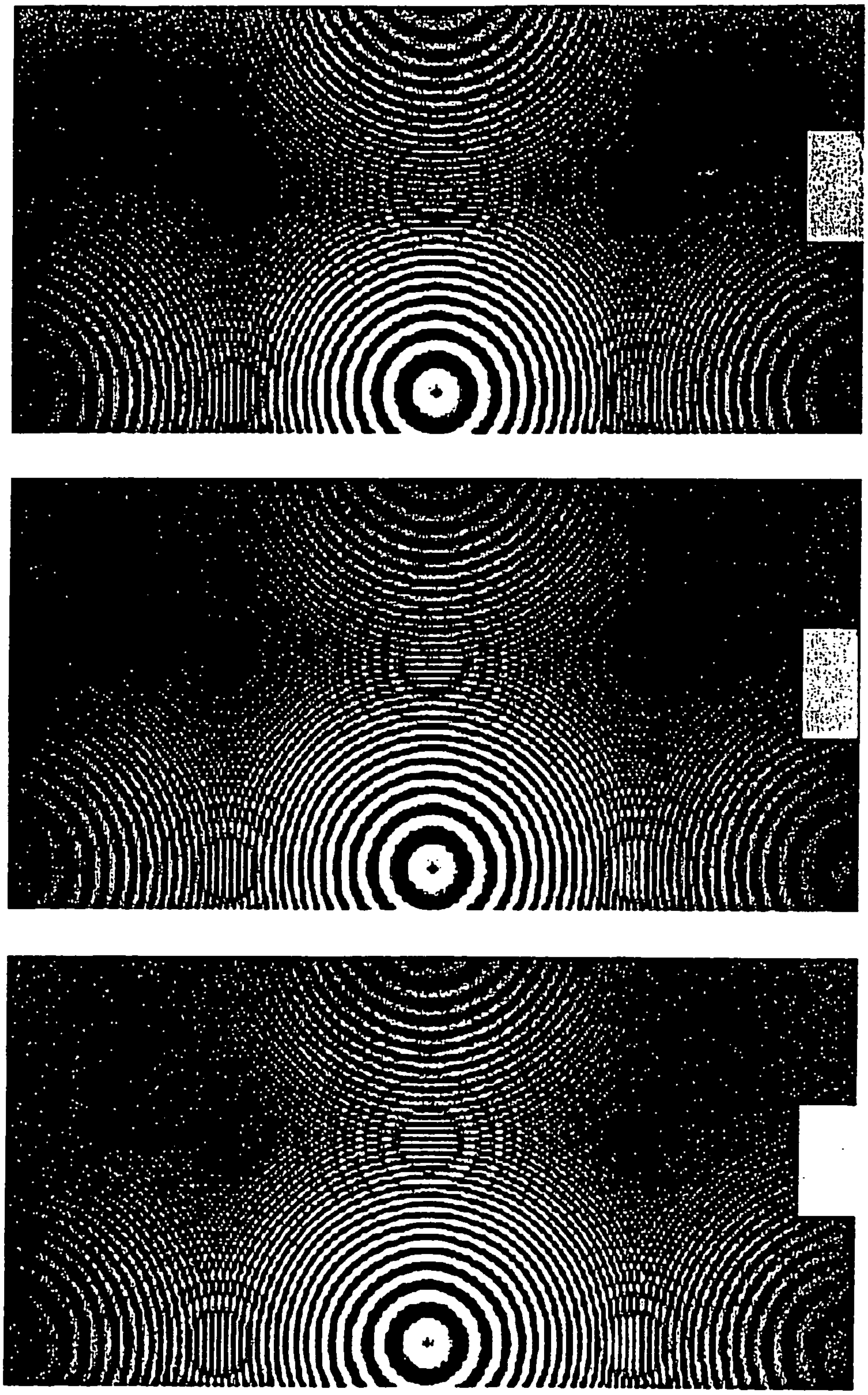

Fig. 46

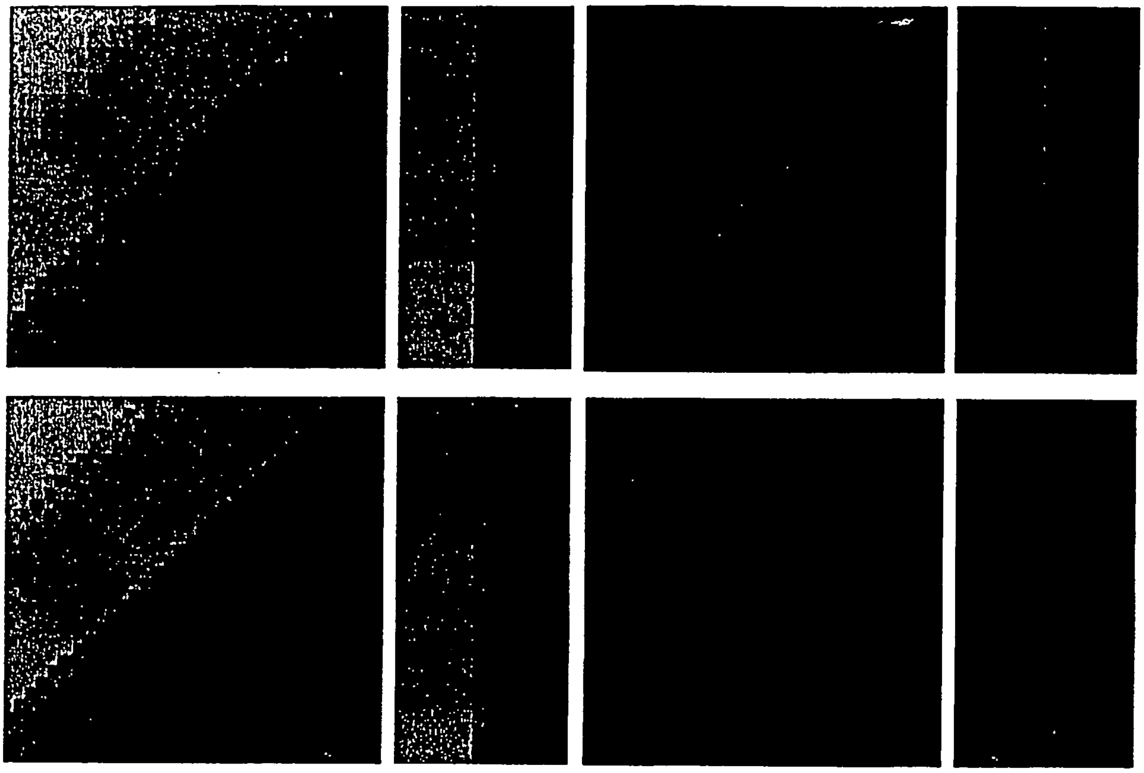

Fig. 47

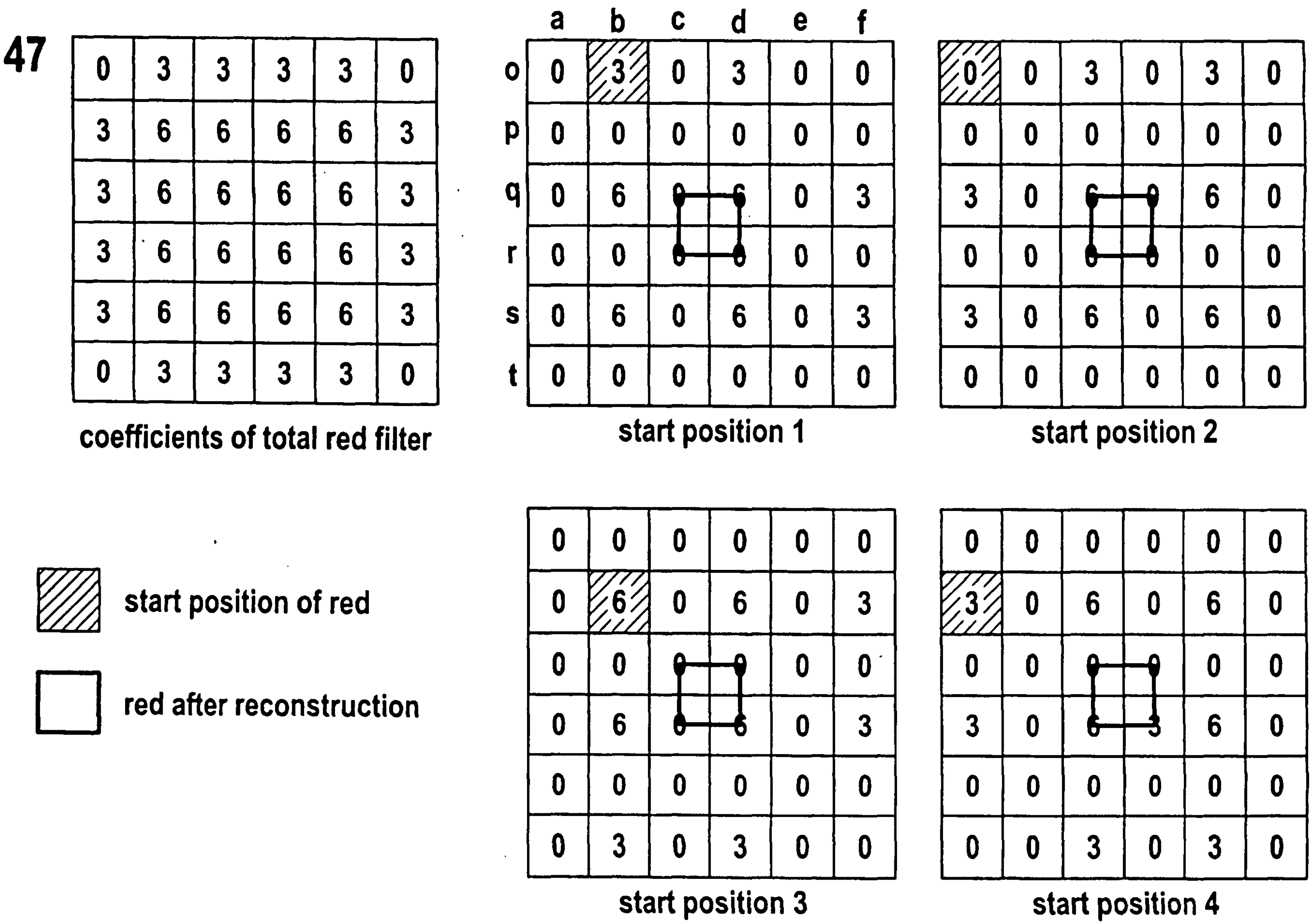
coefficients of total red filter
a
b
c
d
e
f
o
p
q
r
s
t
start position 1
start position 2
start position 3
start position 4
start position of red
red after reconstruction

Fig. 48

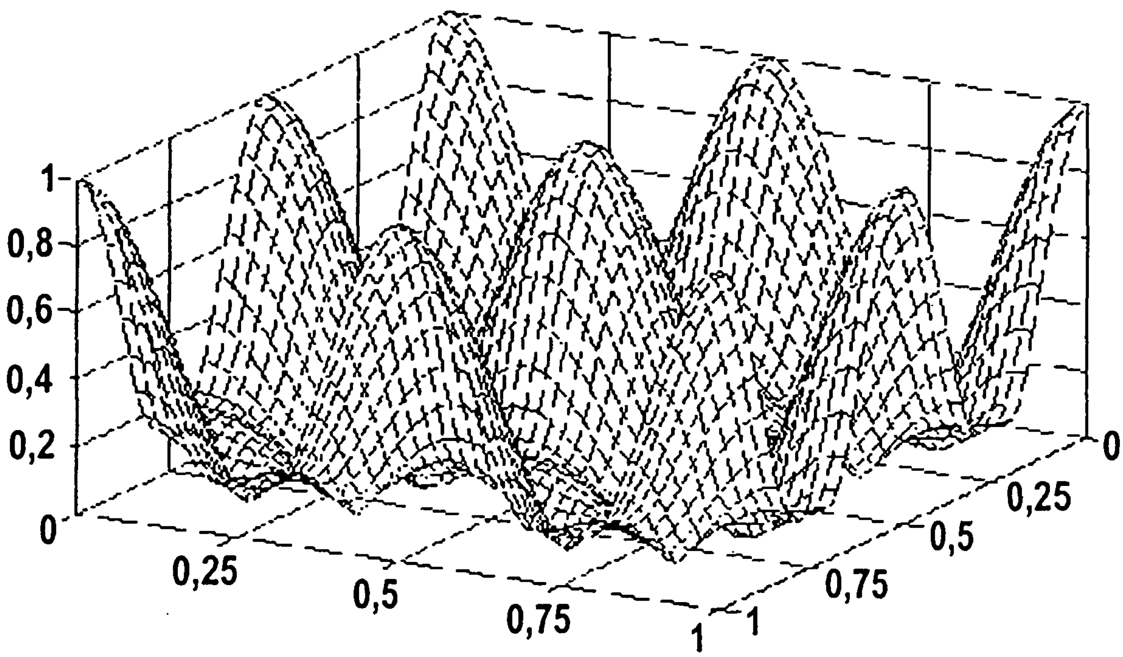


Fig. 49

| | | | | | |
|---|---|---|---|---|---|
| 1 | 1 | 2 | 2 | 1 | 1 |
| 1 | 1 | 2 | 2 | 1 | 1 |
| 2 | 2 | 4 | 4 | 2 | 2 |
| 2 | 2 | 4 | 4 | 2 | 2 |
| 1 | 1 | 2 | 2 | 1 | 1 |
| 1 | 1 | 2 | 2 | 1 | 1 |

Fig. 50

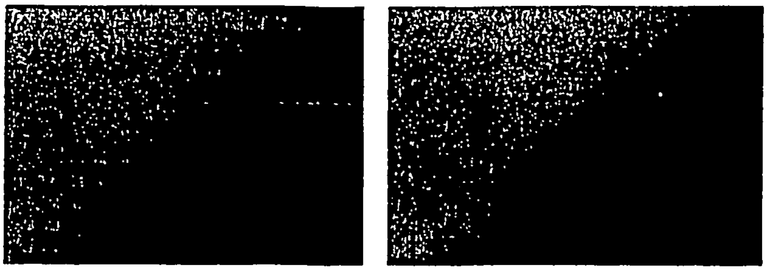

Fig. 51

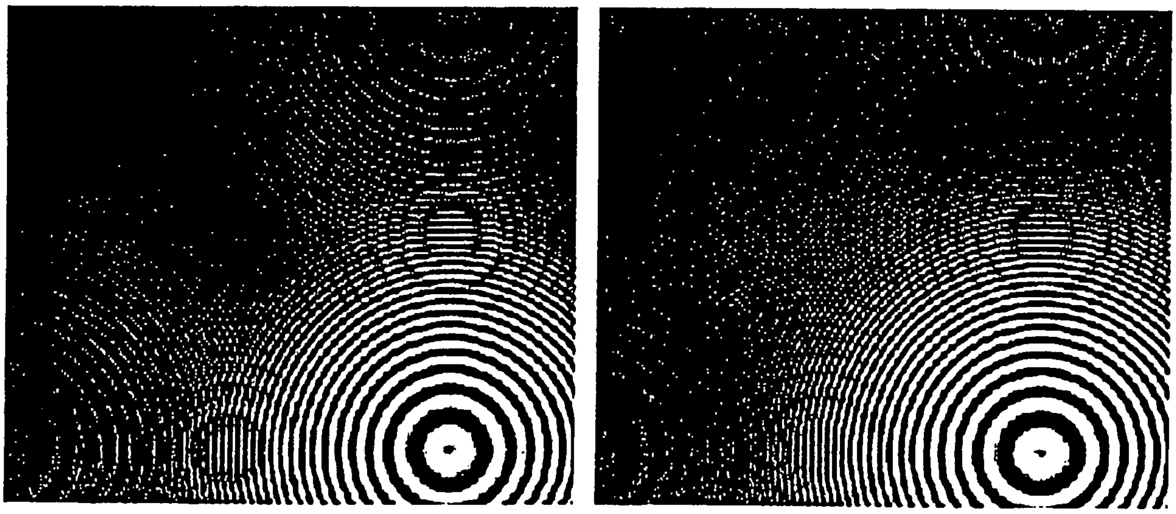

Fig. 52

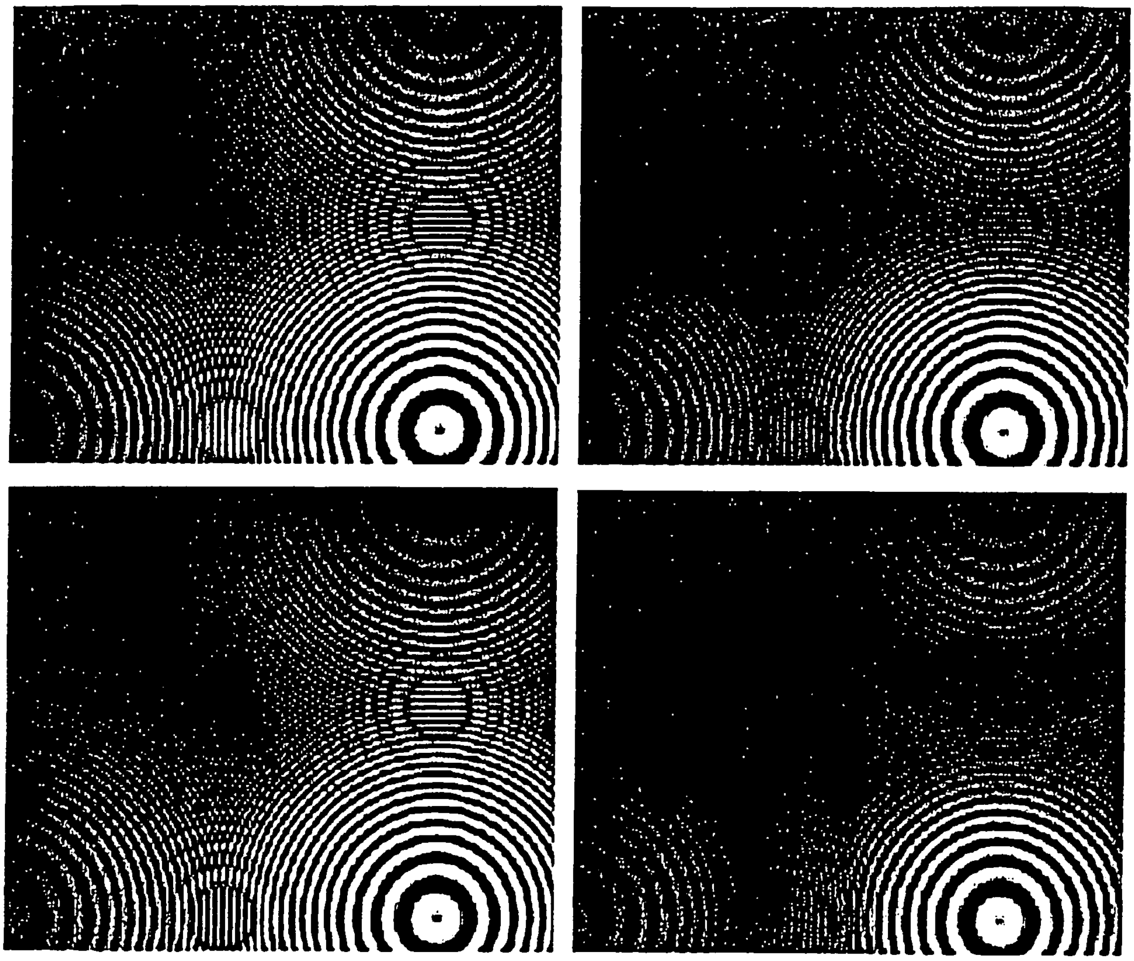

Fig. 53

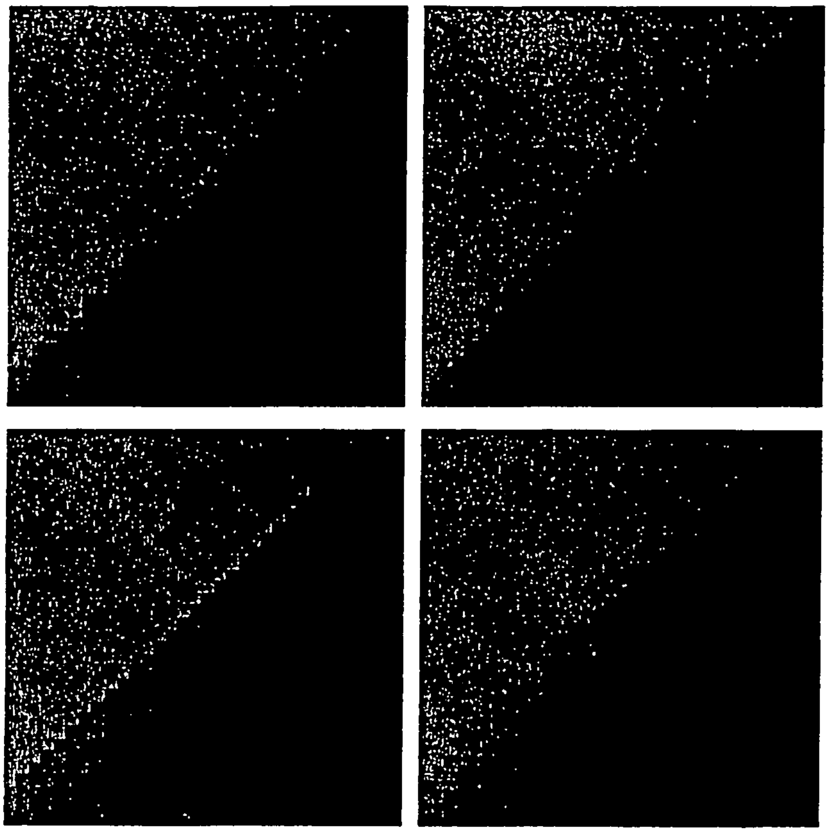

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2002003578 A
- WO 9904555 A
- WO 02063888 A
- WO 200406665 A
- EP 01200422 A
- WO 200406565 A
- WO 200406183 A
- WO 2004006182 A